(19)

**Europäisches Patentamt**
**European Patent Office**
**Office européen des brevets**

(11) **EP 4 507 240 A1**

(12) **EUROPEAN PATENT APPLICATION**

(43) Date of publication:
**12.02.2025 Bulletin 2025/07**

(21) Application number: **24193505.5**

(22) Date of filing: **08.08.2024**

(51) International Patent Classification (IPC):
**H04L 5/00** *(2006.01)* **H04W 72/23** *(2023.01)*

(52) Cooperative Patent Classification (CPC):
**H04L 5/0053; H04L 5/0094; H04W 72/23**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 US 202363531393 P**

(71) Applicant: **Comcast Cable Communications LLC Philadelphia, Pennsylvania 19103 (US)**

(72) Inventors:
- **CIRIK, Ali Cagatay Philadelphia, PA, 19103 (US)**
- **DINAN, Esmael Hejazi Philadelphia, PA, 19103 (US)**

(74) Representative: **V.O. P.O. Box 87930 2508 DH Den Haag (NL)**

(54) **BEAM MANAGEMENT IN RELAYS**

(57) A wireless device may receive one or more configuration parameters from a base station for a reception via more than one resource. The configuration parameters may instruct the wireless device to use at least two resources (e.g., unified transmission configuration indicator states) for the reception The wireless device may use one of the at least two resources, for example, if the wireless device is informed of the reception being broadcast or multicast data A network controlled repeater between a wireless device and a base station may use one of at least two resources for a transmission or reception on a backhaul link, for example, if a control link uses the at least two resources (e.g., unified transmission configuration indicator states).

**FIG. 21A**

EP 4 507 240 A1

**Description**

CROSS-REFERENCE TO RELATED APPLICATIONS

This application claims the benefit of U.S. Provisional Application No. 63/531,393 filed on August 8, 2023. The above-referenced application is hereby incorporated by reference in its entirety.

BACKGROUND

A wireless device communicates with a base station. The wireless device receives configuration parameters for communicating via a cell. A transmission configuration indicator state parameter is used to indicate resources for a transmission.

SUMMARY

The following summary presents a simplified summary of certain features. The summary is not an extensive overview and is not intended to identify key or critical elements.

A wireless device may receive one or more parameters from a base station to configure wireless communications. A configuration parameter may indicate a value associated with using at least two resources (e.g., unified transmission configuration indicator states), for a reception (e.g., a physical downlink shared channel reception). A wireless device may use one of the at least two resources, for example, if the wireless device is informed of the reception being broadcast or multicast data. Additionally or alternatively, a network controlled repeater between a wireless device and a base station may use one of at least two resources for a transmission or reception on one link (e.g., backhaul link), for example, if another link (e.g., control link) uses the at least two resources (e.g., unified transmission configuration indicator states). Improvements such as higher data rate and/or reduced delay may be achieved, for example, by allocating resources for downlink reception as described herein.

These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17 shows an example of relaying.

FIG. 18 shows an example of relaying.

FIG. 19 shows an example of relaying.

FIG. 20 shows an example method of relaying.

FIG. 21A shows an example method of downlink reception.

FIG. 21B shows an example method of downlink transmission.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

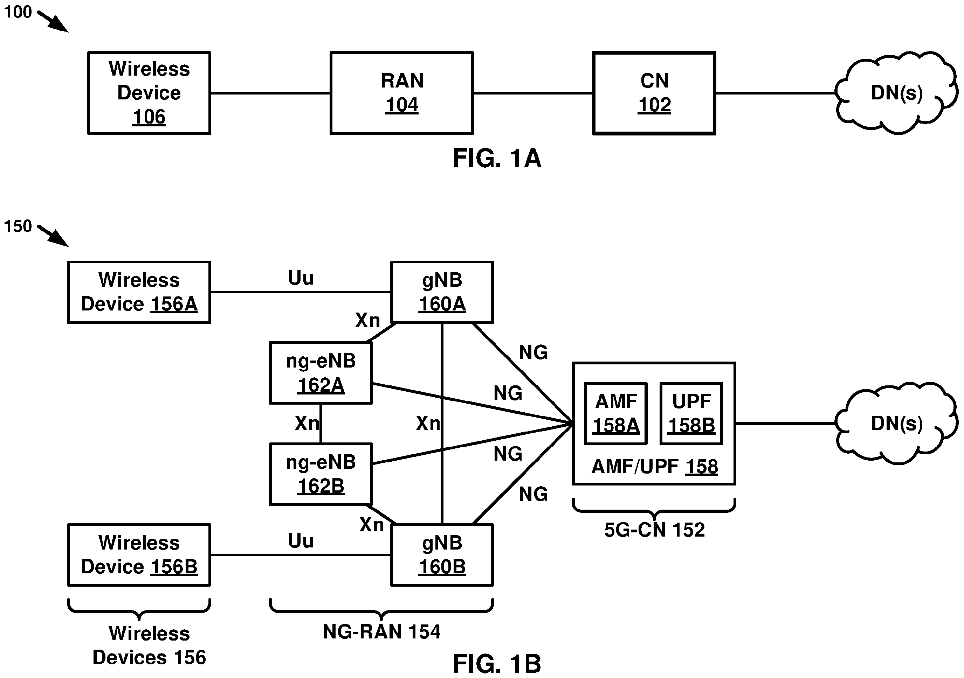

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMFIUPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

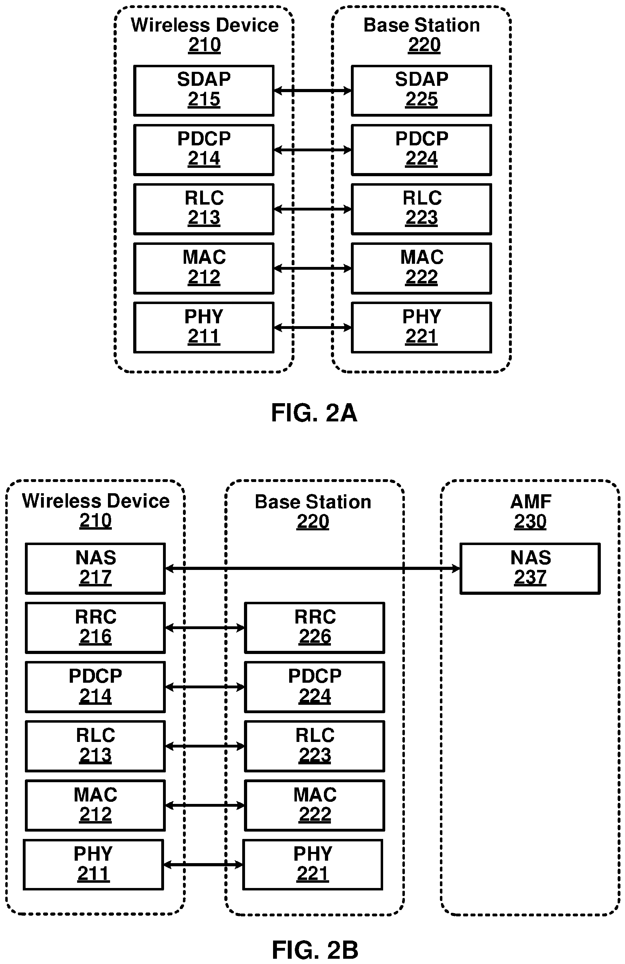

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

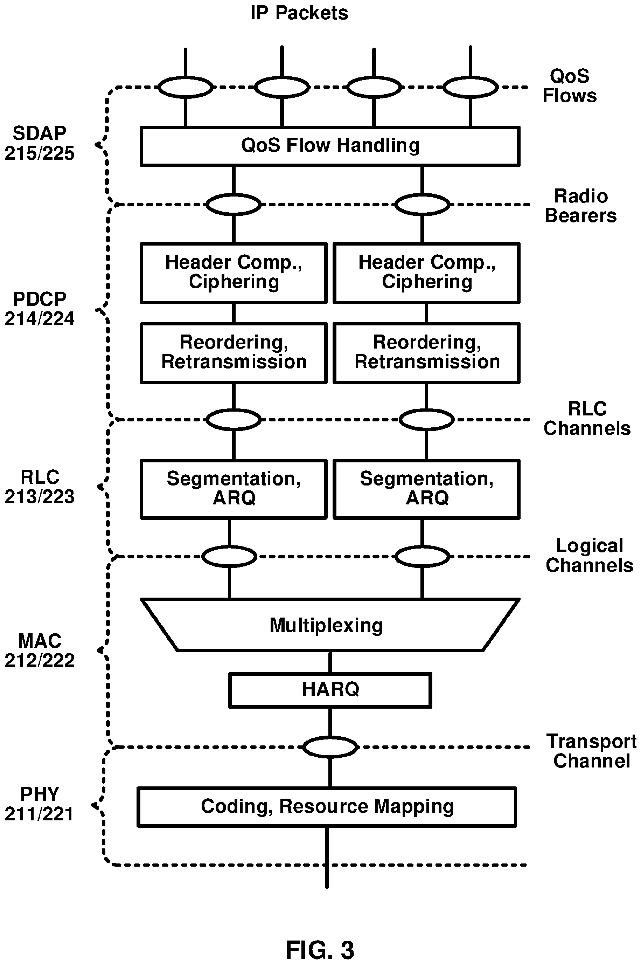

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

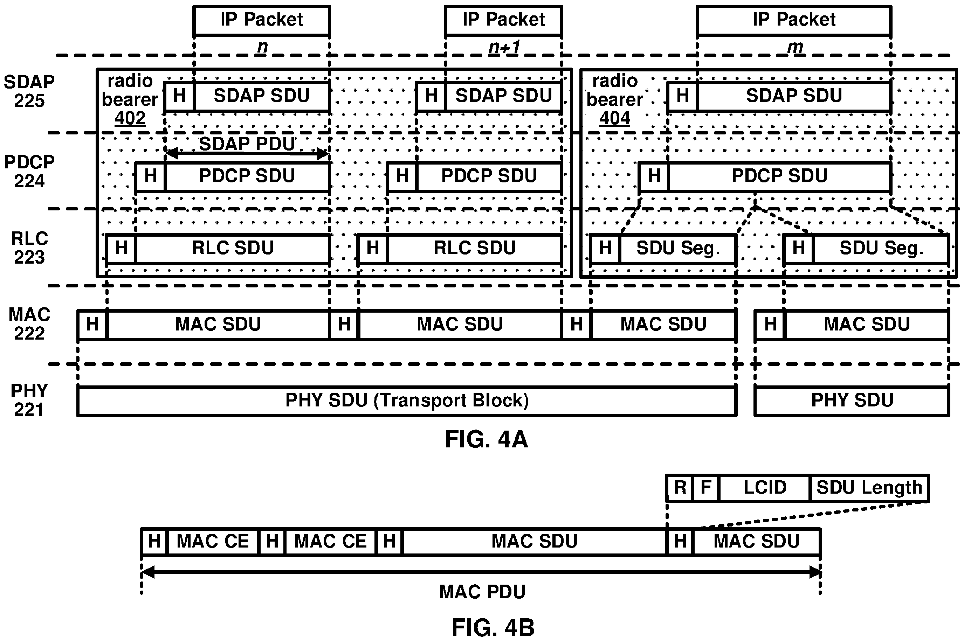

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

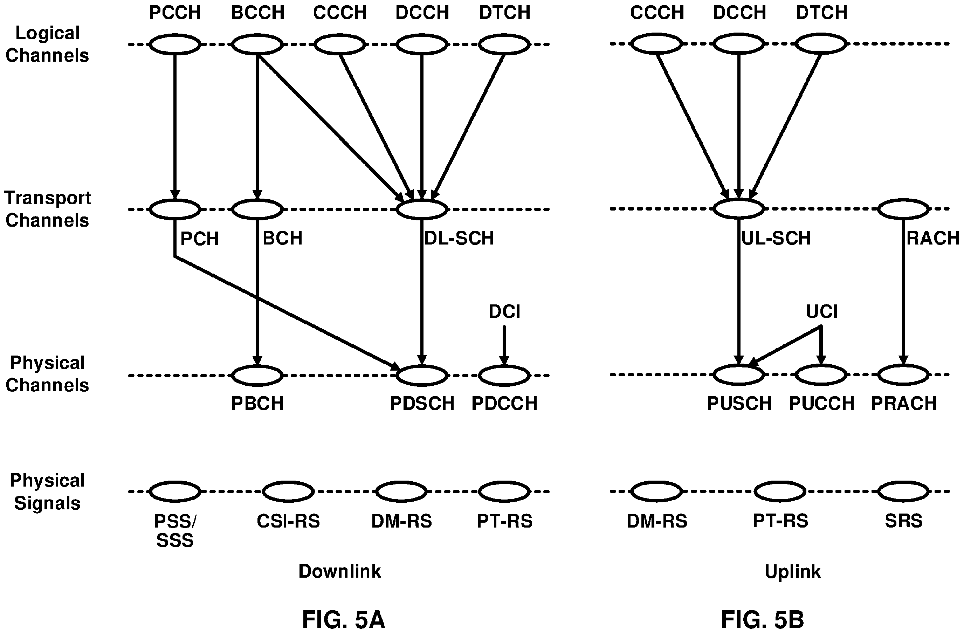

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

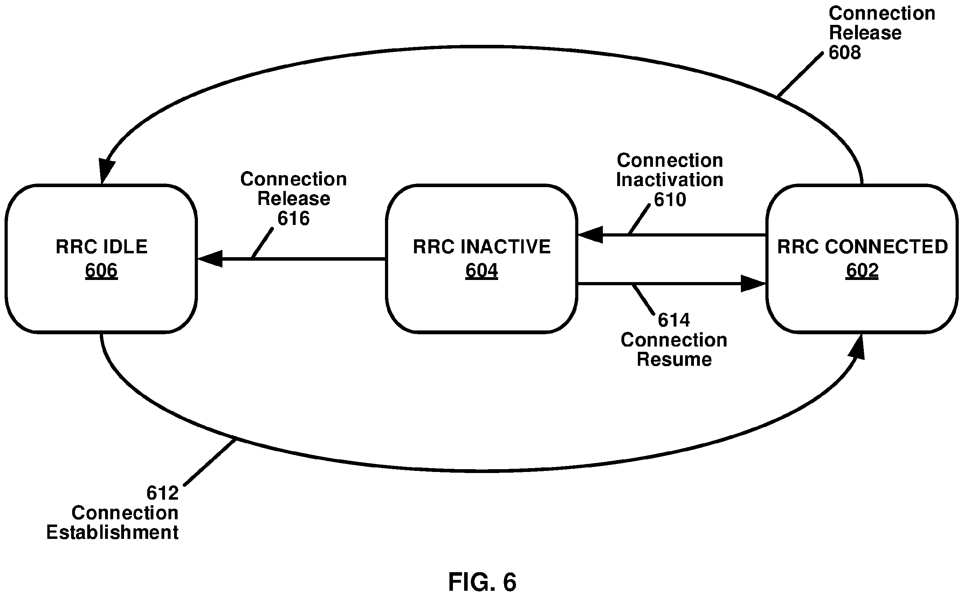

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

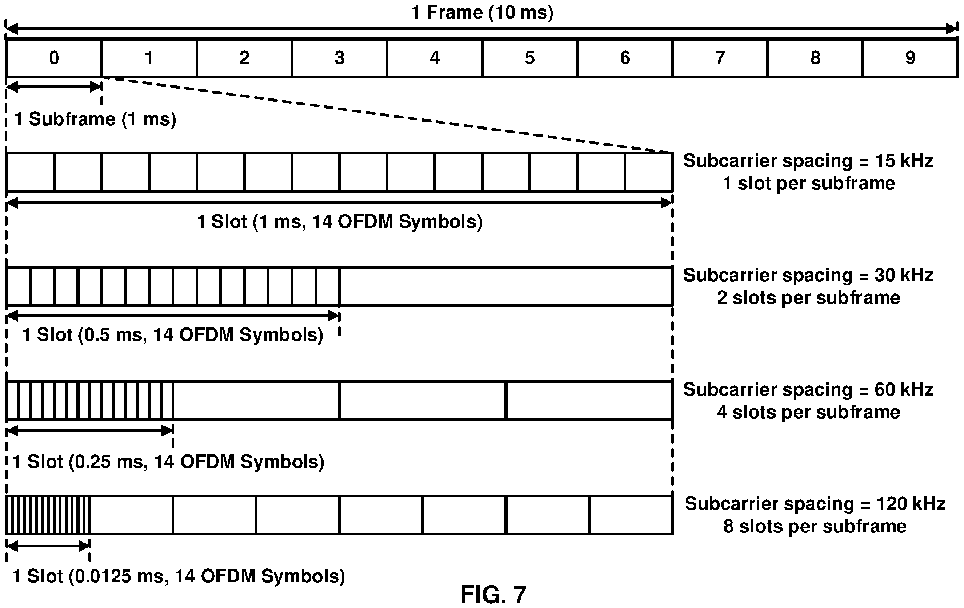

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

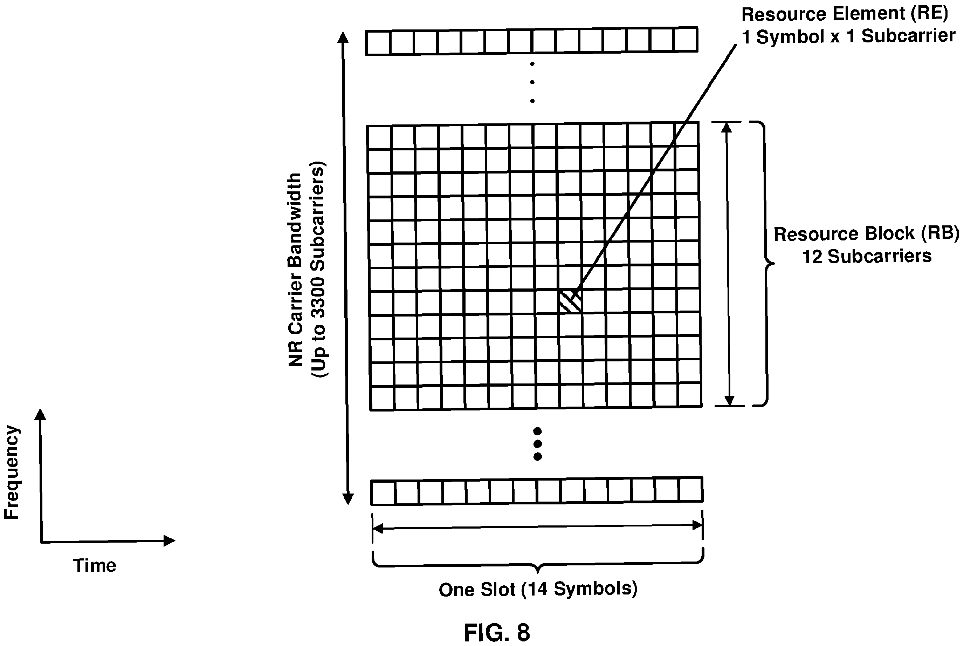

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or $275 \times 12 = 3300$ subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

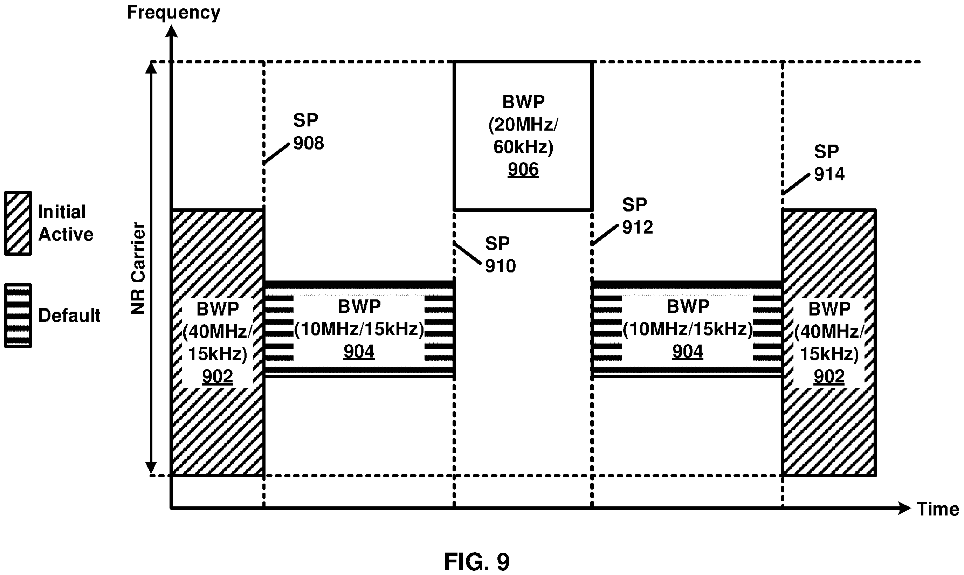

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

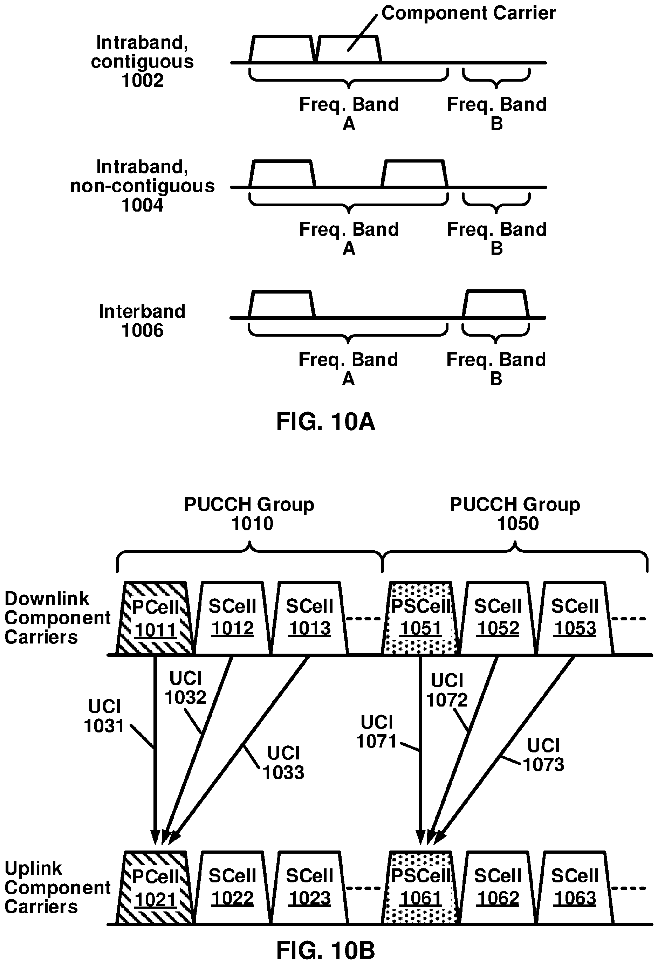

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

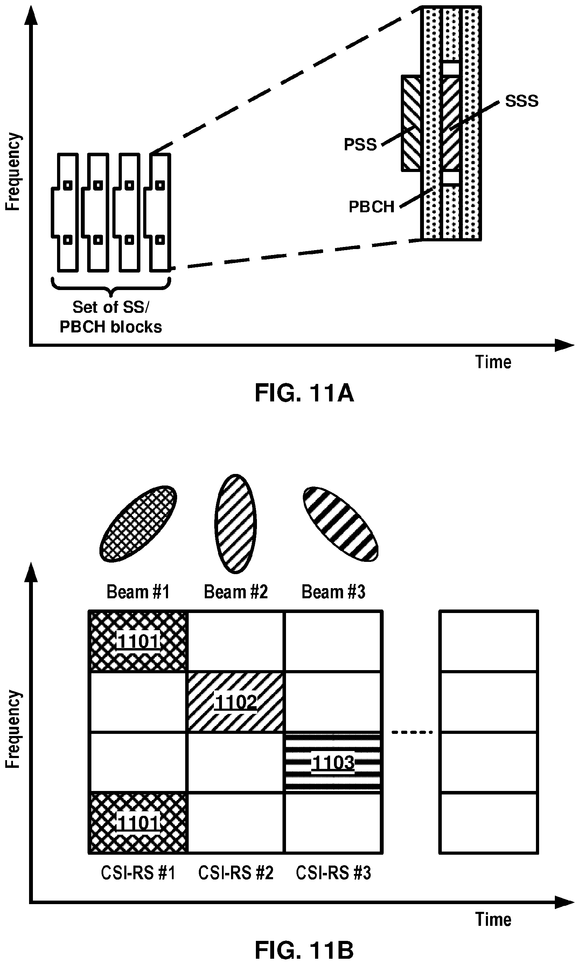

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1 The wireless device may be pointed to a frequency, for example, based on the PBCH indicating the absence of SIB 1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid),* and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

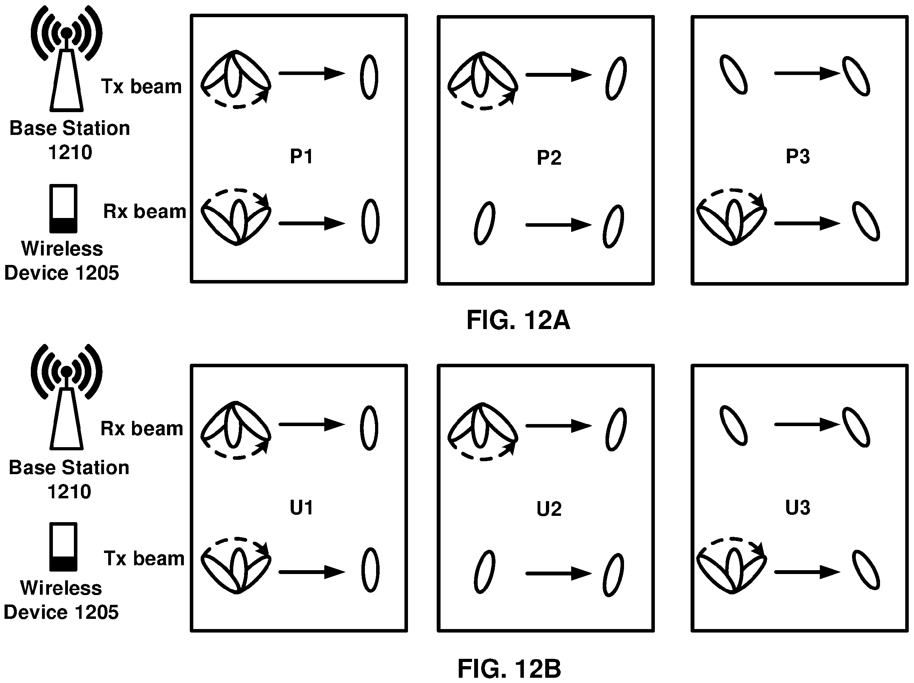

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station (e.g., base station 1210) and the Rx beams of a wireless device (e.g., wireless device 1205) are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station (e.g., base station 1210) to perform a measurement on Tx beams of a wireless device (e.g., wireless device 1205) (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

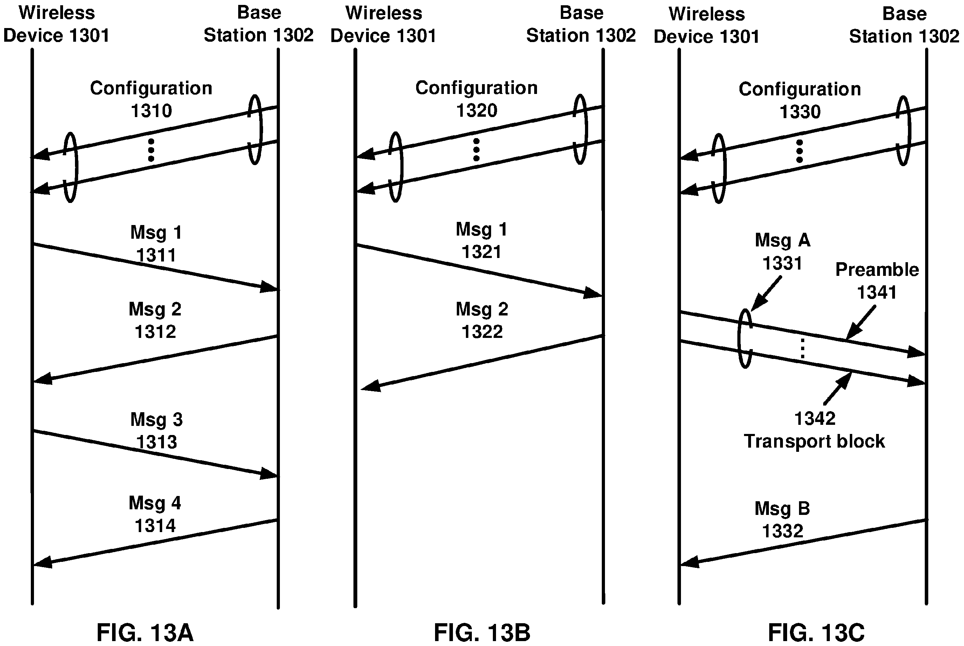

FIG. 13A shows an example four-step random access procedure. The four-step random access procedure may comprise a four-step contention-based random access procedure. A base station (e.g., base station 1302) may send/transmit a configuration message 1310 to a wireless device (e.g., wireless device 1301), for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-*configGeneral*); cell-specific parameters (e.g., RACH-*ConfigCommon*); and/or dedicated para-

meters (e.g., RACH-*configDedicated*). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e. g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., *ra-ssb-OccasionMskIndex* and/or *ra-OccasionList*) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., *PREAMBLE_TRANSMISSION_COUNTER*). The wireless device may determine that a random access procedure has been completed unsuccessfully, for example, if the quantity/number of preamble transmissions exceeds a threshold configured by the one or more RACH parameters (e.g., *preambleTransMax*) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., *ra-ResponseWindow*) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station (e.g., base station 1302) may, prior to initiation of the procedure, send/transmit a configuration message 1320 to the wireless device (e.g., wireless device 1301). The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., *ra-PreambleIndex*).

The wireless device may start a time window (e.g., *ra-ResponseWindow*) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., *recoverySearchSpaceId*). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SIrequest.

FIG. 13C shows an example two-step random access procedure. Similar to the random access procedures shown in FIGS. 13A and 13B, a base station (e.g., base station 1302) may, prior to initiation of the procedure, send/transmit a configuration message 1330 to the wireless device (e.g., wireless device 1301). The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

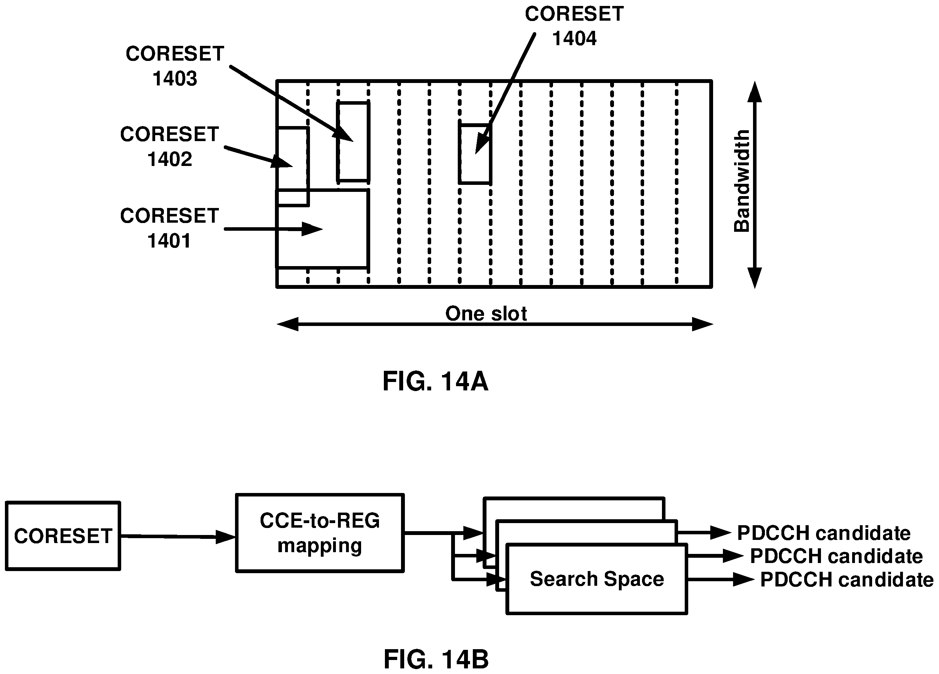

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

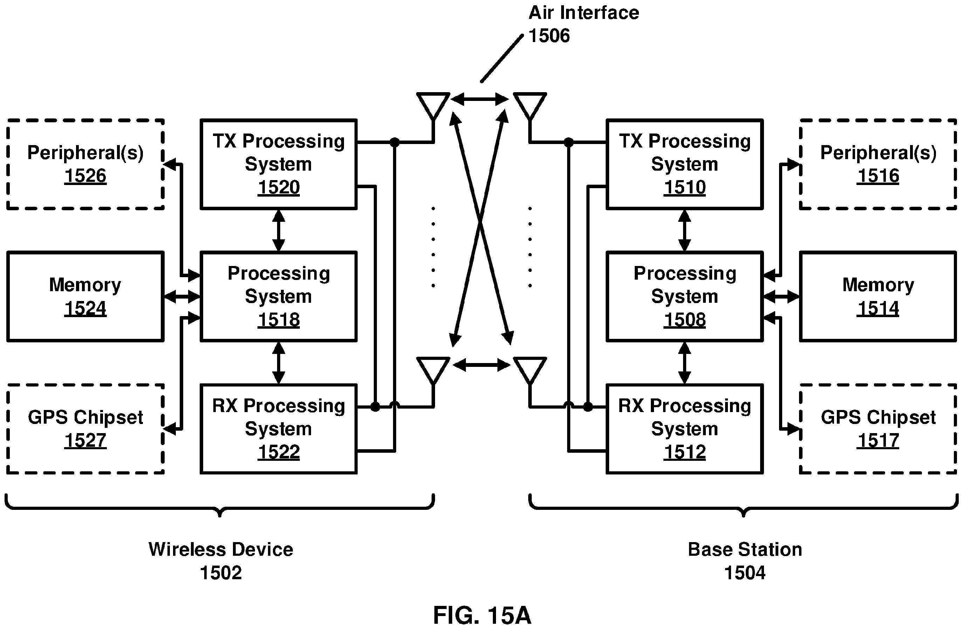

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/-transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

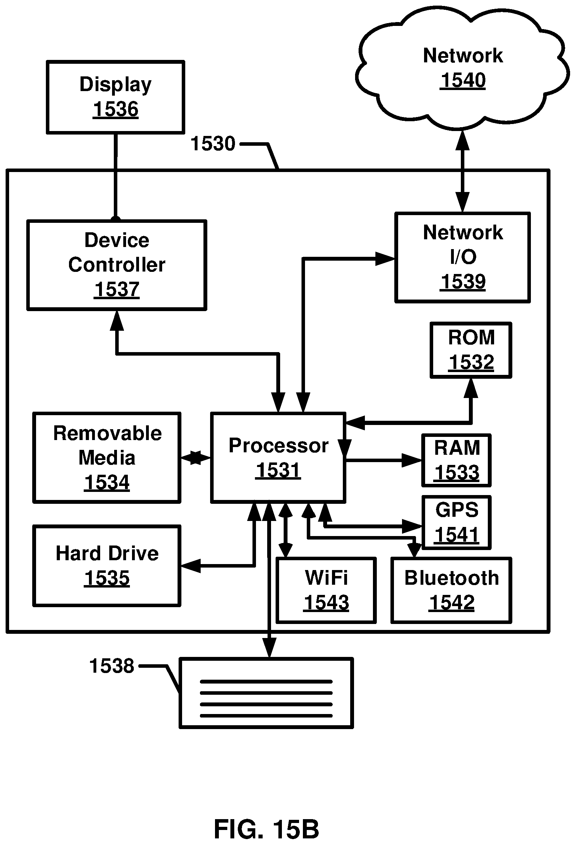

FIG. 15B shows example elements of a computing device that may be used to implement any of the various devices described herein, including, for example, the base station 160A, 160B, 162A, 162B, 220, 1210, 1302, 1710, and/or 1910, the wireless device 106, 156A, 156B, 210, 1205, 1301, and/or 1705, the NCR node 1720, 180, and/or 1905, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

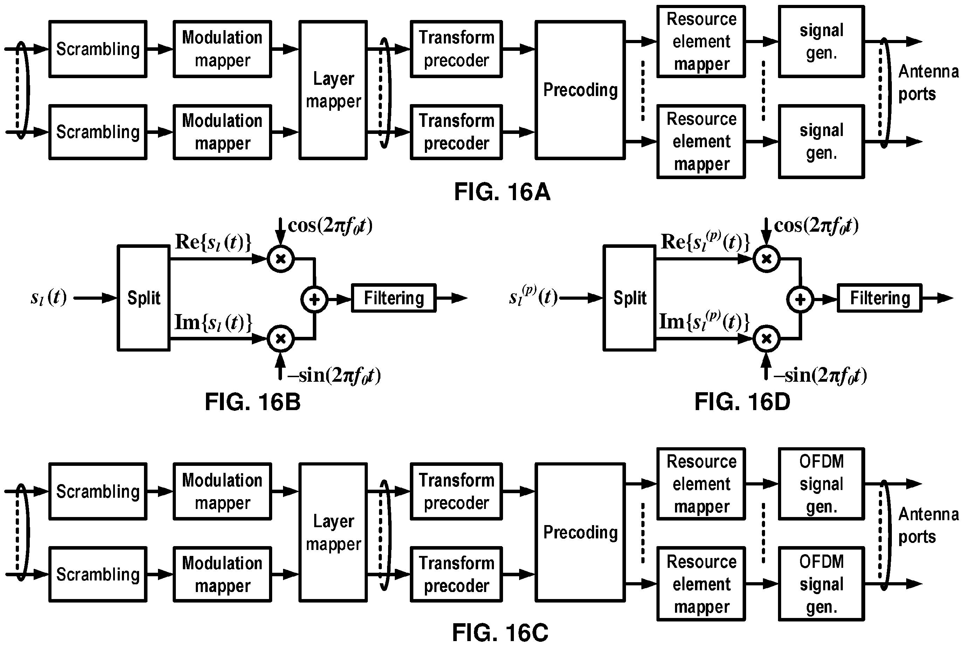

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after (e.g., as soon as) it is started and continue running until it is stopped or until it expires. A timer may be started, for example, if it is not running or restarted if it is running. A timer may be associated with a value (e.g., the timer may be started or restarted from a value or may be started from zero and expire after (e.g., as soon as) it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A network-controlled repeater (NCR) node may include an NCR-mobile termination (NCR-MT) that may use a control link and an NCR-forwarding (NCR-Fwd) that may use a backhaul link. In at least some wireless communications, a wireless device may receive, via a backhaul link, a reception. In at least some wireless communications, a wireless device may receive, via a backhaul link, a reception, for example, based on a TCI state (or QCL parameters) of a coreset with the lowest coreset index in the control link. The NCR node may determine, for receptions via the backhaul link, a spatial domain reception filter/beam. The NCR node may determine, for receptions via the backhaul link, a spatial domain reception filter/beam, for example, based on the TCI state (or QCL parameters) of the coreset with the lowest coreset index. The NCR node may determine, for receptions via the backhaul link, QCL parameters. The NCR node may determine, for receptions via the backhaul link, QCL parameters, for example, based on the TCI state (or QCL parameters) of the coreset with the lowest coreset index.

In at least some wireless communications, a wireless device may send (e.g., transmit), via a backhaul link, a transmission. A wireless device may send (e.g., transmit), via a backhaul link, a transmission, for example, based on a spatial relation of a PUCCH resource with the lowest PUCCH resource index in the control link. The NCR node may determine, for transmissions via the backhaul link, a spatial domain transmission (or transmitting/transmit) filter/beam. The NCR node may determine, for transmissions via the backhaul link, a spatial domain transmission filter/beam, for example, based on the spatial relation of the PUCCH resource with the lowest PUCCH resource index.

In at least some wireless communications, a wireless device may send (e.g., transmit), via a backhaul link, a transmission, for example, based on a TCI state indicated for the control link. The NCR node may determine, for transmissions via the backhaul link, a spatial domain transmission filter/beam, for example, based on the TCI state indicated for the control link.

In at least some wireless communications, a wireless device may use a default TCI state (e.g., TCI state of the coreset with the lowest coreset index) and/or a default spatial relation (e.g., spatial relation of the PUCCH resource with the lowest PUCCH resource index) of the NCR-MT control link for transmissions/receptions via the NCR-Fwd backhaul link, for example, until the wireless device receives a MAC-CE indicating a TCI state for transmissions/receptions via the NCR-Fwd backhaul link.

Using the TCI state and/or the spatial relation of the NCR-MT control link for transmissions/receptions via the NCR-Fwd backhaul link may work, for example, if the NCR-MT and the NCR-Fwd operate under the same transmission-and-reception point (TRP). Multiple transmission-and-reception points (TRPs) may serve the NCR-MT of the NCR node, and a single TRP may serve the NCR-Fwd. Multiple TRPs may serve the NCR-MT of the NCR nod, for example, to increase the reliability of the control link. For example, the multiple TRPs may comprise a first TRP and a second TRP. The default TCI state and/or the default spatial relation of the NCR-MT control link may have to be enhanced as the coreset with the lowest coreset index may be activated with two TCI states and the PUCCH resource with the lowest PUCCH resource index may be activated with two spatial relations. The NCR node might not know which TCI state of the two TCI states and/or spatial relation of the two spatial relations to apply/use in the NCR-Fwd backhaul link.

The coreset with the lowest coreset index may be associated with more than one TCI state. The coreset with the lowest coreset index may be associated with more than one TCI state, for example, if more than one (e.g., multiple) TRP serves the NCR-MT of the NCR node. The coreset with the lowest coreset index may be associated with two TCI states (e.g., a first TCI state for a first TRP and a second TCI state for a second TRP), for example, if multiple TRPs serve the NCR-MT of the NCR node. Using the two TCI states of the coreset with the lowest coreset index for receptions via the backhaul link may not be efficient, for example, if the backhaul link is served by a single TRP.

The PUCCH resource with the lowest PUCCH resource index may be associated with more than one spatial relation. The PUCCH resource with the lowest PUCCH resource index may be associated with more than one spatial relation, for example, if more than one (e.g., multiple) TRP serves the NCR-MT of the NCR node. The PUCCH resource with the lowest PUCCH resource index may be associated with two spatial relations (e.g., a first spatial relation for a first TRP and a second spatial relation for a second TRP), for example, if multiple TRPs serve the NCR-MT of the NCR node. Using the two spatial relations of the PUCCH resource with the lowest PUCCH resource index for transmissions via the backhaul link may not be efficient, for example, if the backhaul link is served by a single TRP.

More than one TCI state may be indicated for a control link. More than one TCI state may be indicated for a control link, for example, if more than one (e.g., multiple) TRP serves the NCR-MT of the NCR node. Ttwo TCI states may be indicated for the control link, for example, if multiple TRPs serve the NCR-MT of the NCR node. Using the two TCI states of the control link for transmissions via the backhaul link may not be efficient, for example, if the backhaul link is served by a single TRP. Misalignment between the NCR node and the base station on the sending (e.g., transmitting)/receiving beam used for transmissions/receptions via the backhaul link may lead to reduced data rate and increased delay.

Examples described herein may enhance determination of beams for a backhaul link. Examples described herein may enhance determination of beams for a backhaul link, for example, if a control link is served by multiple TRPs. An NCR node may apply/use, for the backhaul receptions/transmissions, a default TCI state and/or a default spatial relation. An NCR node may apply/use, for the backhaul receptions/transmissions, a default TCI state and/or a default spatial relation, for example, if a coreset with the lowest coreset index and/or a PUCCH resource with the lowest PUCCH resource index and/or a control link is indicated/activated with at least two TCI states and/or two spatial relations. The default TCI state may be with the lowest TCI state index, and/or occur first in more than one TCI state, and/or occur in a lower octet in a control command or activation command. The default spatial relation may be with the lowest spatial relation index, and/or occur first in a spatial relation control command or activation command (e.g., MAC-CE), and/or occur in a lower octet in a control command or activation command. A wireless device may use a TCI state (e.g., a first TCI state), among more than one TCI state (e.g., two TCI states), with a lowest TCI state index, that may occur first in the more than one TCI state, and/or that may occur in a lower octet. The wireless device may use a first TCI state, among two TCI states, with a lowest TCI state index for receptions/transmissions via the backhaul link. The wireless device may use a first TCI state, among two TCI states, that occurs first in a set/vector/list of the two TCI states. The wireless device may use a first TCI state, among two TCI states, that occurs in a lower octet in an activation command indicating/activating the two TCI states. Examples described herein may reduce beam misalignment on the sending (e.g., transmitting)/receiving beam used for transmissions/receptions via the backhaul link. The reduction of beam misalignment may lead to increased data rate and reduced delay.

Two (or more) TCI states may be indicated to support multiple TRPs, for example, with a first unified TCI state for a first TRP and a second unified TCI state for a second TRP. A wireless device may receive DCI scheduling a PDSCH reception. The DCI may include a TCI selection field that indicates to apply the first unified TCI state only, or the second unified TCI state only, or both the first unified TCI state and the second unified TCI state to the PDSCH reception scheduled by the DCI. At least some DCI formats (e.g., fallback DCI formats such as DCI format 1_0) may not have this TCI selection field. The wireless device may not know which unified TCI state(s) to apply to a PDSCH reception scheduled by DCI format 1_0. An RRC parameter (e.g., *applyIndicatedTCIState*) may be configured to indicate to apply the first unified TCI state only, or the second unified TCI state only, or both the first unified TCI state and the second unified TCI state to a PDSCH reception scheduled by DCI format 1_0.

A wireless device may apply/use both the first unified TCI state and the second unified TCI state to/for the PDSCH reception. A wireless device may apply/use both the first unified TCI state and the second unified TCI state to/for the PDSCH reception, for example, if the wireless device receives a DCI format 1_0 scheduling a PDSCH reception and the RRC parameter (e.g., *applyIndicatedTCIState*) is set to 'both'. If this PDSCH reception is a broadcast/multicast data destined for a group of wireless devices, not all of these wireless devices may apply/use (or are capable of applying/using) two unified TCI states to/for the PDSCH reception. Those wireless devices may not receive the broadcast data (e.g., system information) which may be very important.

A wireless device may know if a scheduled PDSCH reception is broadcast/multicast data. A wireless device may know if a scheduled PDSCH reception is broadcast/multicast data, for example, based on the search space set that the wireless device receives the DCI format 1_0. The wireless device may know that scheduled data is a broadcast/multicast data, for example, if the search space set is associated with a coreset with index zero, and the search space set is Type-0 common search space (CSS) set, or Type-0A CSS set, or a Type-2 CSS set.

A wireless device may receive one or more messages comprising one or more configuration parameters. The one or more configuration parameters may comprise an RRC parameter (e.g., an apply-indicated-TCI-state parameter) for PDSCH receptions scheduled/activated by DCI format 1_0. The RRC parameter (e.g., the apply-indicated-TCI-state parameter) may be set, for example, to 'both' indicating to apply both of two indicated TCI states for PDSCH receptions scheduled/activated by DCI format 1_0.

The wireless device may receive an activation command (e.g., DCI, MAC-CE) indicating at least two TCI states (e.g., at least two joint/downlink TCI states). The wireless device may receive, via a search space set, a DCI format 1_0 scheduling a PDSCH reception.

In at least some wireless communications, the wireless device may receive the PDSCH reception. The wireless device may receive the PDSCH reception, for example, based on both the first TCI state and the second TCI state. The wireless device may receive the PDSCH reception based on both the first TCI state and the second TCI state, for example, based on (e.g., in response to) the search space set not being a Type 0/0A/2 CSS set of a coreset with index zero. The behavior of a wireless device may not be clear, for example, if a search space set is a Type 0/0A/2 CSS set of a coreset with index zero. The wireless device may not have information on which TCI state of the at least two TCI states to apply for the PDSCH reception. This may increase the error rate, reduce data rate, and increase latency.

Examples described herein may enhance PDSCH reception that is broadcast/multicast data scheduled by a DCI format 1_0 (e.g., on a common search space set (e.g., Type 0/0A/2 CSS set) associated with a coreset with index zero). A wireless device may apply/use only one of at least two (unified) TCI states to/for the PDSCH reception. A wireless device may apply/use only one of at least two unified TCI states to/for the PDSCH reception, for example, if the DCI format 1_0 is received in a common search space set (e.g., Type0/0A/2 CSS set) associated a coreset with index zero. Additionally or alternatively, a wireless device may apply/use only one of at least two unified TCI states to/for the PDSCH reception, for example, if a configuration parameter such as an RRC parameter (e.g., *applyIndicatedTCIState*) is set to indicate application of all of the at least two TCI states to the PDSCH reception (e.g., set to 'both'). Additionally or alternatively, a wireless device may apply/use only one of at least two unified TCI states to/for the PDSCH reception, for example, if the wireless device receives a DCI format 1_0 scheduling a PDSCH reception. A wireless device may use a TCI state (e.g., a first TCI state), among the at least two TCI states, with a lowest TCI state index, that occurs first in the at least two TCI states, and/or that occurs in a lower octet. For The wireless device may use a first TCI state, among the at least two TCI states, with a lowest TCI state index for the PDSCH reception. For The wireless device may use, for the PDSCH reception, a first TCI state, among the at least two TCI states, that occurs first in a set/vector/list of the at least two TCI states. The wireless device may use, for the PDSCH reception, a first TCI state, among the at least two TCI states, that occurs in a lower octet in a control command (e.g., MAC-CE) indicating/activating the at least two TCI states. Examples described herein may reduce the error rate, increase data rate, and reduce latency.

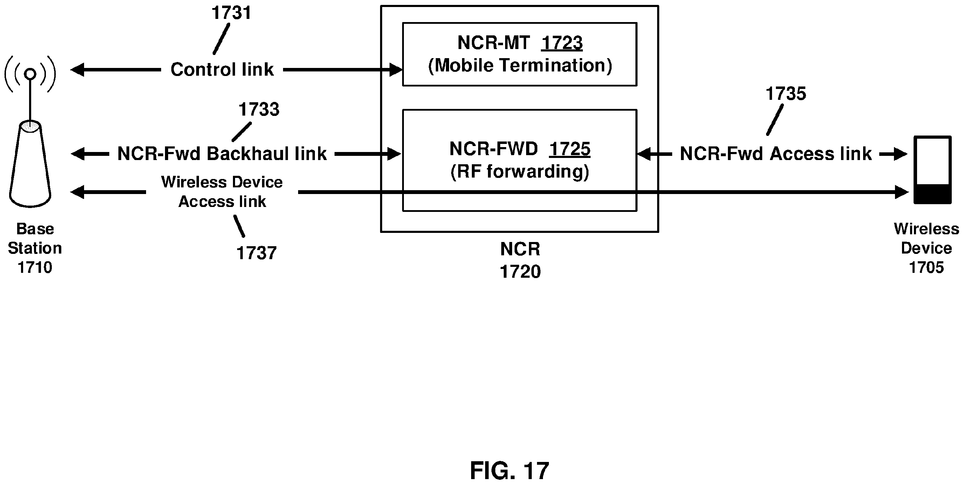

FIG. 17 shows an example of relaying. A Network-Controlled Repeater (NCR) node (e.g., NCR node 1720) may be an radio frequency (RF) repeater that may enable wireless amplifying-and-forwarding functionality in a Next Generation Radio Access Network (NG-RAN). The NCR node may be capable of receiving and applying/using side control information from a base station (e.g., gNB) (e.g., base station 1710) with additional functionality to support NCR.

The NCR node may comprise an NCR-MT (Mobile termination) (e.g., NCR-MT 1723) and NCR-Fwd (Forwarding) (e.g., NCR-FWD 1725). The NCR-MT may be an entity supporting a subset of functionalities of a wireless device (e.g., UE) (e.g., wireless device 1705) that communicates with the base station (e.g., base station 1710) to receive side control information via a control link (e.g., control link 1731), for example, based on an interface (e.g., NR Uu interface). The NCR-Fwd may be the function performing amplifying-and-forwarding of uplink and downlink signals between the base station and a wireless device via a backhaul link (e.g., an NCR-Fwd backhaul link 1733) and an access link (e.g., an NCR-Fwd access link 1735), respectively. The NCR-Fwd may support multiple beams towards the wireless device. The behavior of the NCR-Fwd may be controlled, for example, based on the side control information received by the NCR-MT from the base station.

RRC signaling may be utilized to configure the NCR-MT (e.g., NCR-MT 1723) to receive side control information. The side control information may be used by the NCR-Fwd to determine whether and how to amplify-and-forward RF signals. The NCR-Fwd may cease its amplifying-and-forwarding function, for example, if the side control information is removed.

The NCR-Fwd (e.g., NCR-FWD 1725) may send (e.g., transmit) and/or receive one or more beams. The NCR-Fwd may send (e.g., transmit) and/or receive one or more beams, for example, after the NCR-MT receives (e.g., via the control link) an indication for one or more beams for the NCR-Fwd to use for transmissions or receptions over corresponding one or more time resources on the access link (e.g., NCR-Fwd access link 1735).

The NCR-Fwd (e.g., NCR-FWD 1725) may amplify-and-forward RF signals. The NCR-Fwd may amplify-and-forward RF signals, for example, if the NCR-MT is in an RRC_CONNECTED state. The NCR-Fwd may amplify-and-forward RF signals, for example, based on the side control information received from the base station. The NCR-MT may not support radio resource management (RRM) measurements in the RRC_CONNECTED state.

The NCR-Fwd (e.g., NCR-FWD 1725) may continue to amplify-and-forward RF signals in accordance with the last side control information received from the base station (e.g., base station 1710). The NCR-Fwd may continue to amplify-and-forward RF signals in accordance with the last side control information received from the base station, for example, if the NCR-MT transitions from an RRC_CONNECTED state to an RRC_INACTIVE state. The NCR-Fwd may cease to amplify-and-forward RF signals. The NCR-Fwd may cease to amplify-and-forward RF signals, for example, if the NCR-MT is in an RRC_INACTIVE state. The NCR-Fwd may cease to amplify-and-forward RF signals, for example, if no suitable cell is detected, or if the NCR-MT selects a different cell than the last serving cell on which side control information was received.

An NCR-MT (e.g., NCR-MT 1723) may cease amplifying-and-forwarding RF signals. An NCR-MT in an RRC_INACTIVE state that determines degradation of the NCR-Fwd backhaul link beam may cease amplifying-and-forwarding RF signals, and may attempt to resume its RRC connection (with cause value 'mo-Signalling'). The criteria to evaluate backhaul beam degradation may be left to implementation. For example, some wireless device vendors may decide the conditions of backhaul degradation on its own (e.g., no 3GPP specification impact). For instance, the backhaul link quality may comprise a low threshold. A first wireless device may view a radio link quality as degraded, while a different wireless device may view the quality as good. The conditions may be determined based on how the wireless device is implemented.

The NCR-Fwd (e.g., NCR-FWD 1725) may cease any amplifying-and-forwarding of RF signals. The NCR-Fwd may cease any amplifying-and-forwarding of RF signals, for example, if the NCR-MT transitions from an RRC_CONNECTED state to an RRC_IDLE state. How to transition the NCR-MT back from the RRC_IDLE state to the RRC_CONNECTED state may be left to implementation, as described herein.

An NCR-MT (e.g., NCR-MT 1723) may detect a radio link failure (RLF) on the control link (e.g., control link 1731). The NCR-MT may perform an RRC re-establishment, for example, if the RLF is detected. The NCR-Fwd may cease to amplify-and-forward RF signals, for example, if the RRC re-establishment occurs.

The NCR-MT (e.g., NCR-MT 1723) may wait for the new side control information for the NCR-Fwd (e.g., NCR-FWD 1725) to resume the amplifying-and-forwarding of RF signals. The NCR-MT may wait for the new side control information for the NCR-Fwd to resume the amplifying-and-forwarding of RF signals, for example, after successfully performing the RRC re-establishment.

An NCR-MT (e.g., NCR-MT 1723) may perform beam failure detection (BFD) and beam failure recovery (BFR). The NCR-Fwd may cease amplifying-and-forwarding RF signals until a BFR of the control link is completed, for example, if the NCR-MT detects a beam failure in/on the control link. The NCR-Fwd may not send (e.g., transmit) or receive until a link recovery procedure is complete, for example, if the NCR-MT performs the link recovery procedure.

The NCR node (e.g., NCR node 1720) may be provided, through the NCR-MT (e.g., NCR-MT 1723), TDD configuration parameters. The NCR node may be provided, through the NCR-MT, for example, TDD UL/DL common configuration parameter (*tdd-UL-DL-ConfigurationCommon*) and, additionally, TDD UL/DL dedicated configuration parameter (*tdd-UL-DL-ConfigurationDedicated*). The NCR-Fwd (e.g., NCR-FWD 1725) may receive on the backhaul link (e.g., an NCR-Fwd backhaul link 1733) or may send (e.g., transmit) on the access link (e.g., NCR-Fwd access link 1735) in symbols indicated as downlink by the TDD UL/DL common configuration parameter (*tdd-UL-DL-ConfigurationCommon*) or the TDD UL/DL dedicated configuration parameter (*tdd-UL-DL-ConfigurationDedicated*). The NCR-Fwd may receive on the access link or may send (e.g., transmit) on the backhaul link in symbols indicated as uplink by the TDD UL/DL common configuration parameter (*tdd-UL-DL-ConfigurationCommon*) or the TDD UL/DL dedicated configuration parameter (*tdd-UL-DL-ConfigurationDedicated*).

The access link (e.g., NCR-Fwd access link 1735) may be a link between the NCR node (e.g., NCR node 1720) and the wireless device (e.g., wireless device 1705). This link is similar to the link (e.g., wireless device (e.g., UE) access link 1737) between the base station (e.g., base station 1710) and the wireless device (e.g., wireless device 1705). The access link may allow the wireless device to receive PDSCH, PDCCH, CSI-RS, and send (e.g., transmit) PUSCH, PUCCH, and SRS.

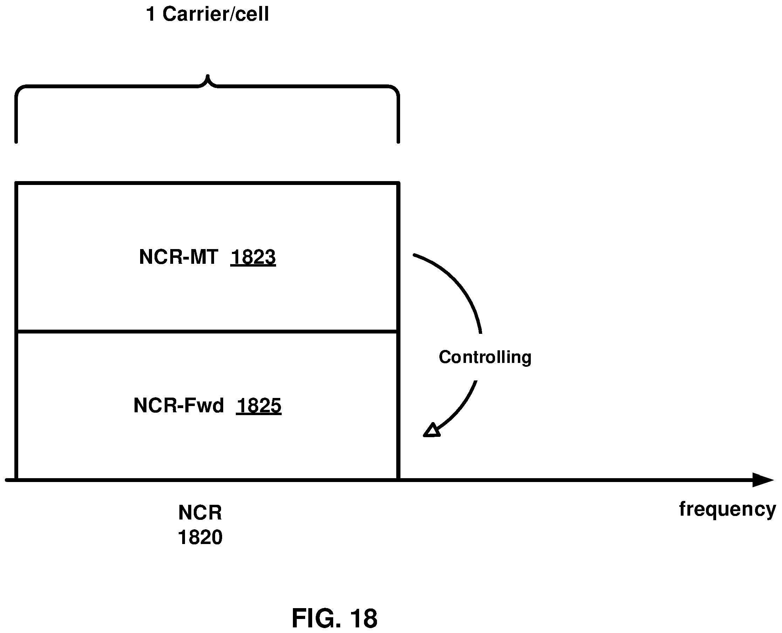

FIG. 18 shows an example of relaying. An NCR node (e.g., NCR node 1820) may include/comprise an NCR-MT (or an NCR-MT entity, e.g., NCR-MT 1823) and an NCR-Fwd (or an NCR-Fwd entity, e.g., NCR-Fwd 1825). The NCR-MT may control the NCR-Fwd.

In FIG. 18, the NCR-MT and the NCR-Fwd may operate in the same frequency band (or in the same carrier or in the same cell). The NCR node may be an in-band repeater. The NCR node may be an in-band repeater, for example, based on the NCR-MT and the NCR-Fwd operating in the same frequency band. As described herein and unless otherwise noted, statements using the term "wireless device" are equally applicable to an NCR node.

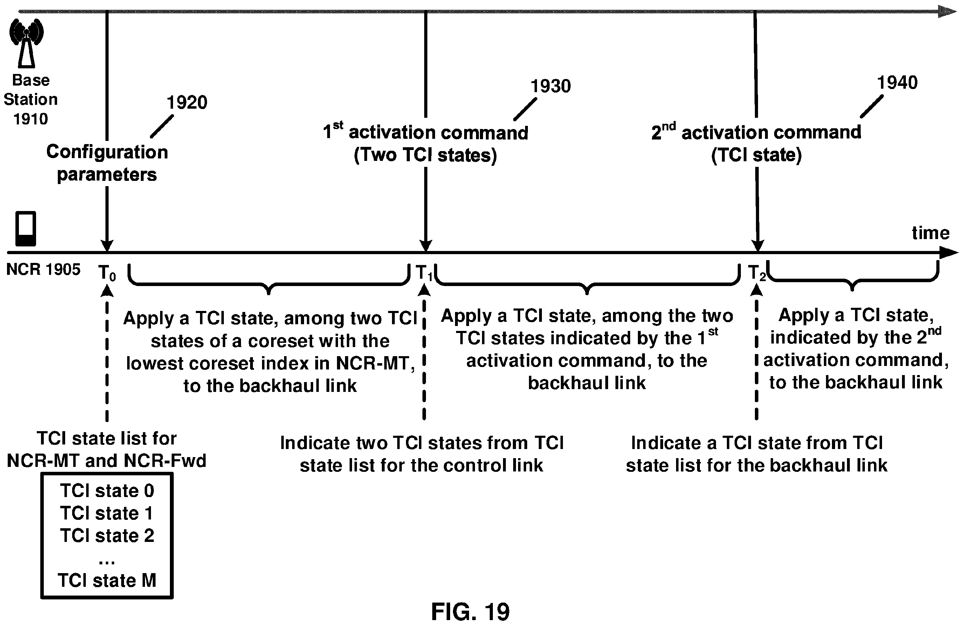

FIG. 19 shows an example of relaying. An NCR node (e.g., NCR node 1905) may receive one or more messages. The NCR node may receive the one or more messages, for example, from a base station (e.g., base station 1910). The base station may send (e.g., transmit) the one or more messages. The NCR node may receive the one or more messages, for example, from a relay node. The NCR node may receive the one or more messages, for example, from another wireless device (e.g., TRP, vehicle, remote radio head, and the like). The one or more messages may comprise one or more configuration parameters (e.g., configuration parameters 1920 at time T0 in FIG. 19).

The NCR node may comprise/include an NCR-MT and an NCR-Fwd. A link between the base station and the NCR-MT may be defined/denoted as or correspond to a control link (e.g., the control link 1731 in FIG. 17). A link between the base station and the NCR-Fwd may be defined/denoted as or correspond to a backhaul link (e.g., an NCR-Fwd backhaul link such as NCR-Fwd backhaul link 1737 in FIG. 17). A link between a wireless device and the NCR-Fwd may be defined/denoted as or correspond to an access link (e.g., an NCR-Fwd access link such as NCR-Fwd access link 1735 in FIG. 17).

The NCR node may receive one or more messages. The NCR node may receive one or more messages, for example, via the NCR-MT in/and the control link. The one or more configuration parameters may be, for example, one or more RRC configuration parameters. The one or more configuration parameters may be, for example, one or more RRC reconfiguration parameters (e.g., *RRCReconfiguration, reconfigurationWithSync*). The one or more messages may be, for example, one or more RRC messages. The one or more messages may be, for example, one or more RRC reconfiguration messages (e.g., *RRCReconfiguration, reconfigurationWithSync*).

The one or more configuration parameters may indicate a plurality of TCI states. The one or more configuration parameter may indicate a TCI state list (e.g., provided by a higher layer (e.g., RRC) parameter such as a higher layer parameter *dl-OrJoint-TCIStateList* or a higher layer parameter *ul-TCI-StateList)* comprising the plurality of TCI states.

The one or more configuration parameters may comprise one or more PDSCH configuration parameters (e.g., *PDSCH-Config*). The one or more PDSCH configuration parameters may indicate, for example, the plurality of TCI states. The one or more configuration parameters may comprise the one or more PDSCH configuration parameters, for example, for/of a downlink BWP of the control link. The one or more configuration parameters may indicate the plurality of TCI states for the downlink BWP of the control link. The downlink BWP may be, for example, an active downlink BWP.

The one or more configuration parameters may comprise one or more uplink BWP configuration parameters. The one or more uplink BWP configuration parameters may indicate, for example, the plurality of TCI states. The one or more configuration parameters may comprise the one or more uplink BWP configuration parameters, for example, for an uplink BWP in the control link. The one or more configuration parameters may indicate the plurality of TCI states for the uplink BWP in the control link. The uplink BWP may be, for example, an active uplink BWP.

The plurality of TCI states in the TCI state list may be, for example, TCI state 0, TCI state 1, TCI state 2, ..., and TCI state M, as shown in FIG. 19. The plurality of TCI states may be shared by the NCR-MT in/and the control link and the NCR-Fwd in the backhaul link. The plurality of TCI states may be shared by the NCR-MT in the control link and the NCR-Fwd in the backhaul link, for example, based on the NCR-MT and the NCR-Fwd operating in the same frequency band.

The one or more configuration parameters may indicate, for the plurality of TCI states, a plurality of TCI state indexes/identifiers/identities (e.g., *TCI-StateId*). The one or more configuration parameters may indicate, for each TCI state of the plurality of TCI states, a respective TCI state index of the plurality of TCI state indexes. Each TCI state of the plurality of TCI states may be indicated/identified by a respective TCI state index of the plurality of TCI state indexes. For example, the one or more configuration parameters may indicate, for a first TCI state of the plurality of TCI states, a first TCI state index of the plurality of TCI state indexes. The one or more configuration parameters may indicate, for a second TCI state of the plurality of TCI states, a second TCI state index of the plurality of TCI state indexes.

The one or more configuration parameters may indicate one or more control resource sets (coresets). The one or more configuration parameters may indicate the one or more coresets for the downlink BWP in the control link. The downlink BWP may comprise the one or more coresets.

The one or more configuration parameters may indicate, for the one or more coresets, one or more coreset indexes/identifiers/indicators (e.g., provided by a higher layer parameter *ControlResourceSetId*). Each coreset of the one or more coresets may be identified/indicated by a respective coreset index of the one or more coreset indexes. A first coreset of the one or more coresets may be identified, for example, by a first coreset index of the one or more coreset indexes. A second coreset of the one or more coresets may be identified, for example, by a second coreset index of the one or more coreset indexes.

The one or more coresets may comprise a coreset with a lowest coreset index among the one or more coreset indexes of the one or more coresets in the downlink BWP. A coreset index of the coreset may be lowest/smallest among the one or more coreset indexes of the one or more coresets. The one or more coreset indexes may comprise the coreset index of the coreset. The coreset with the lowest coreset index may be, for example, associated with at least two TCI states. The NCR node may receive an activation command (e.g., MAC-CE, DCI, TCI State Indication for UE-specific PDCCH MAC CE) indicating/activating the at least two TCI states for the coreset. The at least two TCI states may comprise a first TCI state and a second TCI state.

The one or more configuration parameters may indicate an SFN scheme for downlink control channels (e.g., *sfnSchemePdcch*). The NCR node may receive the activation command indicating/activating the at least two TCI states for the coreset. The NCR node may receive the activation command indicating/activating the at least two TCI states for the coreset, for example, based on the one or more configuration parameters indicating the SFN scheme for the downlink control channels. The NCR node may monitor, via the coreset and for DCI, downlink control channels based on the at least two TCI states. The NCR node may monitor, via the coreset and for DCI, downlink control channels based on the at least two TCI states, for example, based on (e.g., in response to) the one or more configuration parameters indicating the SFN scheme for the downlink control channels (e.g., *sfnSchemePdcch*). The NCR node may receive, via the coreset, the DCI based on the at least two TCI states. The NCR node may receive, via the coreset, the DCI based on the at least two TCI states, for example, based on (e.g., in response to) the one or more configuration parameters indicating the SFN scheme for the downlink control channels (e.g., *sfnSchemePdcch*).

The plurality of TCI state indexes may comprise a first TCI state index of the first TCI state. The first TCI state index may indicate/identify the first TCI state. The plurality of TCI state indexes may comprise a second TCI state index of the second TCI state. The second TCI state index may indicate/identify the second TCI state. The first TCI state index may be lower/smaller than the second TCI state index.

The activation command indicating activation of the at least two TCI states for the coreset may comprise a plurality of fields. A first field of the plurality of fields may indicate the first TCI state. The first field may comprise the first TCI state index indicating/identifying the first TCI state. The first field may occur/be (or be located), for example, in a first octet of the activation command. A second field of the plurality of fields may indicate the second TCI state. The second field may comprise the second TCI state index indicating/identifying the second TCI state. The second field may occur/be (or be located), for example, in a second octet of the activation command. The first octet may be lower/less/smaller than the second octet. For example, the first octet may be Octet 5, and the second octet may be Octet 6. For example, the first octet may be Octet 1, and the second octet may be Octet 2. For example, the first octet may be Octet 9, and the second octet may be Octet 10. The base station may order the first TCI state index and the second TCI state index, for example, according to (or based on) an ordinal position in the activation command. For example, Octet n of the activation command may comprise the first TCI state index identifying/indicating the first TCI state, and Octet m of the activation command may comprise the second TCI state index identifying/indicating the second TCI state, where n < m.

The activation command indicating activation of the at least two TCI states for the coreset may indicate/map/activate a list/set/vector of the at least two TCI states in/to/for a TCI codepoint of one or more TCI codepoints. The activation command may indicate mapping/association/activation of the list/set/vector of the at least two TCI states to/for the TCI codepoint. The first TCI state may occur first in the list/set/vector of the at least two TCI states. The first TCI state may be a first/starting/earliest/initial TCI state in the list/set/vector of the at least two TCI states. The second TCI state may occur second in the list/set/vector of the at least two TCI states. The second TCI state may be a last/latest/ending TCI state in the list/set/vector of the at least two TCI states. The first TCI state is TCI state 5 and the second TCI state is TCI state 8, example, if the list/set/vector of the at least two TCI states equals (=) [TCI state 5, TCI state 8], the first TCI state is TCI state 5 and the second TCI state is TCI state 8. The first TCI state is TCI state 26 and the second TCI state is TCI state 61, for example, if the list/set/vector of the at least two TCI states equals (=) [TCI state 26, TCI state 61].

The first TCI state may comprise/indicate a first reference signal (e.g., CSI-RS, SSB/PBCH block, DM-RS, SRS, and the like). The first TCI state may comprise/indicate a first quasi co-location type (e.g., QCL TypeA, QCL TypeB, QCL TypeC, QCL TypeD).

The second TCI state may comprise/indicate a second reference signal (e.g., CSI-RS, SSB/PBCH block, DM-RS, SRS, and the like). The second TCI state may comprise/indicate a second quasi co-location type (e.g., QCL TypeA, QCL TypeB, QCL TypeC, QCL TypeD).

The one or more configuration parameters may indicate one or more PUCCH resources (e.g., *PUCCH-Resource*). The one or more configuration parameters may indicate the one or more PUCCH resources for the uplink BWP of/in the control link. The uplink BWP may comprise the one or more PUCCH resources.

The one or more configuration parameters may indicate one or more PUCCH resource indexes/identifiers/indicators (e.g., provided by a higher layer parameter *PUCCH-ResourceId*) for the one or more PUCCH resources. A (e.g., each) PUCCH resource of the one or more PUCCH resources may be identified/indicated by a respective PUCCH resource index of the one or more PUCCH resource indexes. A first PUCCH resource of the one or more PUCCH resources may be identified, for example, by a first PUCCH resource index of the one or more PUCCH resource indexes. A second PUCCH resource of the one or more PUCCH resources may be identified, for example, by a second PUCCH resource index of the one or more PUCCH resource indexes.

The one or more PUCCH resources may comprise a PUCCH resource with a lowest PUCCH resource index among the one or more PUCCH resource indexes of the one or more PUCCH resources in the uplink BWP. A PUCCH resource index of the PUCCH resource may be lowest/smallest among the one or more PUCCH resource indexes of the one or more PUCCH resources. The one or more PUCCH resource indexes may comprise the PUCCH resource index of the PUCCH resource. The PUCCH resource with the lowest PUCCH resource index may be, for example, associated with at least two spatial relations. The NCR node may receive an activation command (e.g., MAC-CE, DCI, PUCCH Spatial Relation Activation/Deactivation for multiple TRP PUCCH repetition MAC CE) indicating/activating the at least two spatial relations for the PUCCH resource. The at least two spatial relations may comprise a first spatial relation and a second spatial relation.

The one or more configuration parameters may indicate, for the at least two spatial relations, spatial relation indexes/identifiers/identities (e.g., *PUCCH-SpatialRelationInfoId*). For example, the one or more configuration parameters may indicate, for the first spatial relation, a first spatial relation index/identifier/identity (e.g., *PUCCH-SpatialRelationInfoId*). The first spatial relation index/identifier may indicate/identify the first spatial relation. The one or more configuration parameters may indicate, for the second spatial relation, a second spatial relation index/identifier/identity (e.g., *PUCCH-SpatialRelationInfoId*). The second spatial relation index/identifier may indicate/identify the second spatial relation. The first spatial relation index/identifier/identity may be lower/smaller than the second spatial relation index/-identifier/identity.

The activation command indicating activation of the at least two spatial relations for the PUCCH resource may comprise a plurality of fields. A first field of the plurality of fields may indicate the first spatial relation. The first field may comprise the first spatial relation index indicating/identifying the first spatial relation. The first field may occur/be (or be located), for example, in a first octet of the activation command. A second field of the plurality of fields may indicate the second spatial relation. The second field may comprise the second spatial relation index indicating/identifying the second spatial relation. The second field may occur/be (or be located), for example, in a second octet of the activation command. The first octet may be lower/less/smaller than the second octet. For example, the first octet may be Octet 5, and the second octet may be Octet 6. For example, the first octet may be Octet 1, and the second octet may be Octet 2. For example, the first octet may be Octet 9, and the second octet may be Octet 10. The base station may order the first spatial relation index and the second spatial relation index, for example, according to (or based on) an ordinal position in the activation command. For example, Octet n of the activation command may comprise the first spatial relation index identifying/indicating the first spatial relation, and Octet m of the activation command may comprise the second spatial relation index identifying/indicating the second spatial relation, where n < m.

The activation command indicating activation of the at least two spatial relations may indicate/map/activate a list/set/vector of the at least two spatial relations for/to the PUCCH resource. The first spatial relation may occur first in the list/set/vector of the at least two spatial relations. The first spatial relation may be a first/starting/earliest/initial spatial relation in the list/set/vector of the at least two spatial relations. The second spatial relation may occur second in the list/set/vector of the at least two spatial relations. The second spatial relation may be a last/latest/ending spatial relation in the list/set/vector of the at least two spatial relations. The first spatial relation is Spatial relation 5 and the second spatial relation is Spatial relation 8, for example, if the list/set/vector of the at least two spatial relations equals (=) [Spatial relation 5, Spatial relation 8],. The first spatial relation is Spatial relation 26 and the second spatial relation is Spatial relation 61, for example, if the list/set/vector of the at least two spatial relations equals (=) [Spatial relation 26, Spatial relation 61].

The first spatial relation may comprise/indicate a first reference signal (e.g., CSI-RS, SSB/PBCH block, DM-RS, SRS, and the like). The second spatial relation may comprise/indicate a second reference signal (e.g., CSI-RS, SSB/PBCH block, DM-RS, SRS, and the like).

The one or more configuration parameters may indicate one or more SRS resources (e.g., *SRS-Resource*). The one or more configuration parameters may indicate the one or more SRS resources for the uplink BWP of/in the control link. The uplink BWP may comprise the one or more SRS resources.

The one or more configuration parameters may indicate one or more SRS resource indexes/identifiers/indicators (e.g., an SRS resource indicator (SRI), provided by a higher layer parameter *SRS-ResourceId*) for the one or more SRS resources. A (e.g., each) SRS resource of the one or more SRS resources may be identified/indicated by a respective SRS resource index of the one or more SRS resource indexes. A first SRS resource of the one or more SRS resources may be identified, for example, by a first SRS resource index of the one or more SRS resource indexes. A second SRS resource of the one or more SRS resources may be identified, for example, by a second SRS resource index of the one or more SRS resource indexes.

The NCR-MT may comprise a plurality of transmission and reception points (TRPs). The plurality of TRPs may serve the NCR-MT (or may serve the NCR-MT in/via/of the control link). The plurality of TRPs may comprise a first TRP and a second TRP.

In at least some instances, the NCR node may simultaneously receive via/on the control link and the backhaul link. The NCR node may simultaneously receive, in a time domain resource, on the control link and the backhaul link. The NCR node may simultaneously receive, in a set of symbols, via both the control link and the backhaul link. A first reception via the control link and a second reception via the backhaul link may overlap in a set of symbols (e.g., in at least one symbol). The first reception may be associated with at least two TCI states. The NCR node may receive an activation command (e.g., DCI, MAC-CE, RRC message, downlink control message, a control message, control command, and the like) indicating the at least two TCI states for the first reception via the control link. The at least two TCI states may comprise a first TCI state and a second TCI state.

A plurality of TCI state indexes may comprise a first TCI state index of the first TCI state. The first TCI state index may indicate/identify the first TCI state. The plurality of TCI state indexes may comprise a second TCI state index of the second TCI state. The second TCI state index may indicate/identify the second TCI state. The first TCI state index may be lower/smaller than the second TCI state index.

The activation command indicating the at least two TCI states for the first reception via the control link may comprise a plurality of fields. A first field of the plurality of fields may indicate the first TCI state. The first field may comprise the first TCI state index indicating/identifying the first TCI state. The first field may occur/be (or be located), for example, in a first octet of the activation command. A second field of the plurality of fields may indicate the second TCI state. The second field may comprise the second TCI state index indicating/identifying the second TCI state. The second field may occur/be (or be located), for example, in a second octet of the activation command. The first octet may be lower/less/smaller than the second octet. For example, the first octet may be Octet 5, and the second octet may be Octet 6. For example, the first octet may be Octet 1, and the second octet may be Octet 2. For example, the first octet may be Octet 9, and the second octet may be Octet 10. The base station may order the first TCI state index and the second TCI state index, for example, according to (or based on) an ordinal position in the activation command. Octet n of the activation command may comprise the first TCI state index identifying/indicating the first TCI state, and Octet m of the activation command may comprise the second TCI state index identifying/indicating the second TCI state, where n < m.

The activation command indicating the at least two TCI states for the first reception via the control link may indicate/map/activate a list/set/vector of the at least two TCI states in/to/for a TCI codepoint of one or more TCI codepoints. The activation command may indicate mapping/association/activation of the list/set/vector of the at least two TCI states to/for the TCI codepoint. The first TCI state may occur first in the list/set/vector of the at least two TCI states. The first TCI state may be a first/starting/earliest/initial TCI state in the list/set/vector of the at least two TCI states. The second TCI state may occur second in the list/set/vector of the at least two TCI states. The second TCI state may be a last/latest/ending TCI state in the list/set/vector of the at least two TCI states. the first TCI state is TCI state 5 and the second TCI state is TCI state 8, for example, if the list/set/vector of the at least two TCI states equals (=) [TCI state 5, TCI state 8]. The first TCI state is TCI state 26 and the second TCI state is TCI state 61. for example, if the list/set/vector of the at least two TCI states equals (=) [TCI state 26, TCI state 61].

The first TCI state may comprise/indicate a first reference signal (e.g., CSI-RS, SSB/PBCH block, DM-RS, SRS, and the like). The first TCI state may comprise/indicate a first quasi co-location type (e.g., QCL TypeA, QCL TypeB, QCL TypeC, QCL TypeD).

The second TCI state may comprise/indicate a second reference signal (e.g., CSI-RS, SSB/PBCH block, DM-RS, SRS, and the like). The second TCI state may comprise/indicate a second quasi co-location type (e.g., QCL TypeA, QCL TypeB, QCL TypeC, QCL TypeD).

The first reception may be various types of receptions. The first reception may be, for example, a PDSCH reception. The first reception may be, for example, a PDCCH reception. The first reception may be, for example, a CSI-RS reception.

The NCR node may receive the first reception. The NCR node may receive, via the control link, the first reception. The NCR node may receive, via the control link, the first reception, for example, based on the at least two TCI states. The NCR node may receive, via the control link and in the set of symbols, the first reception. The NCR node may receive, via the control link and in the set of symbols, the first reception, for example, based on the at least two TCI states.

At least one antenna port (e.g., DM-RS antenna port) of the first reception may be quasi co-located with a reference signal indicated by a TCI state of the at least two TCI states. The at least one antenna port (e.g., DM-RS antenna port) of the first reception may be quasi co-located with the reference signal with respect to a quasi co-location type indicated by the TCI state. For example, at least one first DM-RS antenna port of the first reception may be quasi co-located with the first reference signal indicated by the first TCI state of the at least two TCI states. The at least one first DM-RS antenna port of the first reception may be quasi co-located with the first reference signal with respect to the first quasi co-location type indicated by the first TCI state. At least one second DM-RS antenna port of the first reception may be quasi co-located with the second reference signal indicated by the second TCI state of the at least two TCI states. The at least one second DM-RS antenna port of the first reception may be quasi co-located with the second reference signal with respect to the second quasi co-location type indicated by the second TCI state. The at least one first DM-RS antenna port and the at least one second DM-RS antenna port may be, for example, different. The at least one first DM-RS antenna port and the at least one second DM-RS antenna port may be, for example, the same.

At least one antenna port (e.g., DM-RS antenna port) of the first reception may be quasi co-located with reference signals indicated by more than one TCI state of the at least two TCI states. For example, at least one DM-RS antenna port of the first reception may be quasi co-located with both the first reference signal indicated by the first TCI state of the at least two TCI states and the second reference signal indicated by the second TCI state of the at least two TCI states. Each DM-RS antenna port of the first reception may be quasi co-located with both the first reference signal indicated by the first TCI state of the at least two TCI states and the second reference signal indicated by the second TCI state of the at least two TCI states.

The NCR node may receive a second reception. The NCR node may receive, via the backhaul link, the second reception. The NCR node may receive, via the backhaul link, the second reception, for example, based on the first TCI state of the at least two TCI states. The NCR node may receive, via the backhaul link and in the set of symbols, the second reception. The NCR node may receive, via the backhaul link, the second reception, for example, based on the first TCI state of the at least two TCI states. A TCI state for the second reception via/on the backhaul link may be same as the first TCI state of the at least two TCI states for the first reception via/on the control link in the set of symbols. The NCR node may receive, via the backhaul link and in the set of symbols, the second reception based on the first TCI state, for example, based on (e.g., in response to) the first TCI state index of the first TCI state being lower/smaller than the second TCI state index of the second TCI state. The NCR node may receive, via the backhaul link and in the set of symbols, the second reception based on the first TCI state, for example, based on (e.g., in response to) the first octet comprising/indicating the first TCI state index of the first TCI state being lower/less/smaller than the second octet comprising/indicating the second TCI state index of the second TCI state. The NCR node may receive, via the backhaul link and in the set of symbols, the second reception based on the first TCI state, for example, based on (e.g., in response to) the first TCI state index of the first TCI state having a higher ordinal position (e.g., lower octet in the activation command) than the second TCI state index of the second TCI state. The activation command indicating the at least two TCI states for the first reception via the control link may comprise the first octet and the second octet. The NCR node may receive, via the backhaul link and in the set of symbols, the second reception based on the first TCI state, for example, based on (e.g., in response to) the first TCI state occurring first in the list/set/vector of the at least two TCI states in the activation command indicating the at least two TCI states for the first reception via the control link.

At least one DM-RS antenna port of the second reception may be quasi co-located with the first reference signal indicated by the first TCI state. The at least one DM-RS antenna port of the second reception may be quasi co-located with the first reference signal with respect to the first quasi co-location type indicated by the first TCI state. Each DM-RS antenna port of the second reception may be quasi co-located with the first reference signal indicated by the first TCI state.

The NCR node may receive, via the backhaul link and in the set of symbols, the second reception. The NCR node may receive, via the backhaul link and in the set of symbols, the second reception, for example, based on the first TCI state. The NCR node may receive, via the backhaul link and in the set of symbols, the second reception based on the first TCI state, for example, based on (e.g., in response to) the one or more configuration parameters not comprising a parameter that enables simultaneous reception via/on the backhaul link. The NCR node may receive, via the backhaul link and in the set of symbols, the second reception based on the first TCI state, for example, based on (e.g., in response to) the one or more configuration parameters not comprising a parameter that enables simultaneous reception via/on the backhaul link using two TCI states. The NCR node may receive, via the backhaul link and in the set of symbols, the second reception based on the first TCI state, for example, based on (e.g., in response to) the NCR node not being capable of receiving simultaneously via/on the backhaul link. The NCR node may receive, via the backhaul link and in the set of symbols, the second reception based on the first TCI state, for example, based on (e.g., in response to) the NCR node not being capable of receiving simultaneously via/on the backhaul link using two TCI states.

In at least some examples, the NCR node may simultaneously send (e.g., transmit) via/on the control link and the backhaul link. The NCR node may simultaneously send (e.g., transmit), in a time domain resource, on the control link and the backhaul link. The NCR node may simultaneously send (e.g., transmit), in a set of symbols, via both the control link and the backhaul link. A first transmission via the control link and a second transmission via the backhaul link may overlap in a set of symbols (e.g., in at least one symbol).

The first transmission may be associated with at least two spatial filters (e.g., at least two spatial domain transmission filters). The at least two spatial filters may comprise a first spatial filter and a second spatial filter.

The NCR node may determine the at least two spatial filters. The NCR node may determine the at least two spatial filters, for example, based on at least two TCI states. The at least two TCI states may comprise a first TCI state and a second TCI state. The NCR node may determine the first spatial filter of the at least two spatial filters, for example, based on the first TCI state of the at least two TCI states. The NCR node may determine the second spatial filter of the at least two spatial filters, for example, based on the second TCI state of the at least two TCI states. The NCR node may determine the at least two spatial filters, for example, based on at least two SRIs. The at least two SRIs may comprise a first SRI and a second SRI. The NCR node may determine the first spatial filter of the at least two spatial filters, for example, based on the first SRI of the at least two SRIs. The NCR node may determine the second spatial filter of the at least two spatial filters, for example, based on the second SRI of the at least two SRIs. The NCR node may receive an activation command (e.g., DCI, MAC-CE, RRC message, downlink control message, a control message, control command, and the like) indicating the at least two TCI states or the at least two SRIs for the first transmission via the control link.

A plurality of TCI state indexes may comprise a first TCI state index of the first TCI state. The first TCI state index may indicate/identify the first TCI state. The plurality of TCI state indexes may comprise a second TCI state index of the second TCI state. The second TCI state index may indicate/identify the second TCI state. The first TCI state index may be lower/smaller than the second TCI state index.

The one or more SRS resource indexes may comprise a first SRI index of the first SRI. The first SRI index may indicate/identify the first SRI. The one or more SRS resource indexes may comprise a second SRI index of the second SRI. The second SRI index may indicate/identify the second SRI. The first SRI index may be lower/smaller than the second SRI index.

The activation command indicating the at least two TCI states or the at least two SRIs for the first transmission via the control link may comprise a plurality of fields. The plurality of fields may comprise a first field and a second field.

A first field of the plurality of fields may indicate the first TCI state or the first SRI. The first field may comprise the first TCI state index indicating/identifying the first TCI state. The first field may comprise the first SRI index indicating/identifying the first SRI. The first field may occur/be (or be located), for example, in a first octet of the activation command.

A second field of the plurality of fields may indicate the second TCI state or the second SRI. The second field may comprise, for example, the second TCI state index indicating/identifying the second TCI state. The second field may comprise, for example, the second SRI index indicating/identifying the second SRI. The second field may occur/be (or be located), for example, in a second octet of the activation command. The first octet may be lower/less/smaller than the second octet. For example, the first octet may be Octet 5, and the second octet may be Octet 6. For example, the first octet may be Octet 1, and the second octet may be Octet 2. For example, the first octet may be Octet 9, and the second octet may be Octet 10.

A base station may order at least two TCI state indexes. The base station may order, for example, the first TCI state index and the second TCI state index. The base station may order the first TCI state index and the second TCI state index, for example, according to (or based on) an ordinal position in the activation command. Octet n of the activation command may comprise the first TCI state index identifying/indicating the first TCI state, and Octet m of the activation command may comprise the second TCI state index identifying/indicating the second TCI state, where n < m.

A base station may order at least two SRI indexes. The base station may order, for example, the first SRI index and the second SRI index. The base station may order the first SRI index and the second SRI index, for example, according to (or based on) an ordinal position in the activation command. Octet n of the activation command may comprise the first SRI index identifying/indicating the first SRI, and Octet m of the activation command may comprise the second SRI index identifying/indicating the second SRI, where n < m.

The activation command indicating the at least two TCI states for the first transmission via the control link may indicate/map/activate a list/set/vector of the at least two TCI states in/to/for a TCI codepoint of one or more TCI codepoints. The activation command may indicate mapping/association/activation of the list/set/vector of the at least two TCI states to/for the TCI codepoint. The first TCI state may occur first in the list/set/vector of the at least two TCI states. The first TCI state may be a first/starting/earliest/initial TCI state in the list/set/vector of the at least two TCI states. The second TCI state may occur second in the list/set/vector of the at least two TCI states. The second TCI state may be a last/latest/ending TCI state in the list/set/vector of the at least two TCI states. The first TCI state is TCI state 5 and the second TCI state is TCI state 8. for example, if the list/set/vector of the at least two TCI states equals (=) [TCI state 5, TCI state 8]. The first TCI state is TCI state 26 and the second TCI state is TCI state 61, for example, if the list/set/vector of the at least two TCI states equals (=) [TCI state 26, TCI state 61].

The activation command indicating the at least two SRIs for the first transmission via the control link may indicate/map/activate a list/set/vector of the at least two SRIs. The first SRI may occur first in the list/set/vector of the at least two SRIs. The first SRI may be a first/starting/earliest/initial SRI in the list/set/vector of the at least two SRIs. The second SRI may occur second in the list/set/vector of the at least two SRIs. The second SRI may be a last/latest/ending SRI in the list/set/vector of the at least two SRIs. The first SRI is SRI 5 and the second SRI is TCI state 8, for example, if the list/set/vector of the at least two SRIs equals (=) [SRI 5, SRI 8]. The first SRI is SRI 26 and the second SRI is SRI 61, for example, if the list/set/vector of the at least two SRIs equals (=) [SRI 26, SRI 61].

A TCI state or an SRI may comprise/indicate a reference signal (e.g., CSI-RS, SSB/PBCH block, DM-RS, SRS, and the like). For example, the first TCI state or the first SRI may comprise/indicate a first reference signal (e.g., CSI-RS, SSB/PBCH block, DM-RS, SRS, and the like). The second TCI state or the second SRI may comprise/indicate a second reference signal (e.g., CSI-RS, SSB/PBCH block, DM-RS, SRS, and the like).

The first transmission may be various types of transmissions. The first transmission may be, for example, a PUSCH transmission. The first transmission may be, for example, a PUCCH transmission. The first transmission may be, for example, an SRS transmission.

The NCR node may send (e.g., transmit) the first transmission. The NCR node may send (e.g., transmit), via the control link, the first transmission. The NCR node may send (e.g., transmit), via the control link, the first transmission, for example, based on the at least two TCI states or the at least two SRIs. The NCR node may send (e.g., transmit), via the control link and in the set of symbols, the first transmission. The NCR node may send (e.g., transmit), via the control link and in the set of symbols, the first transmission, for example, based on the at least two TCI states or the at least two SRIs. The NCR node may send (e.g., transmit), via the control link, the first transmission, for example, with/using the at least two spatial filters. The NCR node may send (e.g., transmit), via the control link and in the set of symbols, the first transmission, for example, with the at least two spatial filters. The NCR node may send (e.g., transmit), via the control link, the first transmission, for example, with/using both the first spatial filter and the second spatial filter. The NCR node may send (e.g., transmit), via the control link and in the set of symbols, the first transmission, for example, with both the first spatial filter and the second spatial filter. The NCR node may send (e.g., transmit), via the control link, the first transmission, for example, with both a first transmission power and a second transmission power. The first transmission power may be determined, for example, based on the first TCI state. The second transmission power may be determined, for example, based on the second TCI state. The NCR node may send (e.g., transmit), via the control link and in the set of symbols, the first transmission, for example, with both the first transmission power and the second transmission power.

The NCR node may send (e.g., transmit) the second transmission. The NCR node may send (e.g., transmit), via the backhaul link, the second transmission. The NCR node may send (e.g., transmit), via the backhaul link, the second transmission, for example, with/using the first spatial filter, of the at least two spatial filters, that may be determined, for example, based on the first TCI state or the first SRI.

The NCR node may send (e.g., transmit), via the backhaul link and in the set of symbols, the second transmission. The NCR node may send (e.g., transmit), via the backhaul link and in the set of symbols, the second transmission, for example, with/using the first spatial filter of the at least two spatial filters. The NCR node may send (e.g., transmit), via the backhaul link and in the set of symbols, the second transmission, for example, with/using the first spatial filter, of the at least two spatial filters, that may be determined, for example, based on the first TCI state or the first SRI. A spatial filter for the second transmission via/on the backhaul link may be same as a spatial filter corresponding to the first TCI state of the at least two TCI states (or to the first SRI of the at least two SRIs) for the first transmission via/on the control link in the set of symbols.

The NCR node may send (e.g., transmit), via the backhaul link and in the set of symbols, the second transmission with/using the first spatial filter determined based on the first TCI state, for example, based on (e.g., in response to) the first TCI state index of the first TCI state being lower/smaller than the second TCI state index of the second TCI state. The NCR node may send (e.g., transmit), via the backhaul link and in the set of symbols, the second transmission with/using the first spatial filter determined based on the first SRI, for example, based on (e.g., in response to) the first SRI index of the first SRI being lower/smaller than the second SRI index of the second SRI.

The NCR node may send (e.g., transmit), via the backhaul link and in the set of symbols, the second transmission with/using the first spatial filter determined based on the first TCI state, for example, based on (e.g., in response to) the first octet comprising/indicating the first TCI state index of the first TCI state being lower/less/smaller than the second octet comprising/indicating the second TCI state index of the second TCI state. The NCR node may send (e.g., transmit), via the backhaul link and in the set of symbols, the second transmission with/using the first spatial filter determined based on the first TCI state, for example, based on (e.g., in response to) the first TCI state index of the first TCI state having a higher ordinal position (e.g., lower octet in the activation command) than the second TCI state index of the second TCI state. The activation command indicating the at least two TCI states for the first transmission via the control link may comprise the first octet and the second octet.

The NCR node may send (e.g., transmit), via the backhaul link and in the set of symbols, the second transmission with/using the first spatial filter determined based on the first SRI, for example, based on (e.g., in response to) the first octet comprising/indicating the first SRI index of the first SRI being lower/less/smaller than the second octet comprising/indicating the second SRI index of the second SRI. The NCR node may send (e.g., transmit), via the backhaul link and in the set of symbols, the second transmission with/using the first spatial filter determined based on the first SRI, for example, based on (e.g., in response to) the first SRI index of the first SRI having a higher ordinal position (e.g., lower octet in the activation command) than the second SRI index of the second SRI. The activation command indicating the at least two SRIs for the first transmission via the control link may comprise the first octet and the second octet.

The NCR node may send (e.g., transmit), via the backhaul link and in the set of symbols, the second transmission with/using the first spatial filter determined based on the first TCI state, for example, based on (e.g., in response to) the first TCI state occurring first in the list/set/vector of the at least two TCI states in the activation command indicating the at least two TCI states for the first transmission via the control link. The NCR node may send (e.g., transmit), via the backhaul link and in the set of symbols, the second transmission with/using the first spatial filter determined based on the first SRI, for example, based on (e.g., in response to) the first SRI occurring first in the list/set/vector of the at least two SRIs in the activation command indicating the at least two SRIs for the first transmission via the control link.

The NCR node may send (e.g., transmit), via the backhaul link and in the set of symbols, the second transmission. The NCR node may send (e.g., transmit), via the backhaul link and in the set of symbols, the second transmission, for example, with/using a first transmission power. The first transmission power may be determined, for example, based on the first TCI state. The NCR node may send (e.g., transmit), via the backhaul link and in the set of symbols, the second transmission with/using a first transmission power determined based on the first TCI state, for example, based on (e.g., in response to) the first TCI state occurring first in the list/set/vector of the at least two TCI states in the activation command indicating the at least two TCI states for the first transmission via the control link. The NCR node may send (e.g., transmit), via the backhaul link and in the set of symbols, the second transmission with/using a first transmission power determined based on the first TCI state, for example, based on (e.g., in response to) the first octet comprising/indicating the first TCI state index of the first TCI state being lower/less/smaller than the second octet comprising/indicating the second TCI state index of the second TCI state. The NCR node may send (e.g., transmit), via the backhaul link and in the set of symbols, the second transmission with/using a first transmission power determined based on the first TCI state, for example, based on (e.g., in response to) the first TCI state index of the first TCI state being lower/smaller than the second TCI state index of the second TCI state.

The NCR node may send (e.g., transmit), via the backhaul link and in the set of symbols, the second transmission, for example, based on the first TCI state or the first SRI. The NCR node may send (e.g., transmit), via the backhaul link and in the set of symbols, the second transmission based on the first TCI state or the first SRI, for example, based on (e.g., in response to) the one or more configuration parameters not comprising a parameter that enables simultaneous transmission via/on the backhaul link. The NCR node may send (e.g., transmit), via the backhaul link and in the set of symbols, the second transmission based on the first TCI state or the first SRI, for example, based on (e.g., in response to) the one or more configuration parameters not comprising a parameter that enables simultaneous transmission via/on the backhaul link using two TCI states or two SRIs. The NCR node may send (e.g., transmit), via the backhaul link and in the set of symbols, the second transmission based on the first TCI state or the first SRI, for example, based on (e.g., in response to) the NCR node not being capable of sending (e.g., transmitting) simultaneously via/on the backhaul link. The NCR node may send (e.g., transmit), via the backhaul link and in the set of symbols, the second transmission based on the first TCI state or the first SRI, for example, based on (e.g., in response to) the NCR node not being capable of sending (e.g., transmitting) simultaneously via/on the backhaul link using two TCI states or two SRIs.

In at least some instances, the NCR node may not simultaneously receive via/on the control link and the backhaul link. The NCR node may not simultaneously, in a time domain resource, receive on the control link and the backhaul link. The NCR node may not simultaneously receive, in a set of symbols, via both the control link and the backhaul link.

The NCR node may not simultaneously send (e.g., transmit) on the control link and the backhaul link. The NCR node may not simultaneously, in a time domain resource, send (e.g., transmit) on the control link and the backhaul link. The NCR node may not simultaneously send (e.g., transmit), in a set of symbols, via both the control link and the backhaul link.

In at least some instances, the NCR node may not support determination of a TCI state for receptions via/on the backhaul link. The NCR node may not support determination of a TCI state for receptions via/on the backhaul link, for example, based on an indication of a TCI state by a cell (e.g., a serving cell). The NCR node may not support capability for/of indication of a TCI state by a control command (e.g., DCI, MAC-CE) for receptions on the backhaul link. The NCR node may not support capability for/of receiving a control command (e.g., DCI, MAC-CE) indicating a TCI state for receptions on the backhaul link.

The NCR node may support determination of a TCI state for receptions via/on the backhaul link. The NCR node may support determination of a TCI state for receptions via/on the backhaul link, for example, based on an indication of a TCI state by a cell (e.g., a serving cell). The NCR node may support capability for/of indication of a TCI state by a control command (e.g., DCI, MAC-CE) for receptions on the backhaul link. The NCR node may support capability for/of receiving a control command (e.g., DCI, MAC-CE) indicating a TCI state for receptions on the backhaul link. The NCR node may send (e.g., transmit) a wireless device capability message (e.g., UE capability message) indicating the support/capability of indication of a TCI state by a control command for receptions on the backhaul link. The NCR node may send (e.g., transmit) a wireless device capability message (e.g., UE capability message) indicating the support/capability of receiving a control command indicating a TCI state for receptions on the backhaul link.

The NCR node may receive, for receptions on/via the backhaul link, an indication of a TCI state (e.g., downlink beam). The NCR node may receive an activation command (e.g., 2nd activation command 1940 at time T2, as described herein with respect to FIG. 19). The activation command may comprise, for example, NCR Downlink Backhaul Beam Indication MAC CE, MAC-CE, DCI, control command, or a downlink control command/message. The NCR node may receive an activation command indicating the TCI state for the receptions on the backhaul link. The plurality of TCI states may comprise the TCI state. The activation command may indicate the TCI state as/for a downlink beam to be used for receptions via the backhaul link. The activation command may comprise a TCI state index indicating/identifying the TCI state. The plurality of TCI state indexes may comprise the TCI state index. The NCR node may receive the activation command indicating the TCI state for the receptions on the backhaul link. The NCR node may receive the activation command indicating the TCI state for the receptions on the backhaul link, for example, based on the NCR node supporting determination of a TCI state for receptions via/on the backhaul link, for example, based on an indication of a TCI state. The NCR node may receive the activation command indicating the TCI state for the receptions on the backhaul link, for example, based on the NCR node supporting capability for/of indication of a TCI state by a control command (e.g., DCI, MAC-CE) for receptions on the backhaul link.

The NCR node may receive, via the backhaul link, receptions. The NCR node may receive, via the backhaul link, receptions, for example, based on the TCI state indicated by the activation command (e.g., 2nd activation command 1940 at time T2, as described herein with respect to FIG. 19). The NCR node may receive, via the backhaul link, the receptions based on the TCI state. The NCR node may receive, via the backhaul link, the receptions based on the TCI state, for example, after receiving the activation command indicating the TCI state (e.g., at/after time T2 as described herein with respect to FIG. 19). The NCR node may receive, via the backhaul link, the receptions based on the TCI state, for example, starting from reception (or application) of the activation command indicating the TCI state. The NCR node may use, for the receptions on/via the backhaul link, the TCI state in (or indicated by) the activation command. The NCR node may use, for receptions on/via the backhaul link, quasi co-location parameters indicated/provided by the TCI state.

At least one antenna port (e.g., DM-RS antenna port) of the receptions via the backhaul link may be quasi co-located with a reference signal indicated by the TCI state. The at least one antenna port (e.g., DM-RS antenna port) of the receptions via the backhaul link may be quasi co-located with the reference signal with respect to a quasi co-location type (e.g., QCL Type A, QCL Type B, QCL Type C, QCL Type D) indicated by the TCI state.

The NCR node may receive, via the backhaul link, the receptions with/using a spatial domain reception/receiving filter. The spatial domain reception/receiving filter may be determined, for example, based on the reference signal indicated by the TCI state. The NCR node may receive, via the backhaul link, receptions, for example, based on the first TCI state of the at least two TCI states of the coreset with the lowest coreset index.

The NCR node may use, for the receptions via the backhaul link, quasi co-location parameters. The NCR node may use, for the receptions via the backhaul link, quasi co-location parameters indicated/provided by the first TCI state of the at least two TCI states of the coreset with the lowest coreset index. The NCR node may use, for the receptions via the backhaul link, quasi co-location parameters that are the same as quasi co-location parameters indicated/provided by the first TCI state of the at least two TCI states of the coreset with the lowest coreset index.

At least one antenna port (e.g., DM-RS antenna port) of the receptions via the backhaul link may be quasi co-located with the first reference signal indicated by the first TCI state. The at least one antenna port (e.g., DM-RS antenna port) of the receptions via the backhaul link may be quasi co-located with the first reference signal with respect to the first quasi co-location type (e.g., QCL Type A, QCL Type B, QCL Type C, QCL Type D) indicated by the first TCI state.

The NCR node may receive, via the backhaul link, the receptions with/using a first spatial domain reception/receiving filter. The first spatial domain reception/receiving filter may be determined, for example, based on the first reference signal indicated by the first TCI state.

The NCR node may not receive, via the backhaul link, receptions. The NCR node may not receive, via the backhaul link, receptions, for example, based on the second TCI state of the at least two TCI states of the coreset with the lowest coreset index.

The NCR node may not use, for the receptions via the backhaul link, quasi co-location parameters. The NCR node may not use, for the receptions via the backhaul link, quasi co-location parameters indicated/provided by the second TCI state of the at least two TCI states of the coreset with the lowest coreset index.

The NCR node may receive, via the backhaul link, the receptions, for example, based on the first TCI state of the at least two TCI states of the coreset with the lowest coreset index. The NCR node may receive, via the backhaul link, the receptions based on the first TCI state of the at least two TCI states of the coreset with the lowest coreset index, for example, based on (e.g., in response to) the first TCI state index of the first TCI state being lower/smaller than the second TCI state index of the second TCI state. The NCR node may receive, via the backhaul link, the receptions based on the first TCI state of the at least two TCI states of the coreset with the lowest coreset index, for example, based on (e.g., in response to) the first octet comprising/indicating the first TCI state index of the first TCI state being lower/less/smaller than the second octet comprising/indicating the second TCI state index of the second TCI state. The NCR node may receive, via the backhaul link, the receptions based on the first TCI state of the at least two TCI states of the coreset with the lowest coreset index, for example, based on (e.g., in response to) the first TCI state index of the first TCI state having a higher ordinal position (e.g., lower octet in the activation command) than the second TCI state index of the second TCI state. The activation command indicating/activating the at least two TCI states for the coreset may comprise the first octet and the second octet. The NCR node may receive, via the backhaul link, the receptions based on the first TCI state of the at least two TCI states of the coreset with the lowest coreset index, for example, based on (e.g., in response to) the first TCI state occurring first in the list/set/vector of the at least two TCI states in the activation command indicating/activating the at least two TCI states for the coreset.

In at least some instances, the NCR node may not receive, for receptions on/via the backhaul link, an indication of a TCI state (e.g., downlink beam). The NCR node may not receive an activation command (e.g., 2nd activation command 1940 at time T2, for example as described herein with respect to FIG. 19). The activation command may comprise, for example, NCR Downlink Backhaul Beam Indication MAC CE, MAC-CE, DCI, control command, or downlink control command/message. The NCR node may not receive an activation command indicating a TCI state for the receptions on the backhaul link.

The NCR node may receive, via the backhaul link, the receptions, for example, based on the first TCI state of the at least two TCI states of the coreset with the lowest coreset index. The NCR node may receive, via the backhaul link, the receptions based on the first TCI state of the at least two TCI states of the coreset with the lowest coreset index, for example, based on (e.g., in response to) not receiving an indication of a TCI state for receptions on/via the backhaul link. The NCR node may receive, via the backhaul link, the receptions based on the first TCI state of the at least two TCI states of the coreset with the lowest coreset index, for example, before (or prior to) receiving the activation command (e.g., 2nd activation command 1940 at time T2, as described herein with respect to FIG. 19) indicating the TCI state for the receptions on the backhaul link. The NCR node may receive, via the backhaul link, the receptions based on the first TCI state of the at least two TCI states of the coreset with the lowest coreset index, for example, before (or prior to) time T2 in FIG. 19.

In at least some instances, the one or more configuration parameters may not comprise a unified-TCI-state-type parameter (e.g., *unifiedtci-StαteType)* indicating a unified TCI state type (e.g., 'Joint' or 'Separate'). The one or more configuration parameters may comprise one or more serving cell parameters (e.g., *ServingCellConfig).* The one or more serving cell parameters may not comprise the unified-TCI-state-type parameter.

The NCR node may not receive an indication of a TCI state (e.g., a unified TCI state) for receptions by the NCR-MT in the control link. The NCR node may not receive an activation command (e.g., 1st activation command 1930 at time T1 in FIG. 19, MAC-CE, DCI, control command, downlink control command/message) indicating a TCI state (e.g., unified TCI state) for receptions in the control link. The NCR node may not receive an indication of a TCI state (e.g., a unified TCI state) for receptions by the NCR-MT in the control link, for example, based on the one or more configuration parameters not comprising the unified-TCI-state-type parameter.

The NCR node may receive, via the backhaul link, the receptions, for example, based on the first TCI state of the at least two TCI states of the coreset with the lowest coreset index. The NCR node may receive, via the backhaul link, the receptions based on the first TCI state of the at least two TCI states of the coreset with the lowest coreset index, for example, based on (e.g., in response to) not receiving an indication of a TCI state (e.g., a unified TCI state) for receptions on/via the control link. The NCR node may receive, via the backhaul link, the receptions based on the first TCI state of the at least two TCI states of the coreset with the lowest coreset index, for example, between reception of the one or more configuration parameters (e.g., at time T0, as described herein with respect to FIG. 19) and reception of the activation command indicating the TCI state for the receptions on the backhaul link (e.g., 2nd activation command 1940 at time T2, as described herein with respect to FIG. 19). The NCR node may receive, via the backhaul link, the receptions based on the first TCI state of the at least two TCI states of the coreset with the lowest coreset index, for example, until receiving the activation command (e.g., 2nd activation command 1940 at time T2, time T2, as described herein with respect to FIG. 19) indicating the TCI state for the receptions on the backhaul link. The NCR node may receive, via the backhaul link, the receptions based on the first TCI state of the at least two TCI states of the coreset with the lowest coreset index, for example, until receiving an indication of a TCI state (e.g., a unified TCI state) for receptions in the backhaul link. The NCR node may receive, via the backhaul link, the receptions based on the first TCI state of the at least two TCI states of the coreset with the lowest coreset index, for example, between reception of the one or more configuration parameters (e.g., at time T0, as described herein with respect to FIG. 19) and reception of an indication of a TCI state for receptions in/on the backhaul link (e.g., at time T2, as described herein with respect to FIG. 19). The NCR node may receive, via the backhaul link, the receptions based on the first TCI state of the at least two TCI states of the coreset with the lowest coreset index, for example, based on (e.g., in response to) not supporting determination of a TCI state for receptions via/on the backhaul link, for example, based on an indication of a TCI state. The NCR node may receive, via the backhaul link, the receptions based on the first TCI state of the at least two TCI states of the coreset with the lowest coreset index, for example, based on (e.g., in response to) not supporting capability for/of indication of a TCI state by a control command (e.g., DCI, MAC-CE) for receptions on the backhaul link. The NCR node may receive, via the backhaul link, the receptions based on the first TCI state of the at least two TCI states of the coreset with the lowest coreset index, for example, starting from reception of the one or more configuration parameters (e.g., at time T0, as described herein with respect to FIG. 19). The NCR node may receive, via the backhaul link, the receptions based on the first TCI state of the at least two TCI states of the coreset with the lowest coreset index, for example, after receiving the one or more configuration parameters (e.g., at time T0, as described herein with respect to FIG. 19).

In at least some instances, the one or more configuration parameters may comprise a unified-TCI-state-type parameter (e.g., *unifiedtci-StαteType)* indicating a unified TCI state type (e.g., 'Joint' or 'Separate'). The one or more configuration parameters may comprise one or more serving cell parameters (e.g., *ServingCellConfig).* The one or more serving cell parameters may comprise the unified-TCI-state-type parameter.

The NCR node may receive an indication of a TCI state (e.g., a unified TCI state) for receptions by the NCR-MT in the control link. The NCR node may receive an activation command (e.g., 1st activation command 1930 at time T1, as described herein with respect to FIG. 19). The activation command may comprise, for example, MAC-CE, DCI, control command, or downlink control command/message. The NCR node may receive an activation command indicating at least two TCI states for receptions in the control link. The plurality of TCI states in the TCI state list may comprise the at least two TCI states. The at least two TCI states may comprise a first TCI state and a second TCI state. The NCR node may receive an indication of a TCI state (e.g., a unified TCI state) for receptions by the NCR-MT in the control link, for example, based on the one or more configuration parameters comprising the unified-TCI-state-type parameter. The at least two TCI states of the control link may be/indicate, for example, at least two unified TCI states for receptions via/on/in the control link. The at least two TCI states may be/indicate, for example, at least two joint/downlink TCI states for receptions (e.g., PDCCH receptions, PDSCH receptions, CSI-RS) via/on/in the control link.

A plurality of TCI state indexes may comprise a first TCI state index of the first TCI state. The first TCI state index may indicate/identify the first TCI state. The plurality of TCI state indexes may comprise a second TCI state index of the second TCI state. The second TCI state index may indicate/identify the second TCI state. The first TCI state index may be lower/smaller than the second TCI state index.

The NCR node may receive a MAC-CE (e.g., TCI States Activation/Deactivation for UE-specific PDSCH MAC CE, Unified TCI States Activation/Deactivation MAC CE) indicating activation of a subset of TCI states of the plurality of TCI states. The subset of TCI states may comprise/be the at least two TCI states indicated by the activation command (e.g., 1st activation command 1930 at time T1, as shown for example in FIG. 19). The MAC-CE and the activation command indicating the at least two TCI states for receptions in the control link may be, for example, the same. The MAC-CE and the activation command indicating the at least two TCI states for receptions in the control link may be the same, for example, if the MAC-CE indicates/activates a single TCI codepoint. The subset of TCI states may be the at least two TCI states. The MAC-CE and the activation command indicating the at least two TCI states for receptions in the control link may be, for example, different. The activation command may be, for example, DCI. The MAC-CE and the activation command indicating the at least two TCI states for receptions in the control link may be different, for example, if the MAC-CE indicates/activates more than one TCI codepoint. The subset of TCI states may comprise the at least two TCI states.

The MAC-CE indicating activation of the subset of TCI states may comprise a plurality of fields. A first field of the plurality of fields may indicate the first TCI state. For example, the first field may comprise the first TCI state index indicating/identifying the first TCI state. The first field may occur/be (or be located), for example, in a first octet of the MAC-CE. A second field of the plurality of fields may indicate the second TCI state. The second field may comprise the second TCI state index indicating/identifying the second TCI state. The second field may occur/be (or be located), for example, in a second octet of the MAC-CE. The first octet may be lower/less/smaller than the second octet. For example, the first octet may be Octet 5, and the second octet may be Octet 6. For example, the first octet may be Octet 1, and the second octet may be Octet 2. For example, the first octet may be Octet 9, and the second octet may be Octet 10. The base station may order the first TCI state index and the second TCI state index, for example, according to (or based on) an ordinal position in the MAC-CE. For example, Octet n of the MAC-CE may comprise the first TCI state index identifying/indicating the first TCI state, and Octet m of the MAC-CE may comprise the second TCI state index identifying/indicating the second TCI state, where n < m.

The MAC-CE indicating activation of the subset of TCI states may indicate/map/activate a list/set/vector of the at least two TCI states in/to/for a TCI codepoint of one or more TCI codepoints. The MAC-CE may indicate mapping/association/activation of the list/set/vector of the at least two TCI states to/for the TCI codepoint. The first TCI state may occur first in the list/set/vector of the at least two TCI states. The first TCI state may be a first/starting/earliest/initial TCI state in the list/set/vector of the at least two TCI states. The second TCI state may occur second in the list/set/vector of the at least two TCI states. The second TCI state may be a last/latest/ending TCI state in the list/set/vector of the at least two TCI states. The first TCI state is TCI state 5 and the second TCI state is TCI state 8, for example, if the list/set/vector of the at least two TCI states equals (=) [TCI state 5, TCI state 8]. The first TCI state is TCI state 26 and the second TCI state is TCI state 61, for example, if the list/set/vector of the at least two TCI states equals (=) [TCI state 26, TCI state 61].

The first TCI state may comprise/indicate a first reference signal (e.g., CSI-RS, SSB/PBCH block, DM-RS, SRS, and the like). The first TCI state may comprise/indicate a first quasi co-location type (e.g., QCL TypeA, QCL TypeB, QCL TypeC, QCL TypeD).

The second TCI state may comprise/indicate a second reference signal (e.g., CSI-RS, SSB/PBCH block, DM-RS, SRS, and the like). The second TCI state may comprise/indicate a second quasi co-location type (e.g., QCL TypeA, QCL TypeB, QCL TypeC, QCL TypeD).

The NCR node may receive, via the backhaul link, the receptions. The NCR node may receive, via the backhaul link, the receptions, for example, based on the first TCI state of the at least two TCI states of the coreset with the lowest coreset index. The NCR node may receive, via the backhaul link, the receptions based on the first TCI state of the at least two TCI states of the coreset with the lowest coreset index, for example, based on (e.g., in response to) not receiving an indication of a TCI state (e.g., a unified TCI state) for receptions on/via the control link. The NCR node may receive, via the backhaul link, the receptions, for example, based on the first TCI state of the at least two TCI states of the coreset with the lowest coreset index. The NCR node may receive, via the backhaul link, the receptions based on the first TCI state of the at least two TCI states of the coreset with the lowest coreset index, for example, before (or prior to) time T1 (e.g., as shown for example in FIG. 19). The NCR node may receive, via the backhaul link, the receptions based on the first TCI state of the at least two TCI states of the coreset with the lowest coreset index, for example, until receiving an indication of a TCI state (e.g., a unified TCI state) for receptions by the NCR-MT in the control link. The NCR node may receive, via the backhaul link, the receptions based on the first TCI state of the at least two TCI states of the coreset with the lowest coreset index, for example, between reception of the one or more configuration parameters (e.g., at time T0, as shown for example in FIG. 19) and reception of an indication of a TCI state (e.g., a unified TCI state) for receptions by the NCR-MT in the control link (e.g., at time T1, as shown for example in FIG. 19). The NCR node may receive, via the backhaul link, the receptions based on the first TCI state of the at least two TCI states of the coreset with the lowest coreset index, for example, before (or prior to) receiving the activation command (e.g., 1st activation command 1930 at time T1 in FIG. 19) indicating the at least two TCI states for the receptions on the control link. The NCR node may receive, via the backhaul link, the receptions based on the first TCI state of the at least two TCI states of the coreset with the lowest coreset index, for example, until receiving the activation command indicating the at least two TCI states for the receptions in the control link. The NCR node may receive, via the backhaul link, the receptions based on the first TCI state of the at least two TCI states of the coreset with the lowest coreset index, for example, between reception of the one or more configuration parameters (e.g., at time T0, as shown for example in FIG. 19) and reception of the activation command indicating the at least two TCI states for the receptions on the control link (e.g., 1st activation command 1930 at time T1, shown for example in FIG. 19).

The NCR node may receive, via the backhaul link, receptions, for example, based on the first TCI state of the at least two TCI states of the control link (e.g., indicated by the 1st activation command 1930 at time T1, shown for example in FIG. 19). The NCR node may use, for the receptions via the backhaul link, quasi co-location parameters indicated/provided by the first TCI state of the at least two TCI states of the control link. The NCR node may use, for the receptions via the backhaul link, quasi co-location parameters that are the same as quasi co-location parameters indicated/provided by the first TCI state of the at least two TCI states of the control link.

At least one antenna port (e.g., DM-RS antenna port) of the receptions via the backhaul link may be quasi co-located with the first reference signal indicated by the first TCI state of the at least two TCI states of the control link. The at least one antenna port (e.g., DM-RS antenna port) of the receptions via the backhaul link may be quasi co-located with the first reference signal with respect to the first quasi co-location type (e.g., QCL Type A, QCL Type B, QCL Type C, QCL Type D) indicated by the first TCI state.

The NCR node may receive, via the backhaul link, the receptions with/using a first spatial domain reception/receiving filter. The first spatial domain reception/receiving filter may be determined, for example, based on the first reference signal indicated by the first TCI state of the at least two TCI states of the control link. The NCR node may not receive, via the backhaul link, receptions, for example, based on the second TCI state of the at least two TCI states of the control link.

The NCR node may not use, for the receptions via the backhaul link, quasi co-location parameters indicated/provided by the second TCI state of the at least two TCI states of the control link. The NCR node may receive, via the backhaul link, the receptions, for example, based on the first TCI state of the at least two TCI states of the control link. The NCR node may receive, via the backhaul link, the receptions based on the first TCI state of the at least two TCI states of the control link, for example, based on (e.g., in response to) the first TCI state index of the first TCI state being lower/smaller than the second TCI state index of the second TCI state. The NCR node may receive, via the backhaul link, the receptions based on the first TCI state of the at least two TCI states of the control link, for example, based on (e.g., in response to) the first octet comprising/indicating the first TCI state index of the first TCI state being lower/less/smaller than the second octet comprising/indicating the second TCI state index of the second TCI state. The NCR node may receive, via the backhaul link, the receptions based on the first TCI state of the at least two TCI states of the control link, for example, based on (e.g., in response to) the first TCI state index of the first TCI state having a higher ordinal position (e.g., lower octet in the MAC-CE) than the second TCI state index of the second TCI state. The MAC-CE indicating/activating the subset of TCI states, that comprise the at least two TCI states of the control link, may comprise the first octet and the second octet. The NCR node may receive, via the backhaul link, the receptions based on the first TCI state of the at least two TCI states of the control link, for example, based on (e.g., in response to) the first TCI state occurring first in the list/set/vector of the at least two TCI states in the MAC-CE indicating/activating the subset of TCI states. The NCR node may receive, via the backhaul link, the receptions based on the first TCI state of the at least two TCI states of the control link, for example, based on (e.g., in response to) receiving an indication of a TCI state (e.g., a unified TCI state) for receptions on/via the control link. The NCR node may receive, via the backhaul link, the receptions based on the first TCI state of the at least two TCI states of the control link, for example, after time T1, shown for example in FIG. 19. The NCR node may receive, via the backhaul link, the receptions based on the first TCI state of the at least two TCI states of the control link, for example, before (or prior to) time T2, shown for example in FIG. 19. The NCR node may receive, via the backhaul link, the receptions based on the first TCI state of the at least two TCI states of the control link, for example, between reception of the activation command indicating the at least two TCI states for the receptions in the control link (e.g., at time T1, shown for example in FIG. 19) and reception of the activation command indicating the TCI state for the receptions on the backhaul link (e.g., 2nd activation command 1940 at time T2, shown for example in FIG. 19). The NCR node may receive, via the backhaul link, the receptions based on the first TCI state of the at least two TCI states of the control link, for example, until receiving the activation command (e.g., 2nd activation command at time T2, shown for example in FIG. 19) indicating the TCI state for the receptions on the backhaul link. The NCR node may receive, via the backhaul link, the receptions based on the first TCI state of the at least two TCI states of the control link, for example, before (or prior to) receiving the activation command (e.g., 2nd activation command 1940 at time T2, shown for example in FIG. 19) indicating the TCI state for the receptions on the backhaul link. The NCR node may receive, via the backhaul link, the receptions based on the first TCI state of the at least two TCI states of the control link, for example, until receiving an indication of a TCI state (e.g., a unified TCI state) for receptions in the backhaul link. The NCR node may receive, via the backhaul link, the receptions based on the first TCI state of the at least two TCI states of the control link, for example, between reception of the activation command indicating the at least two TCI states for the receptions in the control link (e.g., at time T1, shown for example in FIG. 19) and reception of an indication of a TCI state for receptions in/on the backhaul link (e.g., at time T2, shown for example in FIG. 19).

In at least some instances, the NCR node may not support determination of a spatial filter for transmissions on/via the backhaul link. The NCR node may not support determination of a spatial filter for transmissions on/via the backhaul link, for example, based on an indication of a TCI state (e.g., unified TCI state) or an SRS resource index (e.g., SRI) by a cell (e.g., a serving cell). The NCR node may not support capability for/of indication of a TCI state or an SRI by a control command (e.g., DCI, MAC-CE) for transmissions on the backhaul link. The NCR node may not support capability for/of receiving a control command (e.g., DCI, MAC-CE) indicating a TCI state or an SRI for transmissions on the backhaul link.

The NCR node may support determination of a spatial filter for transmissions on/via the backhaul link. The NCR node may support determination of a spatial filter for transmissions on/via the backhaul link, for example, based on an indication of a TCI state (e.g., unified TCI state) or an SRS resource index (e.g., SRI) by a cell (e.g., a serving cell). The NCR node may support capability for/of indication of a TCI state or an SRI by a control command (e.g., DCI, MAC-CE) for transmissions on the backhaul link. The NCR node may support capability for/of receiving a control command (e.g., DCI, MAC-CE) indicating a TCI state or an SRI for transmissions on the backhaul link. The NCR node may send (e.g., transmit) a wireless device capability message (e.g., UE capability message) indicating the support/capability of indication of a TCI state or an SRI by a control command for transmissions on the backhaul link. The NCR node may send (e.g., transmit) a wireless device capability message (e.g., UE capability message) indicating the support/capability of receiving a control command indicating a TCI state or an SRI for transmissions on the backhaul link.

The NCR node may receive, for transmissions on/via the backhaul link, an indication of a TCI state (e.g., unified TCI state) or an SRS resource index (e.g., uplink beam). The NCR node may receive an activation command (e.g., 2nd activation command 1940 at time T2, as shown for example in FIG. 19) The activation command may comprise, for example, NCR Uplink Backhaul Beam Indication MAC CE, MAC-CE, DCI, control command, downlink control or command/message. The NCR node may receive an activation command indicating the TCI state (e.g., the unified TCI state) or the SRS resource index for the transmissions on the backhaul link. The plurality of TCI states may comprise the TCI state. The activation command may indicate the TCI state or the SRS resource index as/for an uplink beam to be used for transmissions via the backhaul link. The activation command may comprise, for example, a TCI state index indicating/identifying the TCI state. The plurality of TCI state indexes may comprise the TCI state index. The activation command may comprise, for example, the SRS resource index (e.g., SRI) indicating/identifying an SRS resource among the one or more SRS resources. One or more SRS resource indexes may comprise the SRS resource index (e.g., SRI).

The NCR node may receive the activation command indicating the TCI state or the SRS resource index for the transmissions on the backhaul link. The NCR node may receive the activation command indicating the TCI state or the SRS resource index for the transmissions on the backhaul link, for example, based on the NCR node supporting determination of a spatial filter for transmissions via/on the backhaul link based on an indication of a TCI state or an SRI. The NCR node may receive the activation command indicating the TCI state or the SRS resource index for the transmissions on the backhaul link, for example, based on the NCR node supporting capability for/of indication of a TCI state or an SRI by a control command (e.g., DCI, MAC-CE) for transmissions on the backhaul link.

The NCR node may send (e.g., transmit), via the backhaul link, transmissions, for example, based on the TCI state or the SRS resource index (e.g., SRI) indicated by the activation command (e.g., 2nd activation command 1940 at time T2, as shown for example in FIG. 19). The NCR node may send (e.g., transmit), via the backhaul link, the transmissions based on the TCI state or the SRS resource index, for example, after receiving the activation command indicating the TCI state or the SRS resource index (e.g., at/after time T2, as shown for example in FIG. 19). The NCR node may send (e.g., transmit), via the backhaul link, the transmissions based on the TCI state or the SRS resource index, for example, starting from reception (or application) of the activation command indicating the TCI state or the SRS resource index. The NCR node may use, for transmissions on/via the backhaul link, the TCI state or the SRS resource index in (or indicated by) the activation command. The NCR node may use, for transmissions on/via the backhaul link, quasi co-location parameters indicated/provided by the TCI state or the SRS resource index.

The NCR node may send (e.g., transmit), via the backhaul link, the transmissions, for example, with/using a spatial domain transmission (or transmitting/transmit) filter. The spatial domain transmission filter may be determined, for example, based on a reference signal indicated by the TCI state or the SRS resource index. The NCR node may send (e.g., transmit), via the backhaul link, the transmissions with/using the spatial domain transmission filter that is the same (or substantially same) as a spatial domain transmission filter used to send (e.g., transmit) the reference signal.

The NCR node may send (e.g., transmit), via the backhaul link, the transmissions, for example, with/using a transmission power. The transmission power may be determined, for example, based on one or more power control parameters (e.g., target received power, pathloss compensation factor, closed-loop index, pathloss reference signal) associated with (or mapped to or indicated by or included in) the TCI state.

The SRS resource index may indicate/identify the SRS resource among the one or more SRS resources. The SRS resource may be associated with a spatial relation. The NCR node may receive an activation command (e.g., MAC-CE, DCI, RRC message, SP/AP SRS Spatial Relation Indication MAC CE) indicating activation of the spatial relation for the SRS resource. The one or more configuration parameters may indicate, for the SRS resource, the spatial relation. The NCR node may send (e.g., transmit), via the backhaul link, the transmissions, for example, based on the spatial relation of the SRS resource. The NCR node may send (e.g., transmit), via the backhaul link, the transmissions based on the spatial relation of the SRS resource, for example, based on the activation command indicating the SRS resource index that identifies the SRS resource for the transmissions on the backhaul link. The NCR node may send (e.g., transmit), via the backhaul link, the transmissions with/using the spatial domain transmission filter determined, for example, based on the reference signal indicated by the spatial relation of the SRS resource identified by the SRS resource index.

The NCR node may send (e.g., transmit), via the backhaul link, transmissions, for example, based on the first spatial relation of the at least two spatial relations of the PUCCH resource with the lowest PUCCH resource index. The NCR node may use, for the transmissions via the backhaul link, a first spatial domain transmission filter/beam indicated/provided by the first spatial relation of the at least two spatial relations. The NCR node may use, for the transmissions via the backhaul link, a spatial filter that is the same as a spatial filter indicated/provided by the first spatial relation of the at least two spatial relations. The NCR node may send (e.g., transmit), via the backhaul link, the transmissions with/using a first spatial domain transmission filter determined, for example, based on the first reference signal indicated by the first spatial relation. The NCR node may send (e.g., transmit), via the backhaul link, the transmissions with/using a first transmission power determined, for example, based on one or more power control parameters (e.g., target received power, pathloss compensation factor, closed-loop index, pathloss reference signal) associated with (or mapped to or indicated by or included in) the first spatial relation. The NCR node may not send (e.g., transmit), via the backhaul link, transmissions, for example, based on the second spatial relation of the at least two spatial relations of the PUCCH resource with the lowest PUCCH resource index. The NCR node may not use, for the transmissions via the backhaul link, a spatial filter indicated/provided by the second spatial relation of the at least two spatial relations. The NCR node may send (e.g., transmit), via the backhaul link, the transmissions based on the first spatial relation of the at least two spatial relations, for example, based on (e.g., in response to) the first spatial relation index of the first spatial relation being lower/smaller than the second spatial relation index of the second spatial relation. The NCR node may send (e.g., transmit), via the backhaul link, the transmissions based on the first spatial relation of the at least two spatial relations, for example, based on (e.g., in response to) the first octet comprising/indicating the first spatial relation index of the first spatial relation being lower/less/smaller than the second octet comprising/indicating the second spatial relation index of the second spatial relation. The NCR node may send (e.g., transmit), via the backhaul link, the transmissions based on the first spatial relation of the at least two spatial relations, for example, based on (e.g., in response to) the first spatial relation index of the first spatial relation having a higher ordinal position (e.g., lower octet in the activation command) than the second spatial relation index of the second spatial relation. The activation command indicating/activating the at least two spatial relations for the PUCCH resource may comprise the first octet and the second octet. The NCR node may send (e.g., transmit), via the backhaul link, the transmissions based on the first spatial relation of the at least two spatial relations, for example, based on (e.g., in response to) the first spatial relation occurring first in the list/set/vector of the at least two spatial relations in the activation command indicating/activating the at least two spatial relations for the PUCCH resource.

In at least some instances, the NCR node may not receive, for transmissions on/via the backhaul link, an indication of a TCI state (e.g., unified TCI state) or an SRS resource index (e.g., SRI). The NCR node may not receive, for determining a spatial filter for transmissions on/via the backhaul link, an indication of a TCI state (e.g., unified TCI state) or an SRS resource index (e.g., SRI). The NCR node may not receive an activation command (e.g., 2nd activation command 1940 at time T2, as shown for example in FIG. 19). The activation command may comprise, for example, NCR Uplink Backhaul Beam Indication MAC CE, MAC-CE, DCI, control command, or downlink control command/message. The NCR node may not receive an activation command indicating a TCI state or an SRS resource index for the transmissions on the backhaul link.

The NCR node may send (e.g., transmit), via the backhaul link, the transmissions based on the first spatial relation of the at least two spatial relations, for example, based on (e.g., in response to) not receiving an indication of a TCI state or an SRS resource index for transmissions on/via the backhaul link. The NCR node may send (e.g., transmit), via the backhaul link, the transmissions based on the first spatial relation of the at least two spatial relations, for example, before (or prior to) receiving the activation command (e.g., 2nd activation command 1940 at time T2, as shown for example in FIG. 19) indicating the TCI state or the SRS resource index for the transmissions on the backhaul link. The NCR node may send (e.g., transmit), via the backhaul link, the transmissions based on the first spatial relation of the at least two spatial relations, for example, before (or prior to) time T2, as shown for example in FIG. 19.

In at least some instances, the one or more configuration parameters may not comprise a unified-TCI-state-type parameter (e.g., *unifiedtci-StateType*) indicating a unified TCI state type (e.g., 'Joint' or 'Separate'). The one or more configuration parameters may comprise one or more serving cell parameters (e.g., *ServingCellConfig*). The one or more serving cell parameters may not comprise the unified-TCI-state-type parameter.

The NCR node may not receive an indication of a TCI state (e.g., a unified TCI state) for transmissions by the NCR-MT in the control link. The NCR node may not receive an activation command (e.g., 1st activation command 1930 at time T1, as shown for example in FIG. 19), The activation command may comrpise, for example, MAC-CE, DCI, control command, downlink control command/message. The NCR node may not receive an activation command indicating a TCI state (e.g., unified TCI state) for transmissions in the control link. The NCR node may not receive an indication of a TCI state (e.g., a unified TCI state) for transmissions by the NCR-MT in the control link, for example, based on the one or more configuration parameters not comprising the unified-TCI-state-type parameter.

The NCR node may send (e.g., transmit), via the backhaul link, the transmissions based on the first spatial relation of the at least two spatial relations, for example, based on (e.g., in response to) not receiving an indication of a TCI state (e.g., a unified TCI state) for transmissions on/via the control link. The NCR node may send (e.g., transmit), via the backhaul link, the transmissions based on the first spatial relation of the at least two spatial relations, for example, between reception of the one or more configuration parameters (e.g., at time T0, as shown for example in FIG. 19) and reception of the activation command indicating the TCI state or the SRS resource index for the transmissions on the backhaul link (e.g., 2nd activation command 1940 at time T2, as shown for example in FIG. 19).

The NCR node may send (e.g., transmit), via the backhaul link, the transmissions, for example, based on the first spatial relation of the at least two spatial relations. The NCR node may send (e.g., transmit), via the backhaul link, the transmissions based on the first spatial relation of the at least two spatial relations, for example, until receiving the activation command (e.g., 2nd activation command 1940 at time T2, as shown for example in FIG. 19) indicating the TCI state (e.g., unified TCI state) or the SRS resource index for the transmissions on the backhaul link. The NCR node may send (e.g., transmit), via the backhaul link, the transmissions based on the first spatial relation of the at least two spatial relations, for example, until receiving an indication of a TCI state (e.g., a unified TCI state) or an SRS resource index for transmissions in the backhaul link. The NCR node may send (e.g., transmit), via the backhaul link, the transmissions based on the first spatial relation of the at least two spatial relations, for example, between reception of the one or more configuration parameters (e.g., at time T0, as shown for example in FIG. 19) and reception of an indication of a TCI state or an SRS resource index for transmissions in/on the backhaul link (e.g., at time T2, as shown for example in FIG. 19). The NCR node may send (e.g., transmit), via the backhaul link, the transmissions based on the first spatial relation of the at least two spatial relations, for example, based on (e.g., in response to) not supporting determination of a spatial filter for transmissions via/on the backhaul link based on an indication of a TCI state (e.g., unified TCI state) or an SRS resource index. The NCR node may send (e.g., transmit), via the backhaul link, the transmissions based on the first spatial relation of the at least two spatial relations, for example, based on (e.g., in response to) not supporting capability for/of indication of a TCI state or an SRS resource index by a control command (e.g., DCI, MAC-CE) for transmissions on the backhaul link. The NCR node may send (e.g., transmit), via the backhaul link, the transmissions based on the first spatial relation of the at least two spatial relations, for example, starting from reception of the one or more configuration parameters (e.g., at time T0, as shown for example in FIG. 19). The NCR node may send (e.g., transmit), via the backhaul link, the transmissions based on the first spatial relation of the at least two spatial relations, for example, after receiving the one or more configuration parameters (e.g., at time T0, as shown for example in FIG. 19).

In at least some intances, the one or more configuration parameters may comprise a unified-TCI-state-type parameter (e.g., *unifiedtci-StateType*) indicating a unified TCI state type (e.g., 'Joint' or 'Separate'). The one or more configuration parameters may comprise one or more serving cell parameters (e.g., *ServingCellConfig)*. The one or more serving cell parameters may comprise the unified-TCI-state-type parameter.

The NCR node may receive an indication of a TCI state (e.g., a unified TCI state) for transmissions by the NCR-MT in the control link. The NCR node may receive an activation command (e.g., 1st activation command 1930 at time T1, as shown for example in FIG. 19, MAC-CE, DCI, control command, downlink control command/message) indicating at least two TCI states for transmissions in the control link. The plurality of TCI states in the TCI state list may comprise the at least two TCI states. The at least two TCI states may comprise a first TCI state and a second TCI state. The NCR node may receive an indication of a TCI state (e.g., a unified TCI state) for transmissions by the NCR-MT in the control link, for example, based on the one or more configuration parameters comprising the unified-TCI-state-type parameter. The at least two TCI states of the control link may be/indicate, for example, at least two unified TCI states for transmissions via/on/in the control link. The at least two TCI states may be/indicate, for example, at least two joint/uplink TCI states for transmissions (e.g., PUCCH transmissions, PUSCH transmissions, SRS) via/on/in the control link.

A plurality of TCI state indexes may comprise a first TCI state index of the first TCI state. The first TCI state index may indicate/identify the first TCI state. The plurality of TCI state indexes may comprise a second TCI state index of the second TCI state. The second TCI state index may indicate/identify the second TCI state. The first TCI state index may be lower/smaller than the second TCI state index.

The NCR node may receive a MAC-CE (e.g., TCI States Activation/Deactivation for UE-specific PDSCH MAC CE, Unified TCI States Activation/Deactivation MAC CE) indicating activation of a subset of TCI states of the plurality of TCI states. The subset of TCI states may comprise/be the at least two TCI states indicated by the activation command (e.g., 1st activation command 1930 at time T1, as shown for example in FIG. 19). The MAC-CE and the activation command indicating the at least two TCI states for receptions in the control link may be, for example, the same. The MAC-CE and the activation command indicating the at least two TCI states for receptions in the control link may be the same, for example, if the MAC-CE indicates/activates a single TCI codepoint. The subset of TCI states may be the at least two TCI states. The MAC-CE and the activation command indicating the at least two TCI states for receptions in the control link may be, for example, different. The activation command may be, for example, DCI. The MAC-CE and the activation command indicating the at least two TCI states for receptions in the control link may be different, for example, if the MAC-CE indicates/activates more than one TCI codepoint. The subset of TCI states may comprise the at least two TCI states.

The MAC-CE indicating activation of the subset of TCI states may comprise a plurality of fields. A first field of the plurality of fields may indicate the first TCI state. For example, the first field may comprise the first TCI state index indicating/identifying the first TCI state. The first field may occur/be (or be located), for example, in a first octet of the MAC-CE. A second field of the plurality of fields may indicate the second TCI state. The second field may comprise the second TCI state index indicating/identifying the second TCI state. The second field may occur/be (or be located), for example, in a second octet of the MAC-CE. The first octet may be lower/less/smaller than the second octet. For example, the first octet may be Octet 5, and the second octet may be Octet 6. For example, the first octet may be Octet 1, and the second octet may be Octet 2. For example, the first octet may be Octet 9, and the second octet may be Octet 10. The base station may order the first TCI state index and the second TCI state index, for example, according to (or based on) an ordinal position in the MAC-CE. For example, Octet n of the MAC-CE may comprise the first TCI state index identifying/indicating the first TCI state, and Octet m of the MAC-CE may comprise the second TCI state index identifying/indicating the second TCI state, where n < m.

The MAC-CE indicating activation of the subset of TCI states may indicate/map/activate a list/set/vector of the at least two TCI states in/to/for a TCI codepoint of one or more TCI codepoints. The MAC-CE may indicate mapping/association/activation of the list/set/vector of the at least two TCI states to/for the TCI codepoint. The first TCI state may occur first in the list/set/vector of the at least two TCI states. The first TCI state may be a first/starting/earliest/initial TCI state in the list/set/vector of the at least two TCI states. The second TCI state may occur second in the list/set/vector of the at least two TCI states. The second TCI state may be a last/latest/ending TCI state in the list/set/vector of the at least two TCI states. For example, if the list/set/vector of the at least two TCI states equals (=) [TCI state 5, TCI state 8], the first TCI state is TCI state 5 and the second TCI state is TCI state 8. For example, if the list/set/vector of the at least two TCI states equals (=) [TCI state 26, TCI state 61], the first TCI state is TCI state 26 and the second TCI state is TCI state 61.

The first TCI state may comprise/indicate a first reference signal (e.g., CSI-RS, SSB/PBCH block, DM-RS, SRS, and the like). The second TCI state may comprise/indicate a second reference signal (e.g., CSI-RS, SSB/PBCH block, DM-RS, SRS, and the like).

The NCR node may send (e.g., transmit), via the backhaul link, the transmissions, for example, based on the first spatial relation of the at least two spatial relations. The NCR node may send (e.g., transmit), via the backhaul link, the transmissions based on the first spatial relation of the at least two spatial relations, for example, based on (e.g., in response to) not receiving an indication of a TCI state (e.g., a unified TCI state) for transmissions on/via the control link. For example, the NCR node may send (e.g., transmit), via the backhaul link, the transmissions based on the first spatial relation of the at least two spatial relations, for example, before (or prior to) time T1, as shown for example in FIG. 19. The NCR node may send (e.g., transmit), via the backhaul link, the transmissions based on the first spatial relation of the at least two spatial relations, for example, until receiving an indication of a TCI state (e.g., a unified TCI state) for transmissions by the NCR-MT in the control link. The NCR node may send (e.g., transmit), via the backhaul link, the transmissions based on the first spatial relation of the at least two spatial relations, for example, between reception of the one or more configuration parameters (e.g., at time T0, as shown for example in FIG. 19) and reception of an indication of a TCI state (e.g., a unified TCI state) for transmissions by the NCR-MT in the control link (e.g., at time T1, as shown for example in FIG. 19). The NCR node may send (e.g., transmit), via the backhaul link, the transmissions based on the first spatial relation of the at least two spatial relations, for example, before (or prior to) receiving the activation command (e.g., 1st activation command 1930 at time T1, as shown for example in FIG. 19) indicating the at least two TCI states for the transmissions on the control link. The NCR node may send (e.g., transmit), via the backhaul link, the transmissions based on the first spatial relation of the at least two spatial relations, for example, until receiving the activation command indicating the at least two TCI states for the transmissions in the control link. The NCR node may send (e.g., transmit), via the backhaul link, the transmissions based on the first spatial relation of the at least two spatial relations, for example, between reception of the one or more configuration parameters (e.g., at time T0, as shown for example in FIG. 19) and reception of the activation command indicating the at least two TCI states for the transmissions on the control link (e.g., 1st activation command 1930 at time T1, as shown for example in FIG. 19). The NCR node may send (e.g., transmit), via the backhaul link, transmissions, for example, based on the first TCI state of the at least two TCI states of the control link (e.g., indicated by the 1st activation command 1930 at time T1, as shown for example in FIG. 19).

The NCR node may use, for the transmissions via the backhaul link, a spatial filter indicated/provided by the first TCI state of the at least two TCI states of the control link. The NCR node may use, for the transmissions via the backhaul link, a spatial filter that is the same as a spatial filter indicated/provided by the first TCI state of the at least two TCI states of the control link. The NCR node may send (e.g., transmit), via the backhaul link, the transmissions with/using a first spatial domain transmission filter determined, for example, based on the first reference signal indicated by the first TCI state of the at least two TCI states of the control link.

The NCR node may send (e.g., transmit), via the backhaul link, the transmissions with/using a first transmission power. The first transmission power may be determined, for example, based on one or more first power control parameters (e.g., target received power, pathloss compensation factor, closed-loop index, pathloss reference signal) associated with (or mapped to or indicated by or included in) the first TCI of the at least two TCI states of the control link. The NCR node may not send (e.g., transmit), via the backhaul link, transmissions, for example, based on the second TCI state of the at least two TCI states of the control link. The NCR node may not use, for the transmissions via the backhaul link, a spatial filter indicated/provided by the second TCI state of the at least two TCI states of the control link.

The NCR node may send (e.g., transmit), via the backhaul link, the transmissions, for example, based on the first TCI state of the at least two TCI states of the control link. The NCR node may send (e.g., transmit), via the backhaul link, the transmissions based on the first TCI state of the at least two TCI states of the control link, for example, based on (e.g., in response to) the first TCI state index of the first TCI state being lower/smaller than the second TCI state index of the second TCI state. The NCR node may send (e.g., transmit), via the backhaul link, the transmissions based on the first TCI state of the at least two TCI states of the control link, for example, based on (e.g., in response to) the first octet comprising/indicating the first TCI state index of the first TCI state being lower/less/smaller than the second octet comprising/indicating the second TCI state index of the second TCI state. The NCR node may send (e.g., transmit), via the backhaul link, the transmissions based on the first TCI state of the at least two TCI states of the control link, for example, based on (e.g., in response to) the first TCI state index of the first TCI state having a higher ordinal position (e.g., lower octet in the MAC-CE) than the second TCI state index of the second TCI state. The MAC-CE indicating/activating the subset of TCI states, that comprise the at least two TCI states of the control link, may comprise the first octet and the second octet. The NCR node may send (e.g., transmit), via the backhaul link, the transmissions based on the first TCI state of the at least two TCI states of the control link, for example, based on (e.g., in response to) the first TCI state occurring first in the list/set/vector of the at least two TCI states in the MAC-CE indicating/activating the subset of TCI states. The NCR node may send (e.g., transmit), via the backhaul link, the transmissions based on the first TCI state of the at least two TCI states of the control link, for example, based on (e.g., in response to) receiving an indication of a TCI state (e.g., a unified TCI state) for transmissions on/via the control link. The NCR node may send (e.g., transmit), via the backhaul link, the transmissions based on the first TCI state of the at least two TCI states of the control link, for example, after time T1, as shown for example in FIG. 19. The NCR node may send (e.g., transmit), via the backhaul link, the transmissions based on the first TCI state of the at least two TCI states of the control link, for example, before (or prior to) time T2, as shown for example in FIG. 19. The NCR node may send (e.g., transmit), via the backhaul link, the transmissions based on the first TCI state of the at least two TCI states of the control link, for example, between reception of the activation command indicating the at least two TCI states for the transmissions in the control link (e.g., at time T1, as shown for example in FIG. 19) and reception of the activation command indicating the TCI state for the transmissions on the backhaul link (e.g., 2nd activation command 1940 at time T2, as shown for example in FIG. 19). The NCR node may send (e.g., transmit), via the backhaul link, the transmissions based on the first TCI state of the at least two TCI states of the control link, for example, until receiving the activation command (e.g., 2nd activation command 1940 at time T2, as shown for example in FIG. 19) indicating the TCI state for the transmissions on the backhaul link. The NCR node may send (e.g., transmit), via the backhaul link, the transmissions based on the first TCI state of the at least two TCI states of the control link, for example, before (or prior to) receiving the activation command (e.g., 2nd activation command 1940 at time T2, as shown for example in FIG. 19) indicating the TCI state for the transmissions on the backhaul link. The NCR node may send (e.g., transmit), via the backhaul link, the transmissions based on the first TCI state of the at least two TCI states of the control link, for example, until receiving an indication of a TCI state (e.g., a unified TCI state) for receptions in the backhaul link. The NCR node may send (e.g., transmit), via the backhaul link, the transmissions based on the first TCI state of the at least two TCI states of the control link, for example, between reception of the activation command indicating the at least two TCI states for the transmissions in the control link (e.g., at time T1 in FIG. 19) and reception of an indication of a TCI state for transmissions in/on the backhaul link (e.g., at time T2, as shown for example in FIG. 19).

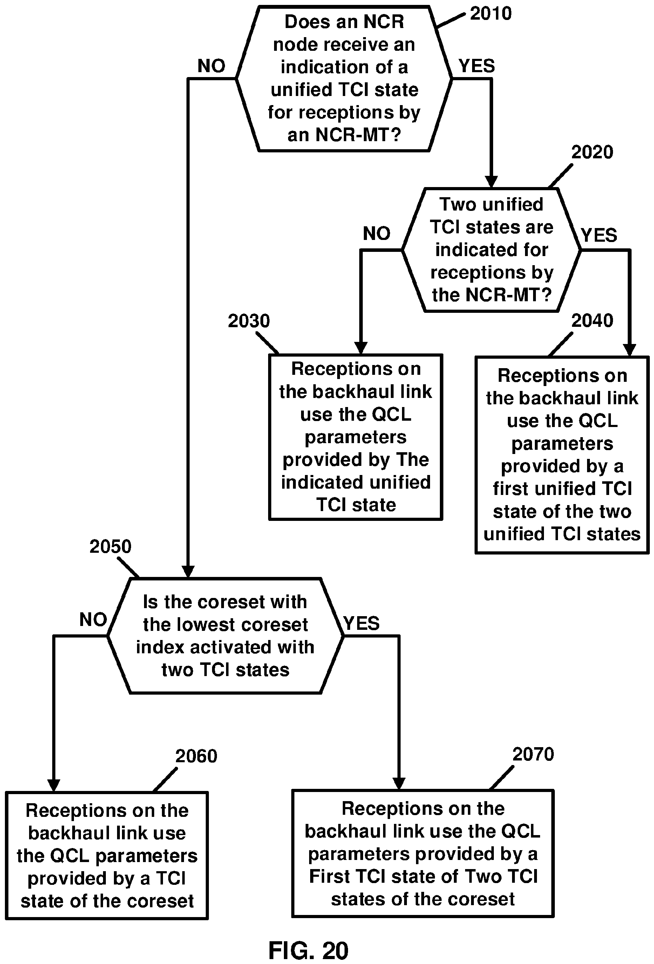

FIG. 20 shows an example method of relaying. One or more steps of the example method may be performed by an NCR node (e.g., NCR node 1720, 1820, 1905 as described herein with respect to FIG. 17, FIG. 18, FIG. 19) and/or a base station (e.g., the base station 160A, 160B, 162A, 162B, 220, 1210, 1302, 1710, and/or 1910 as described herein with respect to FIGS. 1A, 1B, 2A, 2B, 12A, 12B, 13A, 13B, 13C, 17, and/or 19).

At step 2010, an NCR node and/or a base station may determine if an NCR node receives an indication of a (unified) TCI state for receptions by an NCR-MT. If the NCR node does not receive an indication of a (unified) TCI state for receptions by an NCR-MT, at step 2050, an NCR node and/or a base station may determine if a coreset with the lowest coreset index is activated with two TCI states. If the coreset with the lowest coreset index is not activated with two TCI states, at step 2060, receptions on a backhaul link may use QCL parameters provided by a TCI state of the coreset. If the coreset with the lowest coreset index is activated with two TCI states, at step 2070, receptions on the backhaul link may use the QCL parameters provided by a first TCI state of two TCI states of the coreset. If the NCR node receives an indication of a (unified) TCI state for receptions by an NCR-MT, at step 2020, an NCR node and/or a base station may determine if two (unified) TCI states are indicated for receptions by the NCR-MT. If two unified TCI states are not indicated for receptions by the NCR-MT, at step 2030, receptions on the backhaul link may use the QCL parameters provided by the indicated (unified) TCI state. If two (unified) TCI states are indicated for receptions by the NCR-MT, at step 2040, receptions on the backhaul link may use the QCL parameters provided by the first (unified) TCL state of the two (unified) TCI states.

In a situation where an NCR node, comprising an NCR-MT and an NCR-Fwd, does not simultaneously receive on a control link and a backhaul link, if the NCR node does not support determination of a TCI state for receptions on the backhaul link, for example, based on an indication of a TCI state by a serving cell, for receptions on the backhaul link: receptions, by the NCR node, on the backhaul link may use same QCL parameters as the ones for PDCCH receptions in a CORESET with the lowest control resource set index (e.g., *controlResourceSetId*) in/for the active downlink BWP of the control link, for example, if the NCR node does not receive an indication of a unified TCI state for receptions by the NCR-MT. Receptions on the backhaul link may use the QCL parameters provided by the first TCI state of the two activated TCI states, for example, if the CORESET with the lowest control resource set index (e.g., *controlResourceSetId*) has two activated TCI states comprising a first TCI state and a second TCI state (e.g., step 2070). Additionally or alternatively, receptions, by the NCR node, on the backhaul link may use the QCL parameters provided by an indicated unified TCI state for receptions by the NCR-MT, for example, if the NCR node receives the indication of a unified TCI state for receptions by the NCR-MT (e.g., step 2030). Receptions on the backhaul link may use the QCL parameters provided by a first indicated unified TCI state of the two unified TCI states, for example, if two unified TCI states are indicated for receptions by the NCR-MT (e.g., step 2040). In a situation where an NCR node, comprising an NCR-MT and an NCR-Fwd, does not simultaneously receive on a control link and a backhaul link, if the NCR node does not support determination of a TCI state for receptions on the backhaul link, for receptions on the backhaul link, receptions, by the NCR node, on the backhaul link may use QCL parameters provided by a TCI state in a MAC CE, for example, if the CORESET with the lowest control resource set index (e.g., *controlResourceSetId*) does not have two activated TCI states comprising a first TCI state and a second TCI state (e.g., step 2060).

In a situation where an NCR node, comprising an NCR-MT and an NCR-Fwd, does not simultaneously receive on a control link and a backhaul link, if the NCR node does not receive an indication of a TCI state, for receptions on the backhaul link: receptions, by the NCR node, on the backhaul link may use same QCL parameters as the ones for PDCCH receptions in a CORESET with the lowest control resource set index (e.g., *controlResourceSetId*) in/for the active downlink BWP of the control link, for example, if the NCR node does not receive an indication of a unified TCI state for receptions by the NCR-MT. Receptions on the backhaul link may use the QCL parameters provided by the first TCI state of the two activated TCI states, for example, if the CORESET with the lowest control resource set index (e.g., *controlResourceSetId*) has two activated TCI states comprising a first TCI state and a second TCI state (e.g., step 2070). Additionally or alternatively, receptions, by the NCR node, on the backhaul link may use the QCL parameters provided by an indicated unified TCI state for receptions by the NCR-MT, for example, if the NCR node receives the indication of a unified TCI state for receptions by the NCR-MT (e.g., step 2030). Receptions on the backhaul link may use the QCL parameters provided by a first indicated unified TCI state of the two unified TCI states, for example, if two unified TCI states are indicated for receptions by the NCR-MT (e.g., step 2040). In a situation where an NCR node, comprising an NCR-MT and an NCR-Fwd, does not simultaneously receive on a control link and a backhaul link, if the NCR node does not receive an indication of a TCI state, for receptions on the backhaul link, receptions, by the NCR node, on the backhaul link may use QCL parameters provided by a TCI state in a MAC CE, for example, if the CORESET with the lowest control resource set index (e.g., *controlResourceSetId*) does not have two activated TCI states comprising a first TCI state and a second TCI state (e.g., step 2060).

In a situation where an NCR node, comprising an NCR-MT and an NCR-Fwd, does not simultaneously send (e.g., transmit) on a control link and a backhaul link, if the NCR node does not support determination of a spatial filter for transmissions on the backhaul link, for example, based on an indication of a unified TCI state or an SRI by a serving cell, for transmissions on the backhaul link, transmissions, by the NCR node, on the backhaul link may use a same spatial filter as the one associated with a PUCCH resource with the smallest PUCCH resource ID parameter (e.g., *pucch-ResourceId*) in a PUCCH resource set parameter (e.g., *PUCCH-ResourceSet*) in/for the active uplink BWP of the control link, for example, if the NCR node does not receive an indication of a unified TCI state for transmissions by the NCR-MT. Transmissions on the backhaul link may use a same spatial filter as the one associated with a first spatial setting, among the two spatial settings, with the lowest index (e.g., lowest spatial setting index), for example, if two spatial settings from a PUCCH spatial relation information parameter (e.g., *PUCCH-SpatialRelationInfo*) are activated for the PUCCH resource with the smallest PUCCH resource ID parameter (e.g., *pucch-ResourceId*). Additionally or alternatively, transmissions, by the NCR node, on the backhaul link may use a spatial filter corresponding to an indicated unified TCI state for transmissions by the NCR-MT, for example, if the NCR node receives an indication of a unified TCI state for transmissions by the NCR-MT. Transmissions on the backhaul link may use a spatial filter corresponding a first indicated unified TCI state of the two unified TCI states, for example, if two unified TCI states are indicated for transmissions by the NCR-MT. In a situation where an NCR node, comprising an NCR-MT and an NCR-Fwd, does not simultaneously send (e.g., transmit) on a control link and a backhaul link, transmissions, by the NCR node, on the backhaul link may use a spatial filter corresponding to a unified TCI state or an SRI provided by a MAC CE, for example, if the NCR node does not receive an indication of a unified TCI state for transmissions by the NCR-MT.

In a situation where an NCR node, comprising an NCR-MT and an NCR-Fwd, does not simultaneously send (e.g., transmit) on a control link and a backhaul link, if the NCR-MT does not receive an indication of a unified TCI state or an SRI for determining a spatial filter, for transmissions on the backhaul link, transmissions, by the NCR node, on the backhaul link may use a same spatial filter as the one associated with a PUCCH resource with the smallest PUCCH resource ID parameter (e.g.,*pucch-ResourceId*) in a PUCCH resource set parameter (e.g., *PUCCH-ResourceSet)* in/for the active uplink BWP of the control link, for example, if the NCR node does not receive an indication of a unified TCI state for transmissions by the NCR-MT. Transmissions on the backhaul link may use a same spatial filter as the one associated with a first spatial setting, among the two spatial settings, with the lowest index (e.g., lowest spatial setting index), for example, if two spatial settings from a PUCCH spatial relation information parameter (e.g., *PUCCH-SpatialRelationInfo*) are activated for the PUCCH resource with the smallest PUCCH resource ID parameter (*e.g.,pucch-ResourceId)*. Additionally or alternatively, transmissions, by the NCR node, on the backhaul link may use a spatial filter corresponding to an indicated unified TCI state for transmissions by the NCR-MT, for example, if the NCR node receives an indication of a unified TCI state for transmissions by the NCR-MT. Transmissions on the backhaul link may use a spatial filter corresponding a first indicated unified TCI state of the two unified TCI states, for example, if two unified TCI states are indicated for transmissions by the NCR-MT. In a situation where an NCR node, comprising an NCR-MT and an NCR-Fwd, does not simultaneously send (e.g., transmit) on a control link and a backhaul link, transmissions, by the NCR node, on the backhaul link may use a spatial filter corresponding to a unified TCI state or an SRI provided by a MAC CE, for example, if the NCR node does not receive an indication of a unified TCI state for transmissions by the NCR-MT.

The first TCI state may be determined, for example, based on one or more criteria as described herein with respect to FIG. 19 (e.g., the first TCI state, the first TCI state with the lowest TCI state index, the first TCI state that occurs first, the first TCI state associated with the lowest octet, and the like). The first indicated unified TCI state may be determined, for example, based on one or more criteria as described herein with respect to FIG. 19 (e.g., the first TCI state, the first TCI state with the lowest TCI state index, the first TCI state that occurs first, the first TCI state associated with the lowest octet, and the like). The first spatial setting may be determined, for example, based on one or more criteria as described herein with respect to FIG. 19 (e.g., the first spatial setting, the first spatial setting with the lowest spatial setting index, the first spatial setting that occurs first, the first spatial setting associated with the lowest octet, and the like).

In a situation where an NCR node, comprising an NCR-MT and an NCR-Fwd, does not simultaneously receive on a control link and a backhaul link, if the NCR node does not support determination of a TCI state for receptions on the backhaul link, for example, based on an indication of a TCI state by a serving cell, for receptions by the NCR node on the backhaul link, a base station may use, for transmissions on the backhaul link, QCL parameters (e.g., spatial domain transmission filter/beam) that are determined based on the ones used for PDCCH transmissions in a CORESET with the lowest coreset index (e.g., *controlResourceSetId)* in/for the active downlink BWP of the control link, for example, if the base station does not send (e.g., transmit), to the NCR node, an indication of a unified TCI state for receptions by the NCR-MT. Transmissions on the backhaul link may use the QCL parameters that are determined based on the first TCI state of the two activated TCI states, for example, if the CORESET with the lowest coreset index (e.g., *controlResourceSetId*) has two activated TCI states (or is activated with two TCI states by the base station) comprising a first TCI state and a second TCI state. Additionally or alternatively, transmissions, by the base station, on the backhaul link may use the QCL parameters that are determined based on an indicated unified TCI state, by the base station, for receptions by the NCR-MT, for example, if the base station sends (e.g., transmits), to the NCR node, an indication of a unified TCI state for receptions by the NCR-MT. Transmissions on the backhaul link may use the QCL parameters that are determined based on a first indicated unified TCI state of the two unified TCI states, for example, if two unified TCI states are indicated, by the base station, for receptions by the NCR-MT. In a situation where an NCR node, comprising an NCR-MT and an NCR-Fwd, does not simultaneously receive on a control link and a backhaul link, transmissions on the backhaul link may use QCL parameters that are determined based on a TCI state in a MAC CE sent (e.g., transmitted) by the base station, for example, if the base station does not send (e.g., transmit), to the NCR node, an indication of a unified TCI state for receptions by the NCR-MT.

In a situation where an NCR node, comprising an NCR-MT and an NCR-Fwd, does not simultaneously receive on a control link and a backhaul link, if a base station does not send (e.g., transmit), to the NCR node, an indication of a TCI state, for receptions by the NCR node on the backhaul link, a base station may use, for transmissions on the backhaul link, QCL parameters (e.g., spatial domain transmission filter/beam) that are determined based on the ones used for PDCCH transmissions in a CORESET with the lowest coreset index (e.g., *controlResourceSetId)* in/for the active downlink BWP of the control link, for example, if the base station does not send (e.g., transmit), to the NCR node, an indication of a unified TCI state for receptions by the NCR-MT. Transmissions on the backhaul link may use the QCL parameters that are determined based on the first TCI state of the two activated TCI states, for example, if the CORESET with the lowest coreset index (e.g., *controlResourceSetId*) has two activated TCI states (or is activated with two TCI states by the base station) comprising a first TCI state and a second TCI state. Additionally or alternatively, transmissions, by the base station, on the backhaul link may use the QCL parameters that are determined based on an indicated unified TCI state, by the base station, for receptions by the NCR-MT, for example, if the base station sends (e.g., transmits), to the NCR node, an indication of a unified TCI state for receptions by the NCR-MT. Transmissions on the backhaul link may use the QCL parameters that are determined based on a first indicated unified TCI state of the two unified TCI states, for example, if two unified TCI states are indicated, by the base station, for receptions by the NCR-MT. In a situation where an NCR node, comprising an NCR-MT and an NCR-Fwd, does not simultaneously receive on a control link and a backhaul link, transmissions on the backhaul link may use QCL parameters that are determined based on a TCI state in a MAC CE sent (e.g., transmitted) by the base station, for example, if the base station does not send (e.g., transmit), to the NCR node, an indication of a unified TCI state for receptions by the NCR-MT.

In a situation where an NCR node, comprising an NCR-MT and an NCR-Fwd, does not simultaneously send (e.g., transmit) on a control link and a backhaul link, if the NCR node does not support determination of a spatial filter for transmissions on the backhaul link, for example, based on an indication of a unified TCI state or an SRI by a serving cell, for transmissions on the backhaul link, receptions, by the base station, on the backhaul link may use a spatial filter that is determined based on the one associated with a PUCCH resource with the smallest PUCCH resource ID parameter (e.g., *pucch-ResourceId*) in a PUCCH resource set parameter (e.g., *PUCCH-ResourceSet)* in/for the active uplink BWP of the control link, for example, if the base station does not send (e.g., transmit), to the NCR node, an indication of a unified TCI state for transmissions by the NCR-MT. Receptions on the backhaul link may use a spatial filter that is determined based on the one associated with a spatial setting, among the two spatial settings, with the lowest index (e.g., lowest spatial setting index), for example, if two spatial settings from a PUCCH spatial relation information parameter (e.g., *PUCCH-Spatial-RelationInfo*) are activated, by the base station, for the PUCCH resource with the smallest PUCCH resouce ID parameter (e.g., *pucch-ResourceId)*. Additionally or alternatively, receptions, by the base station, on the backhaul link may use a spatial filter corresponding to an indicated unified TCI state for transmissions by the NCR-MT, for example, if the base station sends (e.g., transmits), to the NCR node, an indication of a unified TCI state for transmissions by the NCR-MT. Receptions on the backhaul link may use a spatial filter corresponding the first indicated unified TCI state of the two unified TCI states, for example, if two unified TCI states are indicated, by the base station, for transmissions by the NCR-MT. In a situation where an NCR node, comprising an NCR-MT and an NCR-Fwd, does not simultaneously send (e.g., transmit) on a control link and a backhaul link, receptions on the backhaul link may use a spatial filter corresponding to a unified TCI state or an SRI provided/sent (e.g., transmitted) by a MAC CE by the base station, for example, if the base station does not send (e.g., transmit), to the NCR node, an indication of a unified TCI state for transmissions by the NCR-MT.

In a situation where an NCR node, comprising an NCR-MT and an NCR-Fwd, does not simultaneously send (e.g., transmit) on a control link and a backhaul link, if a base station does not send (e.g., transmit), to the NCR-MT, an indication of a unified TCI state or an SRI for determining a spatial filter, for transmissions on the backhaul link, receptions, by the base station, on the backhaul link may use a spatial filter that is determined based on the one associated with a PUCCH resource with the smallest PUCCH resource ID parameter (e.g., *pucch-ResourceId*) in a PUCCH resource set parameter (e.g., *PUCCH-ResourceSet)* in/for the active uplink BWP of the control link, for example, if the base station does not send (e.g., transmit), to the NCR node, an indication of a unified TCI state for transmissions by the NCR-MT. Receptions on the backhaul link may use a spatial filter that is determined based on the one associated with a spatial setting, among the two spatial settings, with the lowest index (e.g., lowest spatial setting index), for example, if two spatial settings from a PUCCH spatial relation information parameter (e.g., *PUCCH-SpatialRelationInfo*) are activated, by the base station, for the PUCCH resource with the smallest PUCCH resouce ID parameter (e.g., *pucch-ResourceId)*. Additionally or alternatively, receptions, by the base station, on the backhaul link may use a spatial filter corresponding to an indicated unified TCI state for transmissions by the NCR-MT, for example, if the base station sends (e.g., transmits), to the NCR node, an indication of a unified TCI state for transmissions by the NCR-MT. Receptions on the backhaul link may use a spatial filter corresponding the first indicated unified TCI state of the two unified TCI states, for example, if two unified TCI states are indicated, by the base station, for transmissions by the NCR-MT. In a situation where an NCR node, comprising an NCR-MT and an NCR-Fwd, does not simultaneously send (e.g., transmit) on a control link and a backhaul link, receptions on the backhaul link may use a spatial filter corresponding to a unified TCI state or an SRI provided/sent (e.g., transmitted) by a MAC CE by the base station, for example, if the base station does not send (e.g., transmit), to the NCR node, an indication of a unified TCI state for transmissions by the NCR-MT.

The first TCI state may be determined, for example, based on one or more criteria as described herein, for example, with respect to FIG. 19 (e.g., the first TCI state, the first TCI state with the lowest TCI state index, the first TCI state that occurs first, the first TCI state associated with the lowest octet, and the like). The first indicated unified TCI state may be determined, for example, based on one or more criteria described herein, for example, with respect to FIG. 19 (e.g., the first TCI state, the first TCI state with the lowest TCI state index, the first TCI state that occurs first, the first TCI state associated with the lowest octet, and the like). The first spatial setting may be determined, for example, based on one or more criteria described herein, for example, with respect to FIG. 19 (e.g., the first spatial setting, the first spatial setting with the lowest spatial setting index, the first spatial setting that occurs first, the first spatial setting associated with the lowest octet, and the like).

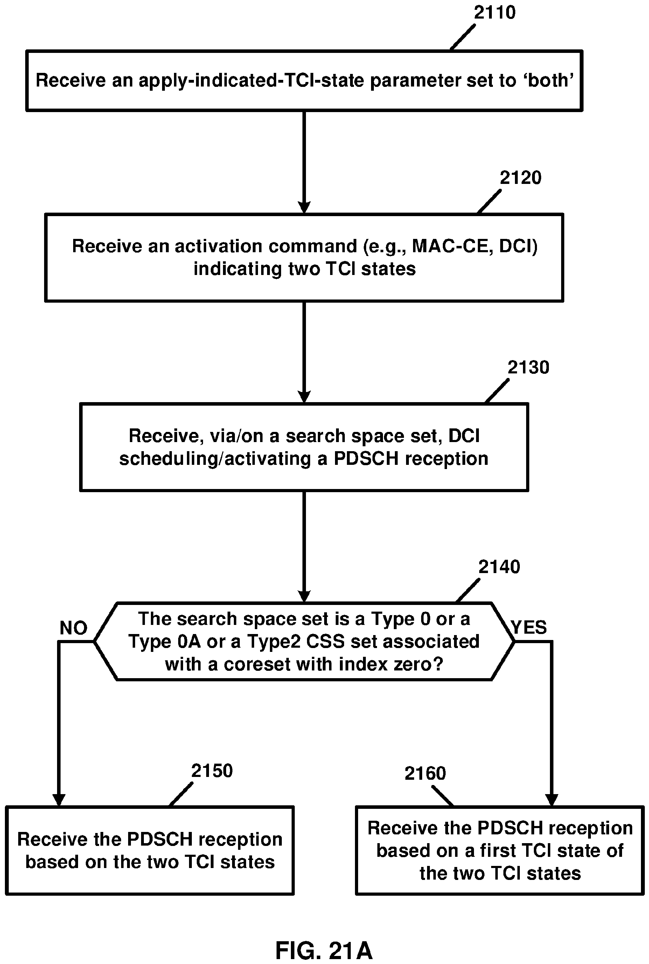

FIG. 21A shows an example method of downlink reception. One or more steps of FIG. 21A may be performed by a wireless device (e.g., the wireless device 106, 156A, 156B, 210, 1205, 1301, and/or 1705 as described herein with respect to FIGS. 1A, 1B, 2A, 2B, 12A, 12B, 13A, 13B, 13C, 17, and/or 19).

At step 2110, a wireless device may receive a parameter indicating application of a TCI state (e.g., an apply-indicated-TCI-state parameter). The parameter indicating application of a TCI state may be set to 'both'. At step 2120, the wireless device may receive an activation command (e.g., MAC-CE, DCI) indicating two TCI states. At step 2130, the wireless device may receive, via/on a search space set, a DCI scheduling/activating a PDSCH reception. At step 2140, the wireless device may determine if the search space set is a Type 0 or a Type 0A or a Type2 CSS set associated with a coreset with index zero. At step 2150, the wireless device may receive the PDSCH reception, for example, if the search space set is not a Type 0 or a Type 0A or a Type2 CSS set associated with a coreset with index zero. The wireless device may receive the PDSCH reception, for example, based on the two TCI states. At step 2160, the wireless device may receive the PDSCH reception, for example, if the search space set is a Type 0 or a Type 0A or a Type2 CSS set associated with a coreset with index zero. The wireless device may receive the PDSCH reception, for example, based on a first TCI state of the two TCI states.

A wireless device may receive, for example, from a base station, one or more messages (e.g., RRC messages, RRC reconfiguration messages) comprising one or more configuration parameters of a cell. The base station may send (e.g., transmit) the one or more messages. The one or more configuration parameters may indicate a plurality of TCI states for a downlink BWP of the cell. The one or more configuration parameter may indicate a TCI state list (e.g., provided by a higher layer (e.g., RRC) parameter *dl-OrJoint-TCIStateList*) comprising the plurality of TCI states. The downlink BWP may be, for example, an active downlink BWP of the cell.

The wireless device may receive an activation command (e.g., DCI, MAC-CE, RRC message, downlink control message, a control message, control command, and the like) indicating at least two TCI states. The plurality of TCI states may comprise the at least two TCI states. The base station may send (e.g., transmit) the activation command. The at least two TCI states may be/indicate, for example, at least two joint/downlink TCI states for receptions (e.g., PDCCH receptions, PDSCH receptions, CSI-RS) via/on/in the downlink BWP of the cell. The at least two TCI states may comprise a first TCI state and a second TCI state.

The one or more configuration parameters may indicate, for the first TCI state, a first TCI state index. The first TCI state index may indicate/identify the first TCI state. The one or more configuration parameters may indicate, for the second TCI state, a second TCI state index. The second TCI state index may indicate/identify the second TCI state. The first TCI state index may be lower/smaller than the second TCI state index.

The activation command indicating the at least two TCI states may comprise a plurality of fields. A first field of the plurality of fields may indicate the first TCI state. For example, the first field may comprise the first TCI state index indicating/identifying the first TCI state. The first field may occur/be (or be located), for example, in a first octet of the activation command. A second field of the plurality of fields may indicate the second TCI state. For example, the second field may comprise the second TCI state index indicating/identifying the second TCI state. The second field may occur/be (or be located), for example, in a second octet of the activation command. The first octet may be lower/less/smaller than the second octet. For example, the first octet may be Octet 5, and the second octet may be Octet 6. For example, the first octet may be Octet 1, and the second octet may be Octet 2. For example, the first octet may be Octet 9, and the second octet may be Octet 10. The base station may order the first TCI state index and the second TCI state index, for example, according to (or based on) an ordinal position in the activation command. For example, Octet n of the activation command may comprise the first TCI state index identifying/indicating the first TCI state, and Octet m of the activation command may comprise the second TCI state index identifying/indicating the second TCI state, where n < m.

The activation command indicating the at least two TCI states may indicate/map/activate a list/set/vector of the at least two TCI states in/to/for a TCI codepoint of one or more TCI codepoints. The activation command may indicate mapping/association/activation of the list/set/vector of the at least two TCI states to/for the TCI codepoint. The first TCI state may occur first in the list/set/vector of the at least two TCI states. The first TCI state may be a first/starting/earliest/initial TCI state in the list/set/vector of the at least two TCI states. The second TCI state may occur second in the list/set/vector of the at least two TCI states. The second TCI state may be a last/latest/ending TCI state in the list/set/vector of the at least two TCI states. For example, if the list/set/vector of the at least two TCI states equals (=) [TCI state 5, TCI state 8], the first TCI state is TCI state 5 and the second TCI state is TCI state 8. For example, if the list/set/vector of the at least two TCI states equals (=) [TCI state 26, TCI state 61], the first TCI state is TCI state 26 and the second TCI state is TCI state 61.

The first TCI state may comprise/indicate a first reference signal (e.g., CSI-RS, SSB/PBCH block, DM-RS, SRS, and the like). The first TCI state may comprise/indicate a first quasi co-location type (e.g., QCL TypeA, QCL TypeB, QCL TypeC, QCL TypeD). The second TCI state may comprise/indicate a second reference signal (e.g., CSI-RS, SSB/PBCH block, DM-RS, SRS, and the like). The second TCI state may comprise/indicate a second quasi co-location type (e.g., QCL TypeA, QCL TypeB, QCL TypeC, QCL TypeD).

The wireless device may receive, via a coreset, DCI scheduling a PDSCH reception. The base station may send (e.g., transmit), via the coreset, the DCI scheduling the PDSCH reception. The DCI may schedule the PDSCH reception, for example, based on the DCI comprising one or more fields used to receive the PDSCH reception. The one or more fields may comprise at least one of: a TDRA field, FDRA field, MCS field, HARQ process field, RV field, and the like. The DCI may activate the PDSCH reception. The DCI may activate an SPS configuration. The PDSCH reception may be, for example, for the SPS configuration. The DCI may be, for example, a DCI format 1_0 (e.g., fallback DCI).

The one or more configuration paramers may indicate, for the coreset, a coreset index. The coreset index may be, for example, equal to zero (e.g., CORESET 0, indicated by a higher layer parameter *controlResourceSetZero)*. The coreset index may be, for example, different from zero.

A search space set may be associated with (or linked to) the coreset. The one or more configuration parameters may indicate the coreset (or a coreset index of the coreset) for the search space set (e.g., provided by a higher layer parameter *controlResourceSetId* in the higher layer parameter *SearchSpace)*. The association (or the linkage) may be one-to-one. The association being one-to-one may comprise the search space set associated with (or linked to) the coreset not being associated (or linked to) a second coreset that is different from the coreset.

The one or more configuration parameters may indicate, for the search space set, the coreset index of the coreset. The one or more configuration parameters may indicate the coreset index of the coreset in a coreset index field (e.g., provided by a higher layer parameter *controlResourceSetId* in the higher layer parameter *SearchSpace*) of the search space set. The search space set may be associated with (or linked to) the coreset, for example, based on the one or more configuration parameters indicating the coreset index of the coreset for the search space set.

The wireless device may monitor, for the DCI, a PDCCH reception in/via the coreset. The wireless device may monitor, for the DCI, a PDCCH candidate in a PDCCH monitoring occasion for/of (or associated with) the search space set associated with (or linked to) the coreset. The wireless device may monitor, for the DCI, the PDCCH candidate in the PDCCH monitoring occasion for/of the search space set in the coreset, for example, based on the search space set being associated with (or linked to) the coreset. The wireless device may monitor, for the DCI, the PDCCH reception for the search space set in the coreset, for example, based on the search space set being associated with (or linked to) the coreset.

The wireless device may receive, via the coreset, the DCI scheduling the PDSCH reception. The wireless device may receive, in/via the PDCCH monitoring occasion of the search space set associated with the coreset, the DCI. The wireless device may receive, in/via/on the search space set associated with the coreset, the DCI. The wireless device may receive, via the coreset, the PDCCH reception with/comprising the DCI. The PDCCH reception with the DCI may include/comprise the PDCCH candidate from the search space set associated with the coreset.

The cell (or the wireless device) may operate in a frequency range. The cell (or the wireless device) may operate, for example, in a first frequency range (FR1). The FR1 may, for example, comprise frequency bands below 6 GHz.

A time offset between reception of the DCI and the PDSCH reception may be, for example, less than a threshold (e.g., *timeDurationForQCL)*. The time offset between a last symbol of the PDCCH monitoring occasion that the wireless device receives the DCI and a starting/first symbol of the PDSCH reception may be less than the threshold. A time offset between reception of the DCI and the PDSCH reception may be, for example, equal to or greater/larger than a threshold (e.g., *timeDurationForQCL)*. The time offset between a last symbol of the PDCCH monitoring occasion that the wireless device receives the DCI and a starting/first symbol of the PDSCH reception may be equal to or greater/larger than the threshold. The time offset between reception of the DCI and the PDSCH reception may be less than or equal to or greater than than the threshold, for example, in the first frequency range (FR1).

The cell (or the wireless device) may operate, for example, in a second frequency range (FR2). The FR2 may, for example, comprise frequency bands from 24 GHz to 52.6 GHz.

The wireless device may send (e.g., transmit)/report a user equipment (UE) capability message indicating/reporting capability/support of two default beams in the second frequency range (FR2). The wireless device may send (e.g., transmit)/report the wireless device capability message (e.g., UE capability message) indicating/reporting capability/support of applying/using two default beams for PDSCH receptions in the second frequency range (FR2).

The wireless device may not send (e.g., transmit)/report a wireless device capability message (e.g., UE capability message) indicating/reporting capability/support of two default beams in the second frequency range (FR2). The wireless device may not send (e.g., transmit)/report a wireless device capability message (e.g., UE capability message) indicating/reporting capability/support of applying/using two default beams for PDSCH receptions in the second frequency range (FR2). A time offset between reception of the DCI and the PDSCH reception may be, for example, equal to or greater/larger than a threshold (e.g., *timeDurationForQCL)*. The time offset between a last symbol of the PDCCH monitoring occasion that the wireless device receives the DCI and a starting/first symbol of the PDSCH reception may be equal to or greater/larger than the threshold.

The one or more configuration parameters may comprise a parameter indicating application of a TCI state. The one or more configuration parameters may comprise, for example, an apply-indicated-TCI-state parameter (e.g., *applyIndicatedTCIState*) indicating whether to apply the first TCI state, or the second TCI state, or both of the at least two TCI states to PDSCH receptions scheduled/activated by DCI format 1_0. The apply-indicated-TCI-state parameter set to 'first' may indicate the first TCI state for the PDSCH receptions. The apply-indicated-TCI-state parameter set to 'first' may indicate the PDSCH receptions are based on the first TCI state. The apply-indicated-TCI-state parameter set to 'first' may indicate the PDSCH receptions are not based on the second TCI state. For example, the apply-indicated-TCI-state parameter set to 'second' may indicate the second TCI state for the PDSCH receptions. The apply-indicated-TCI-state parameter set to 'second' may indicate the PDSCH receptions are based on the second TCI state. The apply-indicated-TCI-state parameter set to 'second' may indicate the PDSCH receptions are not based on the first TCI state. For example, the apply-indicated-TCI-state parameter set to 'both' may indicate the first TCI state and the second TCI state for the PDSCH receptions. The apply-indicated-TCI-state parameter set to 'both' may indicate the PDSCH receptions are based on both the first TCI state and the second TCI state.

The apply-indicated-TCI-state parameter may be set to 'both', for example, based on the one or more configuration parameters comprising a coherent-joint-transmission (CJT) scheme parameter (e.g., *cjtSchemePDSCH*) indicating/enabling a CJT scheme for PDSCH receptions. The apply-indicated-TCI-state parameter may be set to 'both', for example, based on the wireless device sending (e.g., transmitting)/reporting a wireless device capability message (e.g., UE capability message) indicating support of/for two joint TCI states for PDSCH receptions of/for the CJT scheme. The apply-indicated-TCI-state parameter may be set to 'both', for example, based on the one or more configuration parameters comprising the CJT scheme parameter (e.g., *cjtSchemePDSCH*) and the wireless device sending (e.g., transmitting)/reporting the wireless device capability message (e.g., UE capability message) indicating support of/for two joint TCI states for PDSCH receptions of/for the CJT scheme.

The one or more configuration parameters may comprise a single-frequency network (SFN) scheme parameter (e.g., *sfnSchemePdsch*) indicating an SFN scheme for downlink shared channels. The apply-indicated-TCI-state parameter may be set to 'both', for example, based on the one or more configuration parameters comprising the SFN scheme parameter (e.g., *sfnSchemePdsch*).

The coreset index of the coreset may be different from zero. A second coreset index of a second coreset may be equal to zero (e.g., CORESET 0, indicated by a higher layer parameter *controlResourceSetZero*). The second coreset and the coreset may be different.

The search space set may be different from a common search space set. The search space set may be different from a common search space set such as TypeO-PDCCH CSS set (configured by *pdcch-ConfigSIB1* in *MIB* or by *searchSpaceSIB1* in *PDCCH-ConfigCommon* or by *searchSpaceZero* in *PDCCH-ConfigCommon*). The search space set may be different from a common search space set such as TypeOA-PDCCH CSS set (configured by *seαrchSpαceOther-SystemInformαtion* in *PDCCH-ConfigCommon*). The search space set may be different from a common search space set such as Type2-PDCCH CSS set (configured by *pagingSearchSpace* in *PDCCH-ConfigCommon*). The search space set may be different from a common search space set such as TypeO-PDCCH CSS set of the second coreset with the second coreset index that is equal to zero. The search space set may be different from a common search space set such as TypeOA-PDCCH CSS set (configured by *seαrchSpαceOtherSystemInformαtion* in *PDCCH-ConfigCommon*) of the second coreset with the second coreset index that is equal to zero. The search space set may be different from a common search space set such as Type2-PDCCH CSS set (configured by *pagingSearchSpace* in *PDCCH-ConfigCommon*) of the second coreset with the second coreset index that is equal to zero. The search space set may be a user specific search space (USS) set.

The search space set may be a common search space set such as Type1-PDCCH CSS set (configured by *ra-SearchSpace* in *PDCCH-ConfigCommon*). The wireless device may monitor, for a DCI format with CRC scrambled by a RA-RNTI, MsgB-RNTI, or a TC-RNTI, PDCCH transmissions/receptions in the Type1-PDCCH CSS set.

The search space set may be a common search space set such as Type3-PDCCH CSS set (configured by *SearchSpace* in *PDCCH-Config* with *searchSpaceType = common*). The wireless device may monitor, for a DCI format with CRC scrambled by an RNTI, PDCCH transmissions/receptions in the Type3-PDCCH CSS set. The RNTI may be, for example, INT-RNTI, SFI-RNTI, TPC-PUSCH-RNTI, TPC-PUCCH-RNTI, TPC-SRS-RNTI, or CI-RNTI. The RNTI may be, for example, C-RNTI, MCS-C-RNTI, CS-RNTI(s), orPS-RNTI. The RNTI may be C-RNTI, MCS-C-RNTI, CS-RNTI(s), or PS-RNTI, for example, if the cell is a primary cell.

The wireless device may receive the PDSCH reception. The wireless device may receive, via the downlink BWP of the cell, the PDSCH reception.

The wireless device may receive the PDSCH reception, for example, based on the at least two TCI states. The wireless device may receive the PDSCH reception, for example, based on each TCI state of the at least two TCI states. The wireless device may receive the PDSCH reception, for example, based on both the first TCI state and the second TCI state. The wireless device may receive the PDSCH reception based on the at least two TCI states, for example, based on (e.g., in response to) the one or more configuration parameters comprising the apply-indicated-TCI-state parameter set to 'both'. The wireless device may receive the PDSCH reception based on the at least two TCI states, for example, based on (e.g., in response to) the coreset index of the coreset being different from zero. The wireless device may receive the PDSCH reception based on the at least two TCI states, for example, based on (e.g., in response to) the search space set being different from a TypeO-PDCCH CSS set, a TypeOA-PDCCH CSS set, and a Type2-PDCCH CSS set. The wireless device may receive the PDSCH reception based on the at least two TCI states, for example, based on (e.g., in response to) the search space set being different from the TypeO-PDCCH CSS set of the second coreset with the second coreset index equal to zero, the TypeOA-PDCCH CSS set of the second coreset with the second coreset index equal to zero, and the Type2-PDCCH CSS set of the second coreset with the second coreset index equal to zero.

At least one antenna port of the PDSCH reception may be quasi co-located with a reference signal indicated by a TCI state of the at least two TCI states. For example, at least one first DM-RS antenna port of the PDSCH reception may be quasi co-located with the first reference signal indicated by the first TCI state of the at least two TCI states. The at least one first DM-RS antenna port of the PDSCH reception may be quasi co-located with the first reference signal with respect to the first quasi co-location type indicated by the first TCI state. At least one second DM-RS antenna port of the PDSCH reception may be quasi co-located with the second reference signal indicated by the second TCI state of the at least two TCI states. The at least one second DM-RS antenna port of the PDSCH reception may be quasi co-located with the second reference signal with respect to the second quasi co-location type indicated by the second TCI state.

The at least one first DM-RS antenna port and the at least one second DM-RS antenna port may be, for example, different. The at least one first DM-RS antenna port and the at least one second DM-RS antenna port may be, for example, the same.

At least one DM-RS antenna port of the PDSCH reception may be quasi co-located with both the first reference signal indicated by the first TCI state of the at least two TCI states and the second reference signal indicated by the second TCI state of the at least two TCI states. For example, each DM-RS antenna port of the PDSCH reception may be quasi co-located with both the first reference signal indicated by the first TCI state of the at least two TCI states and the second reference signal indicated by the second TCI state of the at least two TCI states.

The coreset index of the coreset may be equal to zero (e.g., CORESET 0, indicated by a higher layer parameter *controlResourceSetZero)*. The search space set may be a TypeO-PDCCH CSS set (configured by *pdcch-ConfigSIBI* in *MIB* or by *seαrchSpαceSIBI* in *PDCCH-ConfigCommon* or by *searchSpaceZero* in *PDCCH-ConfigCommon)*. The wireless device may monitor, for a DCI format with CRC scrambled by a SI-RNTI, PDCCH transmissions/receptions in the TypeO-PDCCH CSS set. The search space set may be a Type0A-PDCCH CSS set (configured by *seαrchSpαceOtherSystemInformαtion* in *PDCCH-ConfigCommon)*. The wireless device may monitor, for a DCI format with CRC scrambled by a SI-RNTI, PDCCH transmissions/receptions in the TypeOA-PDCCH CSS set. The search space set may be a Type2-PDCCH CSS set (configured by *pagingSearchSpace* in *PDCCH-ConfigCommon)*. The wireless device may monitor, for a DCI format with CRC scrambled by a P-RNTI, PDCCH transmissions/receptions in the Type2-PDCCH CSS set.

The search space set may be different from a user specific search space (USS) set. The search space set may be different from a Type 1-PDCCH CSS set (configured by *ra-SearchSpace* in *PDCCH-ConfigCommon)*. The search space set may be different from a Type3-PDCCH CSS set (configured by *SearchSpace* in *PDCCH-Config* with *searchSpace-Type = common)*.

The wireless device may receive the PDSCH reception. The wireless device may receive, via the downlink BWP of the cell, the PDSCH reception. The wireless device may receive the PDSCH reception, for example, based on the first TCI state of the at least two TCI states. The one or more configuration parameters may comprise the apply-indicated-TCI-state parameter set to 'both'. The wireless device may receive the PDSCH reception based on the first TCI state of the at least two TCI states, for example, based on (e.g., in response to) the coreset index of the coreset being equal to zero. The wireless device may receive the PDSCH reception based on the first TCI state of the at least two TCI states, for example, based on (e.g., in response to) the search space set being at least one of: a TypeO-PDCCH CSS set, a TypeOA-PDCCH CSS set, and a Type2-PDCCH CSS set. The wireless device may receive the PDSCH reception based on the first TCI state of the at least two TCI states, for example, based on (e.g., in response to) the search space set being a Type0-PDCCH CSS set, a TypeOA-PDCCH CSS set, or a Type2-PDCCH CSS set. The wireless device may receive the PDSCH reception based on the first TCI state of the at least two TCI states, for example, based on (e.g., in response to) the search space set being the Type0-PDCCH CSS set of the coreset with the coreset index equal to zero, the TypeOA-PDCCH CSS set of the coreset with the coreset index equal to zero, or the Type2-PDCCH CSS set of the coreset with the coreset index equal to zero. The wireless device may receive the PDSCH reception based on the first TCI state of the at least two TCI states, for example, based on (e.g., in response to) the search space set being at least one of: the Type0-PDCCH CSS set of the coreset with the coreset index equal to zero, the TypeOA-PDCCH CSS set of the coreset with the coreset index equal to zero, and the Type2-PDCCH CSS set of the coreset with the coreset index equal to zero. The one or more configuration parameters may comprise the apply-indicated-TCI-state parameter set to 'both'. The wireless device may receive the PDSCH reception based on the first TCI state of the at least two TCI states, for example, based on (e.g., in response to) the first TCI state index of the first TCI state being lower/smaller than the second TCI state index of the second TCI state. The wireless device may receive the PDSCH reception based on the first TCI state of the at least two TCI states, for example, based on (e.g., in response to) the first octet comprising/indicating the first TCI state index of the first TCI state being lower/less/smaller than the second octet comprising/indicating the second TCI state index of the second TCI state. The wireless device may receive the PDSCH reception based on the first TCI state of the at least two TCI states, for example, based on (e.g., in response to) the first TCI state index of the first TCI state having a higher ordinal position (e.g., lower octet in the activation command) than the second TCI state index of the second TCI state. The wireless device may receive the PDSCH reception based on the first TCI state of the at least two TCI states, for example, based on (e.g., in response to) the first TCI state occurring first in the list/set/vector of the at least two TCI states in the activation command indicating the at least two TCI states.

At least one antenna port of the PDSCH reception may be quasi co-located with a reference signal indicated by a TCI state of the at least two TCI states. For example, at least one DM-RS antenna port of the PDSCH reception may be quasi co-located with the first reference signal indicated by the first TCI state of the at least two TCI states. The at least one DM-RS antenna port of the PDSCH reception may be quasi co-located with the first reference signal with respect to the first quasi co-location type indicated by the first TCI state. For example, each DM-RS antenna port of the PDSCH reception may be quasi co-located with the first reference signal indicated by the first TCI state of the at least two TCI states. For example, at least one DM-RS antenna port of the PDSCH reception may not be quasi co-located with the second reference signal indicated by the second TCI state of the at least two TCI states.

In a situation where a wireless device is configured with a downlink-or-joint-TCI-state-list parameter (e.g., *dl-OrJointTCI-StateList*) and is having two indicated TCI states comprising a first indicated TCI state and a second indicated TCI state, the wireless device may be configured by a higher layer parameter such as an apply-indicated-TCI state parameter (e.g., *applyIndicatedTCIState*) to indicate whether the first indicated TCI, the second indicated TCI, or both of the two indicated TCI states is/are applied/used, by the wireless device, to/for a PDSCH reception scheduled or activated by the DCI format 1_0, for example, regardless of a time offset between reception of a DCI format 1_0/1_1/1_2 and a PDSCH reception scheduled/activated by the DCI format 1_0/1_1/1_2, if the wireless device is in frequency range 1, or the wireless device reports its capability of two default beams in frequency range 2.In a situation where a wireless device is configured with a downlink-or-joint-TCI-state-list parameter (e.g., *dl-OrJointTCI-StateList)* and is having two indicated TCI states comprising a first indicated TCI state and a second indicated TCI state, the wireless device may be configured by a higher layer parameter such as an apply-indicated-TCI state parameter (e.g., *applyIndicatedTCIState*) to indicate whether the first indicated TCI, the second indicated TCI, or both of the two indicated TCI states is/are applied/used, by the wireless device, to/for a PDSCH reception scheduled or activated by the DCI format 1_0, for example, if the wireless device does not report its capability of two default beams in frequency range 2 and if the time offset between the reception of the DCI format 1_0/1_1/1_2 and the scheduled/activated PDSCH reception is equal to or larger than a threshold (e.g., *timeDurationForQCL*).

The wireless device may be configured with an apply-indicated-TCI state parameter (e.g., *applyIndicatedTCIState*) with value 'both', for example, if the wireless device is configured with a coherent-joint-transmission (CJT) scheme parameter (e.g., *cjtSchemePDSCH)* and the wireless device reports support for two joint TCI states for PDSCH-CJT or the wireless device is configured with an SFN scheme parameter for downlink shared channels (e.g., *sfnSchemePdsch*). The wireless device may apply/use both of the two indicated TCI states to/for the PDSCH reception scheduled or activated by the DCI format 1_0 on a search space set other than Type0/0A/2 CSS on (or associated with) a coreset with index zero (CORESET#0), or the wireless device may apply/use the first indicated TCI state to/for the PDSCH reception scheduled or activated by the DCI format 1_0 on a Type0/0A/2 CSS on (or associated with) a coreset with index zero (CORESET#0). The first indicated TCI state may be applied/used, by the wireless device, to/for the PDSCH reception scheduled or activated by the DCI format 1_0, for example, if the wireless device is not configured with an apply-indicated-TCI state parameter (e.g., $\alpha$*pplyIndic$\alpha$tedTCISt$\alpha$te).*

A wireless device may receive one or more messages comprising one or more configuration parameters. The one or more configuration parameters may comprise a downlink-or-joint-TCI-state-list parameter (e.g., *dl-OrJointTCI StateList)* indicating a TCI state list. The wireless device may receive an activation command (e.g., DCI, MAC-CE) indicating two TCI states comprising a first TCI state and a second TCI state. The wireless device may receive a DCI format 1_0 scheduling/activating a PDSCH reception. The one or more configuration parameters may comprise an apply-indicated-TCI state parameter (e.g., *applyIndicatedTCIState*) that indicates whether the first indicated TCI, the second indicated TCI, or both of the two indicated TCI states is/are applied/used, by the wireless device, to/for the PDSCH reception scheduled or activated by the DCI format 1_0, for example, regardless of a time offset between reception of the DCI format 1_0 and the scheduled/activated PDSCH reception, if the wireless device is in frequency range 1, or the wireless device reports its capability of two default beams in frequency range 2. The one or more configuration parameters may comprise an apply-indicated-TCI state parameter (e.g., *applyIndicatedTCIState*) that indicates whether the first indicated TCI, the second indicated TCI, or both of the two indicated TCI states is/are applied/used, by the wireless device, to/for the PDSCH reception scheduled or activated by the DCI format 1_0, for example, if the wireless device does not report its capability of two default beams in frequency range 2 and if a time offset between the reception of the DCI format 1_0 and the scheduled/activated PDSCH reception is equal to or larger than a threshold (e.g., *timeDurationForQCL*).

A value of the apply-indicated-TCI state parameter may be (set to) 'both', for example, if the one or more configuration parameters comprise a coherent-joint-transmission (CJT) scheme parameter (e.g., *cjtSchemePDSCH*) and the wireless device reports support for two joint TCI states for PDSCH receptions of/for a CJT scheme or the one or more configuration parameters may comprise an SFN scheme parameter for downlink shared channels (e.g., *sfnSchemePdsch*). The wireless device may apply/use both of the two indicated TCI states to/for the PDSCH reception scheduled or activated by the DCI format 1_0 on a search space set other than Type0/0A/2 CSS on (or associated with) a coreset with index zero (CORESET#0), or the wireless device may apply/use the first indicated TCI state to/for the PDSCH reception scheduled or activated by the DCI format 1_0 on a Type0/0A/2 CSS on (or associated with) a coreset with index zero (CORESET#0). The first indicated TCI state may be applied/used, by the wireless device, to/for the PDSCH reception scheduled or activated by the DCI format 1_0, for example, if the one or more configuration parameters do not comprise an apply-indicated-TCI state parameter (e.g., $applyIndicatedTCIState$).

A base station may send (e.g., transmit), to a wireless device, one or more messages comprising one or more configuration parameters. The one or more configuration parameters may comprise a downlink-or-joint-TCI-state-list parameter (e.g., *dl-OrJointTCI StateList)* indicating a TCI state list. The base station may send (e.g., transmit), to the wireless device, an activation command (e.g., DCI, MAC-CE) indicating two TCI states comprising a first TCI state and a second TCI state. The base station may send (e.g., transmit), to the wireless device, a DCI format 1_0 scheduling/activating a PDSCH transmission.

The one or more configuration parameters may comprise an apply-indicated-TCI state parameter (e.g., *applyIndicatedTCIState*) that indicates whether the first indicated TCI, the second indicated TCI, or both of the two indicated TCI states is/are applied/used, by the base station, to/for the PDSCH transmission scheduled or activated by the DCI format 1_0, for example, regardless of a time offset between transmission of the DCI format 1_0 and the scheduled/activated PDSCH transmission, if the wireless device is in frequency range 1, or the base station receives, from the wireless device, a report indicating wireless device (e.g., UE) capability of two default beams in frequency range 2, or if the base station does not receive, from the wireless device, a report indicating UE capability of two default beams in frequency range 2 and if a time offset between the transmission of the DCI format 1_0 and the scheduled/activated PDSCH transmission is equal to or larger than a threshold (e.g., *timeDurationForQCL*). A value of the apply-indicated-TCI state parameter may be (set to) 'both', for example, if the one or more configuration parameters comprise a coherent-joint-transmission (CJT) scheme parameter (e.g., *cjtSchemePDSCH*) and the base station receives, from the wireless device, a report indicating support for two joint TCI states for PDSCH transmissions of/for a CJT scheme or the one or more configuration parameters may comprise an SFN scheme parameter for downlink shared channels (e.g., *sfnSchemePdsch)*. The base station may apply/use both of the two indicated TCI states to/for the PDSCH transmission scheduled or activated by the DCI format 1_0 on a search space set other than Type0/0A/2 CSS on (or associated with) a coreset with index zero (CORESET#0), or the base station may apply/use the first indicated TCI state to/for the PDSCH transmission scheduled or activated by the DCI format 1_0 on a Type0/0A/2 CSS on (or associated with) a coreset with index zero (CORESET#0). The first indicated TCI state may be applied/used, by the base station, to/for the PDSCH transmission scheduled or activated by the DCI format 1_0, for example, if the one or more configuration parameters do not comprise an apply-indicated-TCI state parameter (e.g., $applyIndicatedTCIState)$.

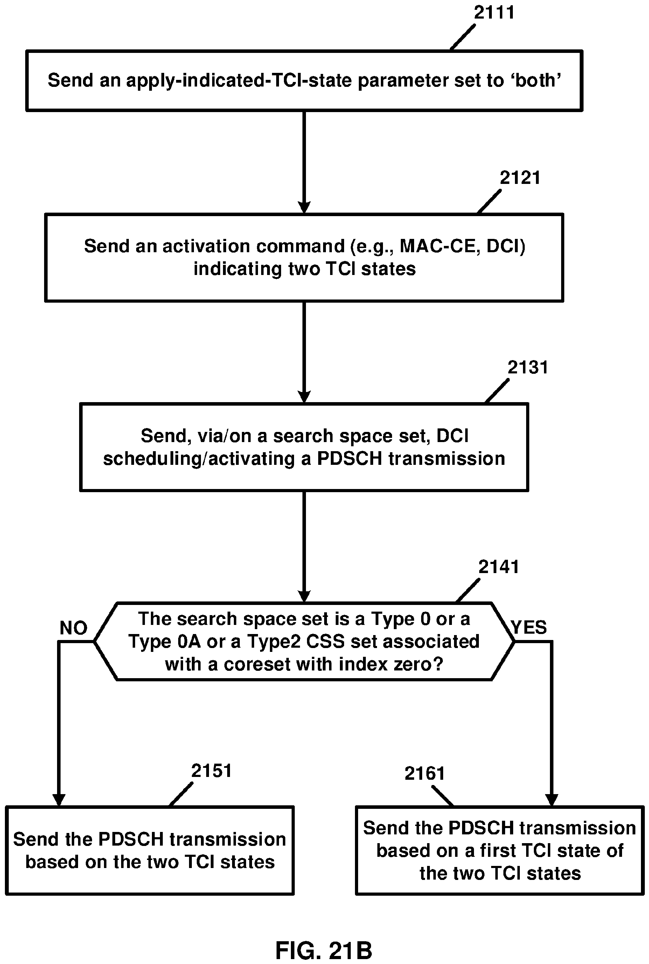

FIG. 21B shows an example method of downlink transmission. One or more steps of FIG. 21B may be performed by a base station (e.g., the base station 160A, 160B, 162A, 162B, 220, 1210, 1302, 1710, and/or 1910 as described herein with respect to FIGS. 1A, 1B, 2A, 2B, 12A, 12B, 13A, 13B, 13C, 17, and/or 19).

At step 2111, a base station may send a parameter indicating application of a TCI state (e.g., an apply-indicated-TCI-state parameter). The parameter indicating application of a TCI state may be set to 'both'. At step 2121, the base station may send an activation command (e.g., MAC-CE, DCI) indicating two TCI states. At step 2131, the base station may send, via/on a search space set, a DCI scheduling/activating a PDSCH transmission. At step 2141, the base station may determine if the search space set is a Type 0 or a Type 0A or a Type2 CSS set associated with a coreset with index zero. At step 2151, the base station may send the PDSCH transmission, for example, if the search space set is not a Type 0 or a Type 0A or a Type2 CSS set associated with a coreset with index zero. The base station may send the PDSCH transmission, for example, based on the two TCI states. At step 2161, the base station may send the PDSCH transmission, for example, if the search space set is a Type 0 or a Type 0A or a Type2 CSS set associated with a coreset with index zero. The base station may send the PDSCH transmission, for example, based on a first TCI state of the two TCI states.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a wireless device, one or more configuration parameters comprising a parameter indicating application of a transmission configuration indication (TCI) state set to a value, wherein the value of the parameter indicates to apply at least two indicated TCI states to a physical downlink shared channel (PDSCH) reception scheduled by a downlink control information (DCI) format configured to be received via a search space set.

Clause 2. The method of clause 1, further comprising: based on whether the search space set is different from a common search space set associated with a control resource set with index zero, receiving the PDSCH reception, using one or more of the at least two indicated TCI states.

Clause 3. The method of clause 1 or clause 2, further comprising: based on a network controlled repeater (NCR) receiving a control command activating at least two TCI states for a control resource set with a lowest control resource set index and not receiving an indication of a TCI state for a reception on a backhaul link of the NCR, receiving, from the NCR and using a first TCI state of the at least two TCI states, a data transmission.

Clause 4. The method of any one of clauses 1 to 3, wherein the parameter indicating application of a TCI state comprises an apply-indicated-TCI-state parameter.

Clause 5. The method of any one of clauses 1 to 4, wherein the configuration parameters comprise radio resource control parameters.

Clause 6. The method of any one of clauses 1 to 5, further comprising: receiving, via the search space set, the DCI format scheduling the PDSCH reception, wherein the DCI format is a DCI format 1_0.

Clause 7. The method of any one of clauses 1 to 6, further comprising: receiving a control command indicating the at least two indicated TCI states, wherein the control command comprises: a medium access control (MAC) control element (CE); or DCI.

Clause 8. The method of any one of clauses 1 to 7, wherein the receiving the PDSCH reception further comprises: based on the search space set being the common search space set associated with the control resource set with index zero, receiving the PDSCH reception, using one of the at least two indicated TCI states.

Clause 9. The method of any one of clauses 1 to 8, wherein the receiving the PDSCH reception further comprises: based on the search space set being different from the common search space set associated with the control resource set with index zero, receiving the PDSCH reception using the at least two indicated TCI states.

Clause 10. The method of any one of clauses 1 to 9, wherein the one of the at least two indicated TCI states corresponds to: a TCI state with a lowest TCI state index for the PDSCH reception; a TCI state that occurs first in a set of the at least two indicated TCI states; or a TCI state that occurs in a lower octet in a control command indicating the at least two indicated TCI states.

Clause 11. The method of any one of clauses 1 to 10, wherein the one of the at least two indicated TCI states is a first TCI state, and wherein at least one antenna port of the PDSCH reception is quasi co-located with a reference signal indicated by the first TCI state.

Clause 12. A computing device comprising: one or more processors; and memory storing instructions that, when executed by the one or more processors, cause the computing device to perform the method of any one of clauses 1 to 11.

Clause 13. A system comprising: a wireless device configured to perform the method of any one of clauses 1 to 11; and a base station configured to send the one or more configuration parameters.

Clause 14. A computer-readable medium storing instructions that, when executed, cause performance of the method of any one of clauses 1 to 11.

Clause 15. A method comprising: sending, by a base station, one or more configuration parameters comprising a parameter indicating application of a transmission configuration indication (TCI) state set to a value, wherein the value of the parameter indicates to apply at least two indicated TCI states to a physical downlink shared channel (PDSCH) transmission scheduled by a downlink control information (DCI) format configured to be received via a search space set.

Clause 16. The method of clause 15, further comprising: based on whether the search space set is different from a common search space set associated with a control resource set with index zero, sending the PDSCH transmission, using one or more of the at least two indicated TCI states.

Clause 17. The method of clause 15 or clause 16, further comprising: sending, to a network controlled repeater (NCR), a control command activating at least two TCI states for a control resource set with a lowest control resource set index; and based on not sending, to the NCR, an indication of a TCI state for a transmission on a backhaul link of the NCR, sending, to the NCR and using a first TCI state of the at least two TCI states, a data transmission.

Clause 18. The method of any one of clauses 15 to 17, further comprising: sending, via the search space set, the DCI format scheduling the PDSCH transmission, and wherein the DCI format is a DCI format 1_0.

Clause 19. The method of any one of clauses 15 to 18, further comprising sending a control command indicating the at least two indicated TCI states, and wherein the control command comprises: a medium access control (MAC) control element (CE); or DCI.

Clause 20. The method of any one of clauses 15 to 19, wherein the sending the PDSCH transmission further comprises: based on the search space set being the common search space set associated with the control resource set with index zero, sending the PDSCH transmission using one of the at least two indicated TCI states.

Clause 21. The method of any one of clauses 15 to 20, wherein the sending the PDSCH transmission further comprises: based on the search space set being different from the common search space set associated with the control resource set with index zero, sending the PDSCH transmission using the at least two indicated TCI states.

Clause 22. A computing device comprising: one or more processors; and memory storing instructions that, when executed by the one or more processors, cause the computing device to perform the method of any one of clauses 15 to 21.

Clause 23. A system comprising: a base station configured to perform the method of any one of clauses 15 to 21;

and a wireless device configured to receive the one or more configuration parameters.

Clause 24. A computer-readable medium storing instructions that, when executed, cause performance of the method of any one of clauses 15 to 21.

Clause 25. A system comprising: a base station configured to send a control command and a data transmission, wherein the control command activates at least two transmission configuration indication (TCI) states for a control resource set with a lowest control resource set index.

Clause 26. The system of clause 25, further comprising a network controlled repeater (NCR) configured to: receive the control command; based on not receiving an indication of a TCI state for a reception on a backhaul link of the NCR, receive the data transmission, using a first TCI state of the at least two TCI states; and send the data transmission.

Clause 27. The system of clause 25 or clause 26, further comprising a wireless device configured to receive the data transmission.

Clause 28. The system of any one of clauses 25 to 27, further comprising: receiving, by the wireless device, one or more configuration parameters comprising a parameter indicating application of a TCI state set to a value, wherein the value of the parameter indicates to apply at least two indicated TCI states to a reception scheduled via a search space set; and based on whether the search space set is different from a common search space set associated with a control resource set with index zero, receiving the reception, using one or more of the at least two indicated TCI states.

Clause 29. The system of any one of clauses 25 to 28, wherein the first TCI state corresponds to: a TCI state with a lowest TCI state index for the data transmission; a TCI state that occurs first among the at least two TCI states; or a TCI state that occurs in a lower octet in the control command.

Clause 30. The system of any one of clauses 25 to 29, wherein the control command is a medium-access control (MAC) control element (CE).

Clause 31. A method comprising: receiving, by a network controlled repeater (NCR), a control command activating at least two transmission configuration indication (TCI) states for a control resource set with a lowest control resource set index.

Clause 32. The method of clause 31, further comprising: based on not receiving an indication of a TCI state for a reception on a backhaul link of the NCR, using a first TCI state of the at least two TCI states for the reception.

Clause 33. The method of clause 31 or clause 32, wherein the first TCI state corresponds to: with a lowest TCI state index for the reception; occurs first among the at least two TCI states; or occurs in a lower octet in the control command.

Clause 34. The method of any one of clauses 31 to 33, wherein the control command is a medium-access control (MAC) control element (CE).

Clause 35. A computing device comprising: one or more processors; and memory storing instructions that, when executed by the one or more processors, cause the computing device to perform the method of any one of clauses 31 to 34.

Clause 36. A system comprising: a network controlled repeater (NCR) configured to perform the method of any one of clauses 31 to 34; and a base station configured to send a control command.

Clause 37. A computer-readable medium storing instructions that, when executed, cause performance of the method of any one of clauses 31 to 34.

Clause 38. A method comprising: receiving, by a wireless device, one or more radio resource control (RRC) messages comprising an apply-indicated-transmission configuration indication (TCI) state parameter set to a value, wherein the value of the apply-indicated-TCI state parameter indicates to apply both of two indicated TCI states to physical downlink shared channel (PDSCH) receptions scheduled by a downlink control information (DCI) format.

Clause 39. The method of clause 38, further comprising: receiving a control command indicating two TCI states.

Clause 40. The method of clause 38 or clause 39, further comprising: receiving, via a search space set, the DCI format scheduling a PDSCH reception.

Clause 41. The method of any one of clauses 38 to 40, further comprising: receiving the PDSCH reception using the two TCI states based on: the search space set being different from a common search space set associated with a coreset with index zero; and the value of the apply-indicated-TCI state parameter indicating to apply both of two indicated TCI states.

Clause 42. The method of any one of clauses 38 to 41, further comprising: receiving the PDSCH reception using one of the two TCI states in response to the search space set being a common search space set associated with a coreset with index zero.

Clause 43. The method of any one of clauses 38 to 42, wherein the DCI format is a DCI format 1_0.

Clause 44. The method of any one of clauses 38 to 43, wherein the value of the apply-indicated-TCI state parameter is 'both'.

Clause 45. The method of any one of clauses 38 to 44, wherein the PDSCH receptions scheduled by the DCI format comprises PDSCH receptions activated by the DCI format.

Clause 46. The method of any one of clauses 38 to 45, wherein the control command is: a medium access control (MAC) control element (CE); or a DCI.

Clause 47. The method of any one of clauses 38 to 46, wherein the DCI format scheduling the PDSCH reception comprises the DCI format activating the PDSCH reception.

Clause 48. The method of any one of clauses 38 to 47, wherein the receiving the PDSCH reception using the two TCI states is in response to the search space set being different from: a Type0 common search space set associated with the coreset with index zero; a Type 0A common search space set associated with the coreset with index zero, and a Type 2 common search space set associated with the coreset with index zero.

Clause 49. The method of any one of clauses 38 to 48, wherein: at least one first demodulation reference signal (DM-RS) port of the PDSCH reception is quasi co-located with a first reference signal indicated by a first TCI state of the two TCI states; and at least one second DM-RS port of the PDSCH reception is quasi co-located with a second reference signal indicated by a second TCI state of the two TCI states.

Clause 50. The method of any one of clauses 38 to 49, wherein the receiving the PDSCH reception using the one of the two TCI states is in response to the search space set being one of: a Type0 common search space set associated with the coreset with index zero; a Type 0A common search space set associated with the coreset with index zero, and a Type 2 common search space set associated with the coreset with index zero.

Clause 51. The method of any one of clauses 38 to 50, wherein: the two TCI states comprise a first TCI state and a second TCI state; the one of the two TCI states is the first TCI state; and at least one demodulation reference signal (DM-RS) port of the PDSCH reception is quasi co-located with a first reference signal indicated by the first TCI state.

Clause 52. The method of any one of clauses 38 to 51, further comprising receiving a MAC-CE activating a subset of TCI states comprising the two TCI states, wherein a first octet, in the MAC-CE, indicating the first TCI state of the two TCI states is lower than a second octet, in the MAC-CE, that indicates the second TCI state of the two TCI states.

Clause 53. The method of any one of clauses 38 to 52, wherein the value of the apply-indicated-TCI state parameter is set to 'both' when: the one or more configuration parameters comprise a coherent-joint-transmission (CJT) scheme parameter indicating/enabling a CJT scheme for PDSCH receptions; and the wireless device transmits/reports a user-equipment (UE) capability message indicating support for two joint TCI states for PDSCH receptions of/for the CJT scheme.

Clause 54. The method of any one of clauses 38 to 53, wherein the value of the apply-indicated-TCI state parameter is set to 'both' when the one or more configuration parameters comprise a single-frequency network (SFN) scheme parameter indicating an SFN scheme for downlink shared channels.

Clause 55. A method comprising: receiving, by a wireless device, one or more radio resource control (RRC) messages comprising an apply-indicated-transmission configuration indication (TCI) state parameter set to a value, wherein the value of the apply-indicated-TCI state parameter indicates to apply both of two indicated TCI states to physical downlink shared channel (PDSCH) receptions scheduled by a downlink control information (DCI) format.

Clause 56. The method of clause 55, further comprising: receiving a control command indicating two TCI states.

Clause 57. The method of clause 55 or clause 56, further comprising: receiving, via a common search space set associated with a coreset with index zero, the DCI format scheduling a PDSCH reception.

Clause 58. The method of any one of clauses 55 to 57, further comprising: receiving, in response to receiving the DCI format via the common search space set associated with the coreset with index zero, the PDSCH reception using one of the two TCI states.

Clause 59. A method comprising: receiving, by a network control repeater (NCR), a control command activating at least two transmission configuration indication (TCI) states for a control resource set with a lowest coreset index in an active downlink bandwidth part (BWP).

Clause 60. The method of clause 59, further comprising: using a first TCI state of the at least two TCI states of the coreset for receptions on a backhaul link of the NCR, wherein the using the first TCI state is in response to: not receiving an indication of a TCI state for receptions on the backhaul; and the coreset with the lowest coreset index being activated with the at least two TCI states.

Clause 61. The method of clause 59 or clause 60, wherein the NCR does not simultaneously receive on a control link of the NCR and the backhaul link.

Clause 62. The method of any one of clauses 59 to 61, wherein the NCR does not support determination of a TCI state for receptions on the backhaul link based on an indication of a TCI state by a serving cell.

Clause 63. The method of any one of clauses 59 to 62, wherein the NCR does not receive an indication of a unified TCI state for receptions by an NCR mobile termination (MT) of the NCR.

Clause 64. The method of any one of clauses 59 to 63, wherein the control command is a medium-access control (MAC) control element (CE).

Clause 65. The method of any one of clauses 59 to 64, wherein a first octet, in the MAC-CE, indicating the first TCI state is lower than a second octet, in the MAC-CE, indicating a second TCI state of the at least two TCI states.

Clause 66. The method of any one of clauses 59 to 65, further comprising monitoring, via the coreset, physical downlink control channels using the at least two TCI states after receiving the control command.

Clause 67. The method of any one of clauses 59 to 66, further comprising receiving an indication of a TCI state for receptions on the backhaul.

Clause 68. The method of any one of clauses 59 to 67, further comprising using the TCI state for receptions on the backhaul link of the NCR.

A wireless device may perform a method comprising multiple operations. The wireless device may receive one or more configuration parameters comprising a parameter indicating application of a transmission configuration indication (TCI) state set to a value. The value of the parameter may indicate to apply at least two indicated TCI states to a physical downlink shared channel (PDSCH) reception scheduled by a downlink control information (DCI) format configured to be received via a search space set. The wireless device may receive the PDSCH reception, using one or more of the at least two indicated TCI states, for example, based on whether the search space set is different from a common search space set associated with a control resource set with index zero. The wireless device may receive, from a network controlled repeater (NCR) and using a first TCI state of the at least two TCI states, a data transmission, for example, based on the NCR receiving a control command activating at least two TCI states for a control resource set with a lowest control resource set index and not receiving an indication of a TCI state for a reception on a backhaul link of the NCR. The parameter indicating application of a TCI state may comprise an apply-indicated-TCI-state parameter. The configuration parameters may comprise radio resource control parameters. The wireless device may receive, via the search space set, the DCI format scheduling the PDSCH reception. The DCI format may be a DCI format 1_0. The wireless device may receive a control command indicating the at least two indicated TCI states. The control command may comprise: a medium access control (MAC) control element (CE); or DCI. The wireless device may receive the PDSCH reception, using one of the at least two indicated TCI states, for example, based on the search space set being the common search space set associated with the control resource set with index zero. The wireless device may receive the PDSCH reception, using the at least two indicated TCI states, for example, based on the search space set being different from the common search space set associated with the control resource set with index zero. The one of the at least two indicated TCI states may correspond to: a TCI state with a lowest TCI state index for the PDSCH reception; a TCI state that occurs first in a set of the at least two indicated TCI states; or a TCI state that occurs in a lower octet in a control command indicating the at least two indicated TCI states. The one of the at least two indicated TCI states may be a first TCI state. At least one antenna port of the PDSCH reception may be quasi co-located with a reference signal indicated by the first TCI state. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send (e.g., transmit) the configuration parameters. A computer-readable medium may store instructions that, when executed, cause performance of the described method, additional operations, and/or include the additional elements.

A base station may perform a method comprising multiple operations. The base station may send one or more configuration parameters comprising a parameter indicating application of a transmission configuration indication (TCI) state set to a value. The value of the parameter may indicate to apply at least two indicated TCI states to a physical downlink shared channel (PDSCH) transmission scheduled by a downlink control information (DCI) format configured to be received via a search space set. The base station may send the PDSCH transmission, using one or more of the at least two indicated TCI states, for example, based on whether the search space set may be different from a common search space set associated with a control resource set with index zero. The base station may send, to a network controlled repeater (NCR), a control command activating at least two TCI states for a control resource set with a lowest control resource set index. The base station may send, to the NCR and using a first TCI state of the at least two TCI states, a data transmission, for example, based on not sending, to the NCR, an indication of a TCI state for a transmission on a backhaul link of the NCR. The base station may send, via the search space set, the DCI format scheduling the PDSCH transmission. The DCI format may be a DCI format 1_0. The base station may send a control command indicating the at least two indicated TCI states. The control command may comprise: a medium access control (MAC) control element (CE); or DCI. The base station may send the PDSCH transmission, using one of the at least two indicated TCI states, for example, based on the search space set being the common search space set associated with the control resource set with index zero. The base station may send the PDSCH transmission, using the at least two indicated TCI states, for example, based on the search space set being different from the common search space set associated with the control resource set with index zero. The base station may comprise one or more processors; and memory storing instructions that, when executed by the one or more processors, cause the base station to perform the described method, additional operations and/or include the additional elements. A system may comprise a base station configured to perform the described method, additional operations and/or include the additional elements; and a wireless device configured to receive the configuration parameters. A computer-readable medium may store instructions that, when executed, cause performance of the described method, additional operations, and/or include the additional elements.

A base station may be configured to send a control command and a data transmission. The control command may activate at least two transmission configuration indication (TCI) states for a control resource set with a lowest control resource set index. A network controlled repeater (NCR) may be configured to: receive the control command; based on not receiving an indication of a TCI state for a reception on a backhaul link of the NCR, receive the data transmission, using a first TCI state of the at least two TCI states; and send the data transmission. A wireless device may be configured to receive the data transmission. The wireless device may receive one or more configuration parameters comprising a parameter indicating application of a TCI state set to a value. The value of the parameter may indicate to apply at least two indicated TCI states to a reception scheduled via a search space set. The wireless device may receive the reception, using one or more of the at least two indicated TCI states, for example, based on whether the search space set may be different from a common search space set associated with a control resource set with index zero. The first TCI state may correspond to: a TCI state with a lowest TCI state index for the data transmission; a TCI state that occurs first among the at least two TCI states; or a TCI state that occurs in a lower octet in the control command. The control command may be a medium-access control (MAC) control element (CE).

A network controlled repeater (NCR) may perform a method comprising multiple operations. The NCR may receive a control command activating at least two transmission configuration indication (TCI) states for a control resource set with a lowest control resource set index. The NCR may use a first TCI state of the at least two TCI states for the reception, for example, based on not receiving an indication of a TCI state for a reception on a backhaul link of the NCR. The first TCI state may correspond to: with a lowest TCI state index for the reception; occurs first among the at least two TCI states; or occurs in a lower octet in the control command. The control command may be a medium-access control (MAC) control element (CE). The NCR may comprise one or more processors; and memory storing instructions that, when executed by the one or more processors, cause the NCR to perform the described method, additional operations and/or include the additional elements. A system may comprise an NCR configured to perform the described method, additional operations and/or include the additional elements; and a base station configured to send (e.g., transmit) the control command. A computer-readable medium may store instructions that, when executed, cause performance of the described method, additional operations, and/or include the additional elements.

A wireless device may perform a method comprising multiple operations. The wireless device may receive one or more radio resource control (RRC) messages comprising an apply-indicated-transmission configuration indication (TCI) state parameter set to a value. The value of the apply-indicated-TCI state parameter may indicate to apply both of two indicated TCI states to physical downlink shared channel (PDSCH) receptions scheduled by a downlink control information (DCI) format. The wireless device may receive a control command indicating two TCI states. The wireless device may receive, via a search space set, the DCI format scheduling a PDSCH reception. The wireless device may receive the PDSCH reception using the two TCI states based on: the search space set being different from a common search space set associated with a coreset with index zero; and the value of the apply-indicated-TCI state parameter indicating to apply both of two indicated TCI states. The wireless device may receive the PDSCH reception using one of the two TCI states, for example, based on (e.g., in response to) the search space set being a common search space set associated with a coreset with index zero. The DCI format may be a DCI format 1_0. The value of the apply-indicated-TCI state parameter may be 'both'. The PDSCH receptions scheduled by the DCI format may comprise PDSCH receptions activated by the DCI format. The control command may be: a medium access control (MAC) control element (CE); or a DCI. The DCI format scheduling the PDSCH reception may comprise the DCI format activating the PDSCH reception. The receiving the PDSCH reception using the two TCI states may be based on (e.g., in response to) the search space set being different from: a Type0 common search space set associated with the coreset with index zero; a Type 0A common search space set associated with the coreset with index zero, and a Type 2 common search space set associated with the coreset with index zero. At least one first demodulation reference signal (DM-RS) port of the PDSCH reception may be quasi co-located with a first reference signal indicated by a first TCI state of the two TCI states. At least one second DM-RS port of the PDSCH reception may be quasi co-located with a second reference signal indicated by a second TCI state of the two TCI states. The receiving the PDSCH reception using the one of the two TCI states may be based on (e.g., in response to) the search space set being one of: a Type0 common search space set associated with the coreset with index zero; a Type 0A common search space set associated with the coreset with index zero, and a Type 2 common search space set associated with the coreset with index zero. The two TCI states may comprise a first TCI state and a second TCI state. The one of the two TCI states may be the first TCI state. At least one demodulation reference signal (DM-RS) port of the PDSCH reception may be quasi co-located with a first reference signal indicated by the first TCI state. The wireless device may receive a MAC-CE activating a subset of TCI states comprising the two TCI states. A first octet, in the MAC-CE, indicating the first TCI state of the two TCI states, may be lower than a second octet, in the MAC-CE, that may indicate the second TCI state of the two TCI states. The value of the apply-indicated-TCI state parameter may be set to 'both', for example, when: the one or more configuration parameters comprise a coherent-joint-transmission (CJT) scheme parameter indicating/enabling a CJT scheme for PDSCH receptions; and the wireless device sends (e.g., transmits)/reports a user-equipment (UE) capability message indicating support for two joint TCI states for PDSCH receptions of/for the CJT scheme. The value of the apply-indicated-TCI state parameter may be set to 'both', for example, when the one or more configuration parameters comprise a single-frequency network (SFN) scheme parameter indicating an SFN scheme for downlink shared channels. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send (e.g., transmit) the configuration parameters. A computer-readable medium may store instructions that, when executed, cause performance of the described method, additional operations, and/or include the additional elements.

A wireless device may perform a method comprising multiple operations. The wireless device may receive one or more radio resource control (RRC) messages comprising an apply-indicated-transmission configuration indication (TCI) state parameter set to a value. The value of the apply-indicated-TCI state parameter may indicate to apply both of two indicated TCI states to physical downlink shared channel (PDSCH) receptions scheduled by a downlink control information (DCI) format. The wireless device may receive a control command indicating two TCI states. The wireless device may receive, via a common search space set associated with a coreset with index zero, the DCI format scheduling a PDSCH reception. The wireless device may receive, based on (e.g., in response to) receiving the DCI format via the common search space set associated with the coreset with index zero, the PDSCH reception using one of the two TCI states. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send (e.g., transmit) the configuration parameters. A computer-readable medium may store instructions that, when executed, cause performance of the described method, additional operations, and/or include the additional elements.

A network controlled repeater (NCR) may perform a method comprising multiple operations. The NCR may receive a control command activating at least two transmission configuration indication (TCI) states for a control resource set with a lowest coreset index in an active downlink bandwidth part (BWP). The NCR may use a first TCI state of the at least two TCI states of the coreset for receptions on a backhaul link of the NCR. The using the first TCI state may be based on (e.g., in response to): not receiving an indication of a TCI state for receptions on the backhaul; and the coreset with the lowest coreset index being activated with the at least two TCI states. The NCR does not simultaneously receive on a control link of the NCR and the backhaul link. The NCR does not support determination of a TCI state for receptions on the backhaul link, for example, based on an indication of a TCI state by a serving cell. The NCR does not receive an indication of a unified TCI state for receptions by an NCR mobile termination (MT) of the NCR. The control command may be a medium-access control (MAC) control element (CE). A first octet, in the MAC-CE, indicating the first TCI state may be lower than a second octet, in the MAC-CE, indicating a second TCI state of the at least two TCI states. The NCR may monitor, via the coreset, physical downlink control channels using the at least two TCI states, for example, after receiving the control command. The NCR may receive an indication of a TCI state for receptions on the backhaul. The NCR may use the TCI state for receptions on the backhaul link of the NCR. The NCR may comprise one or more processors; and memory storing instructions that, when executed by the one or more processors, cause the NCR to perform the described method, additional operations and/or include the additional elements. A system may comprise an NCR configured to perform the described method, additional operations and/or include the additional elements; and a base station configured to send (e.g., transmit) the control command. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   receiving, by a wireless device, one or more configuration parameters comprising a parameter indicating application of a transmission configuration indication (TCI) state set to a value, wherein the value of the parameter indicates to apply at least two indicated TCI states to a physical downlink shared channel (PDSCH) reception scheduled by a downlink control information (DCI) format configured to be received via a search space set; and based on whether the search space set is different from a common search space set associated with a control resource set with index zero, receiving the PDSCH reception using one or more of the at least two indicated TCI states.

2.  The method of claim 1, further comprising:
    based on a network controlled repeater (NCR) receiving a control command activating at least two TCI states for a control resource set with a lowest control resource set index and not receiving an indication of a TCI state for a reception on a backhaul link of the NCR, receiving, from the NCR and using a first TCI state of the at least two TCI states, a data transmission.

3.  The method of claim 1 or claim 2, wherein the configuration parameters comprise radio resource control parameters.

4.  The method of any one of claims 1 to 3, wherein the receiving the PDSCH reception further comprises:
    based on the search space set being the common search space set associated with the control resource set with index zero, receiving the PDSCH reception, using one of the at least two indicated TCI states.

5.  The method of any one of claims 1 to 4, wherein the receiving the PDSCH reception further comprises:
    based on the search space set being different from the common search space set associated with the control resource set with index zero, receiving the PDSCH reception using the at least two indicated TCI states.

6.  The method of any one of claims 1 to 5, wherein the one of the at least two indicated TCI states corresponds to:

    a TCI state with a lowest TCI state index for the PDSCH reception;
    a TCI state that occurs first in a set of the at least two indicated TCI states; or
    a TCI state that occurs in a lower octet in a control command indicating the at least two indicated TCI states.

7.  The method of any one of claims 1 to 6, wherein the one of the at least two indicated TCI states is a first TCI state, and wherein at least one antenna port of the PDSCH reception is quasi co-located with a reference signal indicated by the first TCI state.

8.  A method comprising:

    sending, by a base station, one or more configuration parameters comprising a parameter indicating application of a transmission configuration indication (TCI) state set to a value, wherein the value of the parameter indicates to apply at least two indicated TCI states to a physical downlink shared channel (PDSCH) transmission scheduled by a downlink control information (DCI) format configured to be received via a search space set; and
    based on whether the search space set is different from a common search space set associated with a control resource set with index zero, sending the PDSCH transmission using one or more of the at least two indicated TCI states.

9.  The method of claim 8, further comprising:

    sending, to a network controlled repeater (NCR), a control command activating at least two TCI states for a control resource set with a lowest control resource set index; and
    based on not sending, to the NCR, an indication of a TCI state for a transmission on a backhaul link of the NCR, sending, to the NCR and using a first TCI state of the at least two TCI states, a data transmission.

10. The method of claim 8 or claim 9, wherein the sending the PDSCH transmission further comprises:
    based on the search space set being the common search space set associated with the control resource set with index zero, sending the PDSCH transmission using one of the at least two indicated TCI states.

11. The method of any one of claims 8 to 10, wherein the sending the PDSCH transmission further comprises:
    based on the search space set being different from the common search space set associated with the control resource set with index zero, sending the PDSCH transmission using the at least two indicated TCI states.

12. The method of any one of claims 8 to 11, wherein the configuration parameters comprise radio resource control parameters.

13. A computing device comprising:

one or more processors; and
memory storing instructions that, when executed by the one or more processors, cause the computing device to perform:

the method of any one of claims 1 to 7; or
the method of any one of claims 8-12.

14. A system comprising:

a wireless device configured to perform the method of any one of claims 1 to 7; and
a base station configured to send the one or more configuration parameters.

15. A computer-readable medium storing instructions that, when executed, cause performance of:

the method of any one of claims 1 to 7; or
the method of any one of claims 8-12.

**FIG. 1A**

**FIG. 1B**

EP 4 507 240 A1

## Wireless Device 210

| | |
|---|---|
| SDAP 215 | |
| PDCP 214 | |
| RLC 213 | |
| MAC 212 | |
| PHY 211 | |

## Base Station 220

| | |
|---|---|
| SDAP 225 | |
| PDCP 224 | |
| RLC 223 | |
| MAC 222 | |
| PHY 221 | |

**FIG. 2A**

## Wireless Device 210

| |
|---|
| NAS 217 |
| RRC 216 |
| PDCP 214 |
| RLC 213 |
| MAC 212 |
| PHY 211 |

## Base Station 220

| |
|---|
| RRC 226 |
| PDCP 224 |
| RLC 223 |
| MAC 222 |
| PHY 221 |

## AMF 230

| |
|---|
| NAS 237 |

**FIG. 2B**

IP Packets

**FIG. 3**

**FIG. 4A**

**FIG. 4B**

FIG. 5A    Downlink

FIG. 5B    Uplink

EP 4 507 240 A1

FIG. 6

FIG. 7

Resource Element (RE)
1 Symbol x 1 Subcarrier

Resource Block (RB)
12 Subcarriers

One Slot (14 Symbols)

NR Carrier Bandwidth
(Up to 3300 Subcarriers)

FIG. 8

Frequency

Time

FIG. 9

**FIG. 10A**

**FIG. 10B**

**FIG. 11A**

**FIG. 11B**

FIG. 12A

FIG. 12B

```
Wireless          Base              Wireless          Base              Wireless          Base
Device 1301    Station 1302      Device 1301    Station 1302      Device 1301    Station 1302
```

**Configuration 1310**

**Configuration 1320**

**Configuration 1330**

**Msg 1 1311**

**Msg 2 1312**

**Msg 3 1313**

**Msg 4 1314**

**Msg 1 1321**

**Msg 2 1322**

**Msg A 1331**

**Preamble 1341**

**1342 Transport block**

**Msg B 1332**

**FIG. 13A**

**FIG. 13B**

**FIG. 13C**

EP 4 507 240 A1

CORESET
1404

CORESET
1403

CORESET
1402

CORESET
1401

Bandwidth

One slot

**FIG. 14A**

| CORESET | → | CCE-to-REG mapping | → | Search Space | → PDCCH candidate<br>→ PDCCH candidate<br>→ PDCCH candidate |

**FIG. 14B**

FIG. 15A

FIG. 15B

FIG. 16A

FIG. 16B

FIG. 16C

FIG. 16D

Wireless Device 1705

NCR-Fwd Access link

1735

NCR-MT **1723** (Mobile Termination)

NCR-FWD **1725** (RF forwarding)

NCR 1720

Control link

1731

NCR-Fwd Backhaul link

1733

Wireless Device Access link

1737

Base Station 1710

**FIG. 17**

EP 4 507 240 A1

1 Carrier/cell

NCR-MT <u>1823</u>

NCR-Fwd <u>1825</u>

Controlling

frequency

NCR
1820

**FIG. 18**

Base Station 1910

NCR 1905

Configuration parameters — 1920

1st activation command (Two TCI states) — 1930

2nd activation command (TCI state) — 1940

time

$T_0$

$T_1$

$T_2$

Apply a TCI state, among two TCI states of a coreset with the lowest coreset index in NCR-MT, to the backhaul link

Apply a TCI state, among the two TCI states indicated by the 1st activation command, to the backhaul link

Apply a TCI state, indicated by the 2nd activation command, to the backhaul link

TCI state list for NCR-MT and NCR-Fwd

TCI state 0
TCI state 1
TCI state 2
...
TCI state M

Indicate two TCI states from TCI state list for the control link

Indicate a TCI state from TCI state list for the backhaul link

FIG. 19

EP 4 507 240 A1

2010

Does an NCR node receive an indication of a unified TCI state for receptions by an NCR-MT?

NO

YES

2020

Two unified TCI states are indicated for receptions by the NCR-MT?

NO

YES

2030

Receptions on the backhaul link use the QCL parameters provided by The indicated unified TCI state

2040

Receptions on the backhaul link use the QCL parameters provided by a first unified TCI state of the two unified TCI states

2050

Is the coreset with the lowest coreset index activated with two TCI states

NO

YES

2060

Receptions on the backhaul link use the QCL parameters provided by a TCI state of the coreset

2070

Receptions on the backhaul link use the QCL parameters provided by a First TCI state of Two TCI states of the coreset

FIG. 20

2110

Receive an apply-indicated-TCI-state parameter set to 'both'

2120

Receive an activation command (e.g., MAC-CE, DCI) indicating two TCI states

2130

Receive, via/on a search space set, DCI scheduling/activating a PDSCH reception

2140

NO ⟨ The search space set is a Type 0 or a Type 0A or a Type2 CSS set associated with a coreset with index zero? ⟩ YES

2150

Receive the PDSCH reception based on the two TCI states

2160

Receive the PDSCH reception based on a first TCI state of the two TCI states

**FIG. 21A**

2111

Send an apply-indicated-TCI-state parameter set to 'both'

2121

Send an activation command (e.g., MAC-CE, DCI) indicating two TCI states

2131

Send, via/on a search space set, DCI scheduling/activating a PDSCH transmission

2141

NO — The search space set is a Type 0 or a Type 0A or a Type2 CSS set associated with a coreset with index zero? — YES

2151

Send the PDSCH transmission based on the two TCI states

2161

Send the PDSCH transmission based on a first TCI state of the two TCI states

FIG. 21B

# EUROPEAN SEARCH REPORT

Application Number

EP 24 19 3505

**Europäisches Patentamt**
**European Patent Office**
**Office européen des brevets**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK MERIAS ET AL: "Moderator summary on extension of unified TCI framework (Final)", 3GPP DRAFT; R1-2306231; TYPE DISCUSSION; NR_MIMO_EVO_DL_UL-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Incheon, KR; 20230522 - 20230526 25 May 2023 (2023-05-25), XP052378456, Retrieved from the Internet: URL:https://www.3gpp.org/ftp/TSG_RAN/WG1_R L1/TSGR1_113/Docs/R1-2306231.zip R1-2306231 R18 MIMO summary on eUTCI Final.docx [retrieved on 2023-05-25] * page 11 - page 12 * | 1-15 | INV. H04L5/00 H04W72/23 |
| X | PANASONIC: "Unified TCI framework extension for multi-TRP", 3GPP DRAFT; R1-2302396, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Online; 20230417 - 20230426 7 April 2023 (2023-04-07), XP052351880, Retrieved from the Internet: URL:https://ftp.3gpp.org/tsg_ran/WG1_RL1/T SGR1_112b-e/Docs/R1-2302396.zip R1-2302396.docx [retrieved on 2023-04-07] * page 4 - page 6 * | 1-15 | TECHNICAL FIELDS SEARCHED (IPC) H04L H04W |

The present search report has been drawn up for all claims

| Place of search | Date of completion of the search | Examiner |
|---|---|---|
| The Hague | 19 December 2024 | Gökceli, Selahattin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63531393